# EUROPÄISCHE PATENTSCHRIFT

(11) **EP 2 853 806 B1**
(45) Veröffentlichungstag und Bekanntmachung des Hinweises auf die Patenterteilung: **25.11.2020**
(21) Anmeldenummer: 13186603.0
(22) Anmeldetag: 30.09.2013
(51) Int. Cl.: F21V 8/00

(54) **Lichtleiter**
Optical waveguide
Conducteur lumineux

(43) Veröffentlichungstag der Anmeldung: 01.04.2015
(73) Patentinhaber: WEIDPLAS GmbH, 8700 Küsnacht (CH)
(72) Erfinder: Kindl, Christoph, 66386 St. Ingbert (DE); Quien, Norbert, 66386 St. Ingbert (DE)
(74) Vertreter: Rutz, Andrea

(56) Entgegenhaltungen:
- WO-A1-2013/028460
- KR-A- 20080 046 313
- US-A1- 2008 129 925
- US-A1- 2010 259 485
- US-A1- 2013 121 024

## Beschreibung

### TECHNISCHES GEBIET

Die vorliegende Erfindung betrifft ein Bauteil umfassend wenigstens einen Lichtleiter sowie eine Anordnung aufweisend wenigstens ein solches Bauteil.

### STAND DER TECHNIK

Zu Beleuchtungszwecken werden Lichtleiter eingesetzt. Diese Lichtleiter weisen eine Lichteinkoppelfläche zum Einkoppeln von Licht in den Lichtleiter sowie eine Sichtseite auf über welche Licht aus dem Lichtleiter ausgekoppelt wird. Zudem umfasst der Lichtleiter eine der Sichtseite gegenüber liegende Rückseite auf, an welcher Lichtumlenkstrukturen angeordnet sind. Licht eines Leuchtmittels wird über die Lichteinkoppelfläche in den Lichtleiter eingekoppelt. Das eingekoppelte Licht pflanzt sich im Lichtleiter fort und wird mittels der Lichtumlenkstrukturen umgelenkt und das umgelenkte Licht über die Sichtseite aus dem Lichtleiter ausgekoppelt.

Derartige Lichtleiter des Standes der Technik weisen, um eine annehmbare Leuchtdichte an der Sichtseite zu erzielen, Lichtumlenkstrukturen auf, welche, wenn der Lichtleiter in unbeleuchtetem Zustand ist, bzw. wenn kein Licht in den Lichtleiter eingekoppelt wird, von einem menschlichen Auge, welches die Sichtseite betrachtet, sichtbar sind, und somit unästhetisch wirken. Besonders unästethisch wirken solche Lichtleiter, wenn diese verwendet werden, um lichtdurchlässige, flächige Dekorelemente, welche insbesondere aus einem transparenten Material hergestellt sind, zu hinterleuchten. Eine ausreichende Leuchtdichte (Verhältnis der Lichtstärke zur Größe der sichtbaren leuchtenden Fläche, welche in Candela pro Quadratmeter (cd/m²) angegeben wird) an der Sichtseite ist sehr wichtig, da sonst die Sichtseite für einen Betrachter als dunkel erscheint und somit beispielsweise eine flächiges Dekorelement nicht als ausreichend beleuchtet erscheint.

In der US 2008/0129925 und in der WO 2013/028460 sind jeweils Lichtleiter offenbart, bei welchen Licht via eine seitlich angeordnete Lichteinkoppelfläche einkoppelbar ist. Mittels Lichtumlenkstrukturen wird das eingekoppelte Licht zur Sichtseite des Lichtleiters hin umgelenkt.

### DARSTELLUNG DER ERFINDUNG

Es ist also eine Aufgabe der vorliegenden Erfindung, einen Lichtleiter mit Lichtumlenkstrukturen bereitzustellen, bei welchem in unbeleuchtetem Zustand wenigstens mehrere dieser Lichtumlenkstrukturen, insbesondere sämtliche dieser Lichtumlenkstrukturen, von einem menschlichen Auge, welches eine Sichtseite des Lichtleiters betrachtet, kaum sichtbar sind, und welcher gleichzeitig an wenigstens einem Bereich der Sichtseite eine ausreichende Leuchtdichte aufweist.

Zur Lösung dieser Aufgabe wird ein Bauteil mit wenigstens einem Lichtleiter vorgeschlagen, wie es in Anspruch 1 angegeben ist. Ausserdem wird in Anspruch 16 eine Anordnung umfassend wenigstens ein solches Bauteil angegeben.

Die vorliegende Erfindung stellt also einen Lichtleiter zur Verfügung umfassend Lichtumlenkstrukturen, wenigstens eine Lichteinkoppelfläche, eine Sichtfläche sowie eine Rückseite, welche der Sichtfläche gegenüberliegt,
wobei die Sichtfläche eine Fläche definiert,
wobei der Lichtleiter wenigstens zwei Lichtumlenkstrukturen umfasst, welche einen in der Fläche angeordneten Querschnitt aufweisen, wobei der Querschnitt einer jeweiligen Lichtumlenkstruktur in der Fläche ein Kreis ist oder um den Querschnitt einer jeweiligen Lichtumlenkstruktur in der Fläche ein Umkreis legbar ist,
wobei über die Lichteinkoppelfläche in den Lichtleiter eingekoppeltes Licht über die Sichtfläche sowie die wenigstens zwei Lichtumlenkstrukturen aus dem Lichtleiter auskoppelbar ist,
wobei der Durchmesser d des Kreises bzw. des Umkreises in der Fläche im Bereich von grösser als 0 Mikrometer bis 50 Mikrometer liegt,
wobei der Mittelpunkt des Kreises bzw. des Umkreises in der Fläche einer jeweiligen Lichtumlenkstruktur zum Mittelpunkt des Kreises bzw. des Umkreises in der Fläche sämtlicher weiteren Lichtumlenkstrukturen einen Abstand A aufweist, wobei der Abstand A grösser als der Durchmesser d des Kreises bzw. des Umkreises in der Fläche der jeweiligen Lichtumlenkstruktur geteilt durch den Wert 0.33 ist.

Ein solcher erfindungsgemäss ausgebildeter Lichtleiter, bei welchem bevorzugt wenigstens die Sichtfläche sowie die wenigstens zwei Lichtumlenkstrukturen gemeinsam eine Sichtseite des Lichtleiters bilden, weist den Vorteil auf, dass einerseits die sichtflächenseitig, bzw. an der Sichtfläche angeordneten Lichtumlenkstrukturen des Lichtleiters von einem menschlichen Auge, welches im unbeleuchteten Zustand des Lichtleiters in Richtung der Sichtfläche schaut, bzw. die Sichtseite des Lichtleiters betrachtet, kaum sichtbar sind, und andererseits der Lichtleiter an wenigstens einem Teilbereich der Sichtseite eine ausreichende Leuchtdichte aufweist. Der Lichtleiter ist somit im unbeleuchteten Zustand ästhetisch ansprechend und weist zudem in beleuchtetem Zustand an der Sichtseite eine ausreichende Leuchtdichte auf. Diese Vorteile werden beim erfindungsgemässen Lichtleiter durch die Querschnitte der wenigstens zwei Lichtumlenkstrukturen des Lichtleiters, welche Querschnitte alle in der Fläche liegen, durch die relative Lage der Querschnitte der wenigstens zwei Lichtumlenkstrukturen in der Fläche zueinander, sowie der Maße der Querschnitte der wenigstens zwei Lichtumlenkstrukturen in der Fläche, erzielt. Der erfindungsgemässe Lichtleiter weist zudem den Vorteil auf, dass das Licht weiterhin definiert aus der Sichtseite ausgekoppelt werden kann, oder mit anderen Worten ausgedrückt, dass das Licht an den gewünschten Bereichen der Sichtseite und somit gerichtet aus dem Lichtleiter ausgekoppelt werden kann.

Die sichtflächenseitig bzw. an der Sichtfläche angeordneten Lichtumlenkstrukturen des Lichtleiters im unbeleuchteten Zustand sind erfindungsgemäss dann kaum sichtbar, wenn für die Augen eines menschlichen Betrachters in einem üblichen Abstand von ca. 30cm - 70cm von der Sichtseite des Lichtleiters die Bereiche der Sichtseite des Lichtleiters, welche von den wenigstens zwei Lichtumlenkstrukturen gebildet werden, von wenigstens einem Bereich der Sichtfläche, bevorzugt von der gesamten Sichtfläche, kaum zu unterscheiden sind, d.h. dass die Lichtumlenkstrukturen einzeln kaum zu erkennen sind. Der Wert des oben genannten üblichen Abstandes des Auges ist abhängig vom Einbauort des Lichtleiters.

Unter dem Begriff "Leuchtdichte an wenigstens einem Bereich der Sichtseite" wird im Rahmen der Erfindung das Verhältnis der Lichtstärke zur Größe wenigstens eines Bereichs der sichtbaren leuchtenden Sichtseite verstanden, welche in Candela pro Quadratmeter des wenigstens einen Bereichs (cd/m²) angegeben wird.

Erfindungsgemäss sind die sämtlichen weiteren Lichtumlenkstrukturen des Lichtleiters eine einzige Lichtumlenkstruktur oder wenigstens zwei Lichtumlenkstrukturen.

Ausserhalb der wenigstens zwei Lichtumlenkstrukturen entspricht die Fläche bevorzugt der Sichtfläche des Lichtleiters. Im Bereich der wenigstens zwei Lichtumlenkstrukturen bildet die Fläche bevorzugt eine Grundfläche für eine jeweilige Lichtumlenkstruktur der wenigstens zwei Lichtumlenkstrukturen, von welcher sich die jeweilige Lichtumlenkstruktur der wenigstens zwei Lichtumlenkstrukturen wegerstreckt, wie zum Beispiel sich in Richtung der Rückseite erstreckt oder sich in eine von der Rückseite abgewandte Richtung wegerstreckt. Eine jeweilige Lichtumlenkstruktur der wenigstens zwei Lichtumlenkstrukturen weist somit bevorzugt in der Fläche jeweils eine Grundfläche und somit jeweils einen der Grundfläche entsprechenden Querschnitt auf, welcher Querschnitt ein Kreis ist oder um welchen ein Umkreis legbar ist, und von welchem Querschnitt sich die jeweilige Lichtumlenkstruktur wegerstreckt, wie zum Beispiel sich in Richtung der Rückseite erstreckt oder sich in eine von der Rückseite abgewandte Richtung wegerstreckt.

Nach einer Weiterbildung der Erfindung liegt der Durchmesser d des Kreises bzw. des Umkreises in der Fläche im Bereich von 5 Mikrometer bis 40 Mikrometer, bevorzugt im Bereich von 5 Mikrometer bis 30 Mikrometer, bevorzugter im Bereich von 10 Mikrometer bis 25 Mikrometer, noch bevorzugter im Bereich von 10 Mikrometer bis 20 Mikrometer, am bevorzugtesten im Bereich von 10 Mikrometer bis 15 Mikrometer. Diese Weiterbildung der Erfindung bewirkt den Vorteil, dass besonders hohe Leuchtdichten an der Sichtseite erzielbar sind. Zudem können Lichtumlenkstrukturen, welche sich von der Fläche in Richtung der Rückseite erstrecken, insbesondere welche als Vertiefungen im Lichtleiter ausgebildet sind, besonders einfach mittels Spritzguss hergestellt werden. Zudem gilt, dass mit kleiner werdendem Durchmesser d der Querschnitte der Lichtumlenkstrukturen der Lichtleiter mehr Lichtumlenkstrukturen aufweisen kann. Je höher die Anzahl der Lichtumlenkstrukturen ist, desto höhere Leuchtdichten können erzielt werden.

Nach einer Weiterbildung der Erfindung ist der Querschnitt der wenigstens zwei Lichtumlenkstrukturen in der Fläche ein Kreis, wobei die wenigstens zwei Kreise im Wesentlichen denselben Durchmesser d aufweisen, bevorzugt denselben Durchmesser d aufweisen, oder um den Querschnitt der wenigstens zwei Lichtumlenkstrukturen in der Fläche ist ein Umkreis legbar, wobei die wenigstens zwei Umkreise im Wesentlichen denselben Durchmesser d aufweisen, bevorzugt denselben Durchmesser d aufweisen oder der Querschnitt wenigstens einer der wenigstens zwei Lichtumlenkstrukturen in der Fläche ist ein Kreis und um den Querschnitt wenigstens einer der wenigstens zwei Lichtumlenkstrukturen in der Fläche ist ein Umkreis legbar, wobei der wenigstens eine Kreis und der wenigstens eine Umkreis im Wesentlichen denselben Durchmesser d aufweisen, bevorzugt denselben Durchmesser d aufweisen. Bei der Ausführungsform, bei welcher der Querschnitt wenigstens einer der wenigstens zwei Lichtumlenkstrukturen in der Fläche ein Kreis ist und um den Querschnitt wenigstens einer der wenigstens zwei Lichtumlenkstrukturen in der Fläche ein Umkreis legbar ist, ist bevorzugt der Querschnitt der Mehrzahl der Lichtumlenkstrukturen ein Kreis oder um den Querschnitt der Mehrzahl der Lichtumlenkstrukturen ist ein Umkreis legbar. Diese Weiterbildung der Erfindung bewirkt den Vorteil, dass der Lichtleiter einfacher optisch auslegbar ist. Zudem können die Lichtumlenkstrukturen mit weniger Aufwand hergestellt werden.

Nach einer Weiterbildung der Erfindung ist der Durchmesser d des Kreises bzw. des Umkreises in der Fläche wenigstens einer Lichtumlenkstruktur der wenigstens zwei Lichtumlenkstrukturen unterschiedlich zum Durchmesser d des Kreises bzw. des Umkreises in der Fläche sämtlicher weiteren Lichtumlenkstrukturen der wenigstens zwei Lichtumlenkstrukturen. Diese Weiterbildung der Erfindung wird nun anhand von zwei Beispielen näher erläutert.

### Beispiel 1:

Weist der Lichtleiter sichtflächenseitig bzw. an der Sichtfläche zwei Lichtumlenkstrukturen auf, so ist die oben genannte wenigstens eine Lichtumlenkstruktur der wenigstens zwei Lichtumlenkstrukturen beispielsweise die Lichtumlenkstruktur Nr.1 (Nummer 1) und die oben genannten sämtlichen weiteren Lichtumlenkstrukturen der wenigstens zwei Lichtumlenkstrukturen sind die Lichtumlenkstruktur Nr.2. Erfindungsgemäss ist dann der Durchmesser d des Kreises bzw. des Umkreises in der Fläche der Lichtumlenkstruktur Nr.1 unterschiedlich zum Durchmesser d des Kreises bzw. des Umkreises in der Fläche der Lichtumlenkstruktur Nr.2.

### Beispiel 2:

Weist der Lichtleiter sichtflächenseitig bzw. an der Sichtfläche mehr als zwei Lichtumlenkstrukturen auf, wie beispielsweise 12 Lichtumlenkstrukturen, so ist die oben genannte wenigstens eine Lichtumlenkstruktur der wenigstens zwei Lichtumlenkstrukturen beispielsweise die Lichtumlenkstruktur Nr.1 (Nummer 1), und die sämtlichen weiteren sichtflächenseitig bzw. sichtseitig angeordneten Lichtumlenkstrukturen der wenigstens zwei Lichtumlenkstrukturen werden durch die verbleibenden Lichtumlenkstrukturen Nr.2-Nr.12 gebildet. Erfindungsgemäss ist dann der Durchmesser d der Lichtumlenkstruktur Nr.1 unterschiedlich zu den Durchmessern d der Lichtumlenkstrukturen Nr.2-Nr.12. Die Durchmesser d der Lichtumlenkstrukturen Nr.2-Nr.12 können alle unterschiedlich zueinander sein oder die Durchmesser d können zueinander auch wenigstens teilweise identisch sein. Wird die oben genannte wenigstens eine Lichtumlenkstruktur der wenigstens zwei Lichtumlenkstrukturen beispielsweise durch die Lichtumlenkstrukturen Nr.1 sowie Nr.2 gebildet, so werden die sämtlichen weiteren sichtflächenseitig bzw. sichtseitig angeordneten Lichtumlenkstrukturen der wenigstens zwei Lichtumlenkstrukturen durch die verbleibenden Lichtumlenkstrukturen Nr.3-Nr.12 gebildet. Erfindungsgemäss ist nun der Durchmesser d der Lichtumlenkstruktur Nr.1 als auch der Durchmesser d der Lichtumlenkstruktur Nr.2 unterschiedlich zu den Durchmessern d der Lichtumlenkstrukturen Nr.3-Nr.12. Die Durchmesser d der Lichtumlenkstrukturen Nr.3-12 können wiederum alle unterschiedlich zueinander sein oder die Durchmesser d können zueinander auch wenigstens teilweise identisch sein. Die Durchmesser d der Lichtumlenkstrukturen Nr. 1 sowie Nr. 2 können identisch oder unterschiedlich sein. Wird nun die oben genannte wenigstens eine Lichtumlenkstruktur der wenigstens zwei Lichtumlenkstrukturen beispielsweise durch die Lichtumlenkstrukturen Nr.1, Nr.2 sowie Nr.3 oder durch die Lichtumlenkstrukturen Nr.1, Nr.2, Nr.3, Nr.4 usw. gebildet, so sind deren Durchmesser d, analog wie oben beschrieben, dimensioniert. Im gewählten Beispiel 2 weist der Lichtleiter 12 Lichtumlenkstrukturen auf. Selbstverständlich kann der Lichtleiter auch eine andere Anzahl an Lichtumlenkstrukturen aufweisen. Diese Weiterbildung der Erfindung bewirkt den Vorteil, dass an unterschiedlichen Bereichen der Sichtseite unterschiedliche Leuchtdichten erzielbar sind.

Nach einer Weiterbildung der Erfindung erstreckt sich wenigstens eine der wenigstens zwei Lichtumlenkstrukturen von der Fläche in Richtung der Rückseite. Diese Weiterbildung der Erfindung bewirkt den Vorteil, dass diese Art der Lichtumlenkstruktur einfach herstellbar ist. Bevorzugt erstrecken sich eine Mehrzahl der Lichtumlenkstrukturen des Lichtleiters, bevorzugter erstrecken sich sämtliche Lichtumlenkstrukturen des Lichtleiters, von der Fläche in Richtung der Rückseite. Solche Lichtumlenkstrukturen bzw. ein solcher Lichtleiter ist besonders einfach herstellbar.

Bevorzugt ist wenigstens eine der wenigstens einen der wenigstens zwei Lichtumlenkstrukturen, welche sich von der Fläche in Richtung der Rückseite erstreckt, als Vertiefung im Lichtleiter ausgebildet. Diese bevorzugte Ausführungsform bewirkt den Vorteil, dass diese Art der Lichtumlenkstruktur besonders einfach herstellbar ist. Bevorzugter sind eine Mehrzahl der Lichtumlenkstrukturen des Lichtleiters, noch bevorzugter sämtliche Lichtumlenkstrukturen des Lichtleiters, welche sich von der Fläche in Richtung der Rückseite erstrecken, als Vertiefung im Lichtleiter ausgebildet. Solche Lichtumlenkstrukturen bzw. ein solcher Lichtleiter ist dann besonders einfach herstellbar.

Bevorzugt weist wenigstens eine jeweilige Lichtumlenkstruktur der wenigstens einen der wenigstens zwei Lichtumlenkstrukturen, welche sich von der Fläche in Richtung der Rückseite erstreckt, insbesondere welche als Vertiefung im Lichtleiter ausgebildet ist, eine maximale Tiefe T auf, welche das 2.0-fache oder weniger des Durchmessers d des Kreises bzw. des Umkreises in der Fläche dieser jeweiligen Lichtumlenkstruktur ist, welche bevorzugt das 1.0-fache oder weniger des Durchmessers d des Kreises bzw. des Umkreises in der Fläche dieser jeweiligen Lichtumlenkstruktur ist, welche bevorzugter das 0.5-fache oder weniger des Durchmessers d des Kreises bzw. des Umkreises in der Fläche dieser jeweiligen Lichtumlenkstruktur ist. Bevorzugter weisen eine Mehrzahl der Lichtumlenkstrukturen des Lichtleiters, noch bevorzugter sämtliche Lichtumlenkstrukturen des Lichtleiters, welche sich von der Fläche in Richtung der Rückseite erstrecken, eine derartige erfindungsgemässe maximale Tiefe T relativ zum Durchmesser d des Kreises bzw. des Umkreises in der Fläche auf. Diese bevorzugten Ausführungsformen werden nun anhand von folgenden Beispielen näher erläutert:
Der erfindungsgemässe Lichtleiter weist beispielsweise 12 Lichtumlenkstrukturen auf, wobei beispielsweise die Lichtumlenkstrukturen Nr.1 (Nummer 1), Nr.2 (Nummer 2) sowie Nr.3 (Nummer 3) der 12 Lichtumlenkstrukturen sich von der Fläche in Richtung der Rückseite erstrecken, wobei diese drei Lichtumlenkstrukturen bevorzugt als Vertiefung im Lichtleiter ausgebildet sind sowie beispielsweise einen Kreis als Querschnitt in der Fläche aufweisen. Gemäss der bevorzugten Ausführungsform ist nun beispielsweise die Lichtumlenkstruktur Nr.1 eine jeweilige Lichtumlenkstruktur, welche eine maximale Tiefe T aufweist, welche das 2.0-fache oder weniger des Durchmessers d des Kreises in der Fläche der Lichtumlenkstruktur Nr. 1 ist. Beispielsweise können aber auch die Lichtumlenkstruktur Nr.1 sowie Nr.2 eine jeweilige Lichtumlenkstruktur sein. In diesem Fall weist die Lichtumlenkstruktur Nr.1 erfindungsgemäss eine maximale Tiefe T auf, welche das 2.0-fache oder weniger des Durchmessers d des Kreises in der Fläche der Lichtumlenkstruktur Nr.1 ist und die Lichtumlenkstruktur Nr.2 weist erfindungsgemäss eine maximale Tiefe T auf, welche das 2.0-fache oder weniger des Durchmessers d des Kreises in der Fläche der Lichtumlenkstruktur Nr.2 ist. Es können nun beispielsweise auch die Lichtumlenkstrukturen Nr.2, Nr.6 sowie Nr.9 oder andere Lichtumlenkstrukturen der genannten 12 Lichtumlenkstrukturen eine jeweilige Lichtumlenkstruktur sein und jeweils, analog wie oben dargelegt, eine maximale Tiefe T aufweisen. Bei den gewählten Beispielen weist der Lichtleiter 12 Lichtumlenkstrukturen auf. Selbstverständlich kann der Lichtleiter auch eine andere Anzahl an Lichtumlenkstrukturen aufweisen. Diese bevorzugte Ausführungsform der Erfindung weist den Vorteil auf, dass sich das Licht über eine besonders lange Wegstrecke im Lichtleiter fortpflanzen kann. Dies aus folgendem Grund: Eine bestimmte Anzahl von Lichtumlenkstrukturen, welche eine bestimmte Anordnung zueinander aufweisen, und welche jeweils eine maximale Tiefe T aufweisen, welche grösser als das 2.0-fache des Durchmessers d des Kreises bzw. des Umkreises in der Fläche dieser jeweiligen Lichtumlenkstruktur ist, koppeln vergleichweise mehr Licht aus dem Lichtleiter aus als dieselbe bestimmte Anzahl von Lichtumlenkstrukturen, welche dieselbe bestimmte Anordnung zueinander aufweisen und welche jeweils eine erfindungsgemässe maximale Tiefe T aufweisen, welche das 2.0-fache oder weniger des Durchmessers d des Kreises bzw. des Umkreises in der Fläche dieser jeweiligen Lichtumlenkstruktur ist. Somit bleibt nach dem Durchgang des Lichtes an den Lichtumlenkstrukturen gemäss dieser bevorzugten Ausführungsform ein grösserer Anteil des Lichtes im Lichtleiter welcher sich im Lichtleiter fortpflanzen kann und somit kann sich das Licht im Lichtleiter über eine längere Wegstrecke fortpflanzen. Mit anderen Worten ausgedrückt, ist die Abschattung von Lichtumlenkstrukturen durch die Lichtumlenkstrukturen gemäss dieser bevorzugten Ausführungsform geringer im Vergleich zu anders dimensionierten Lichtumlenkstrukturen. Grundsätzlich gilt, dass mit geringer werdender maximaler Tiefe T relativ zum Durchmesser d der Abschattungseffekt einer Lichtumlenkstruktur geringer wird. Je mehr Lichtumlenkstrukturen eines Lichtleiters eine derartige, wie oben beschriebene, erfindungsgemässe, maximale Tiefe T relativ zum Durchmesser d aufweisen, desto länger ist die Wegstrecke, über welche sich das Licht im Lichtleiter fortpflanzen kann, da sich die Lichtumlenkstrukturen untereinander weniger abschatten. Die maximale Tiefe T wird bevorzugt senkrecht bezüglich der durch die Sichtfläche definierten Fläche gemessen.

Bevorzugt weist der Lichtleiter, bei welchem sich die wenigstens eine der wenigstens zwei Lichtumlenkstrukturen von der Fläche in Richtung der Rückseite erstreckt, eine Dicke D auf, wobei wenigstens eine jeweilige Lichtumlenkstruktur der wenigstens einen der wenigstens zwei Lichtumlenkstrukturen, welche sich von der Fläche in Richtung der Rückseite erstreckt, eine jeweilige maximale Tiefe T aufweist, wobei das Verhältnis der Dicke D zur jeweiligen maximalen Tiefe T 5:1 oder grösser ist, bevorzugt 10:1 oder grösser ist. Bevorzugter weisen eine Mehrzahl der Lichtumlenkstrukturen des Lichtleiters, noch bevorzugter sämtliche Lichtumlenkstrukturen des Lichtleiters, welche sich von der Fläche in Richtung der Rückseite erstrecken, eine derartiges erfindungsgemässes Verhältnis von maximaler Tiefe T zur Dicke D auf. Diese bevorzugten Ausführungsformen bewirken den Vorteil, dass sich das Licht im Lichtleiter über eine besonders lange Wegstrecke fortpflanzen kann. Dies aus folgendem Grund: Weist ein Lichtleiter mit einer Dicke D eine bestimmte Anzahl von Lichtumlenkstrukturen auf, welche ein bestimmte Anordnung zueinander aufweisen und welche jeweils eine jeweilige maximale Tiefe T aufweisen, wobei das Verhältnis der Dicke D zur jeweiligen maximalen Tiefe T einer jeweiligen Lichtumlenkstruktur kleiner als 5:1 ist, koppeln diese Lichtumlenkstrukturen vergleichweise mehr Licht über die Sichtseite aus dem Lichtleiter aus als dieselbe bestimmte Anzahl von Lichtumlenkstrukturen, welche dieselbe bestimmte Anordnung zueinander aufweisen und welche jeweils eine jeweilige maximale Tiefe T aufweisen, wobei das Verhältnis der Dicke D zur jeweiligen maximalen Tiefe T einer jeweiligen Lichtumlenkstruktur 5:1 oder grösser ist. Somit bleibt nach dem Durchgang des Lichtes an den Lichtumlenkstrukturen gemäss dieser bevorzugten Ausführungsform ein grösserer Anteil des Lichtes im Lichtleiter, welcher sich im Lichtleiter weiter fortpflanzen kann, und somit kann sich das Licht im Lichtleiter über eine längere Wegstrecke fortpflanzen. Mit anderen Worten ausgedrückt, ist die Abschattung von Lichtumlenkstrukturen durch die Lichtumlenkstrukturen gemäss dieser bevorzugten Ausführungsform geringer im Vergleich zu anders dimensionierten Lichtumlenkstrukturen. Grundsätzlich gilt, dass mit grösser werdendem Verhältnis der Dicke D zur maximalen Tiefe T der Abschattungseffekt einer Lichtumlenkstruktur geringer wird. Die maximale Tiefe T wird bevorzugt senkrecht bezüglich der durch die Sichtfläche definierten Fläche gemessen. Je mehr Lichtumlenkstrukturen eines Lichtleiters ein derartiges, erfindungsgemässes Verhältnis von maximaler Tiefe T zur Dicke D des Lichtleiters aufweisen, desto länger ist somit die Wegstrecke über welche sich das Licht im Lichtleiter fortpflanzen kann, da sich die Lichtumlenkstrukturen untereinander weniger abschatten. Diese bevorzugte Ausführungsform bewirkt somit den Vorteil, dass einerseits die Lichtumlenkstrukturen besonders einfach herzustellen sind, und andererseits, dass Licht im Lichtleiter eine besonders lange Wegstrecke zurücklegen kann.

Bevorzugt ist wenigstens eine jeweilige Lichtumlenkstruktur der wenigstens einen der wenigstens zwei Lichtumlenkstrukturen, welche sich von der Fläche in Richtung der Rückseite erstreckt, derart ausgestaltet, dass die maximale Tiefe T der wenigstens einen jeweiligen Lichtumlenkstruktur zur Dicke des Lichtleiters im Bereich der wenigstens einen jeweiligen Lichtumlenkstruktur im erfindungsgemässen Verhältnis steht. Bevorzugter weist eine Mehrzahl der Lichtumlenkstrukturen, noch bevorzugter sämtliche Lichtumlenkstrukturen, welche sich von der Fläche in Richtung der Rückseite erstrecken, ein derartiges, erfindungsgemässes Verhältnis von maximaler Tiefe T zur Dicke D des Lichtleiters auf.

Die geringere Abschattung bzw. der geringere Abschattungseffekt kann beispielsweise auch noch erzielt werden, falls die Dicke D des Lichtleiters sowie die maximalen Tiefe T wenigstens einer Lichtumlenkstruktur des Lichtleiters in folgendem Verhältnis zueinander steht:
1. Die geringere Abschattung kann auch erzielt werden, falls wenigstens eine jeweilige Lichtumlenkstruktur der wenigstens einen der wenigstens zwei Lichtumlenkstrukturen, welche sich von der Fläche in Richtung der Rückseite erstreckt, insbesondere welche als Vertiefung ausgebildet ist, derart ausgestaltet ist, dass die maximale Tiefe T der wenigsten einen jeweiligen Lichtumlenkstruktur zur mittleren Dicke des Lichtleiters im erfindungsgemässen Verhältnis steht. Bevorzugt weist eine Mehrzahl der Lichtumlenkstrukturen des Lichtleiters, bevorzugter sämtliche Lichtumlenkstrukturen des Lichtleiters, welche sich von der Fläche in Richtung der Rückseite erstrecken, ein derartiges, erfindungsgemässes Verhältnis von maximaler Tiefe T zur mittleren Dicke des Lichtleiters auf.
2. Die geringere Abschattung kann ebenfalls erzielt werden, falls sämtliche Lichtumlenkstrukturen des Lichtleiters, welche sich von der Fläche in Richtung der Rückseite erstrecken, insbesondere welche als Vertiefung ausgebildet sind, derart ausgestaltet sind, dass die mittlere maximale Tiefe T dieser Lichtumlenkstrukturen zur mittleren Dicke des Lichtleiters im erfindungsgemässen Verhältnis steht.

Die Dicke des Lichtleiters im Bereich einer jeweiligen Lichtumlenkstruktur liegt bevorzugt im Bereich von 0.1 Millimeter - 5 Millimeter, bevorzugter im Bereich von 0.5 Millimeter - 5 Millimeter, noch bevorzugter im Bereich von 1 Millimeter - 5 Millimeter, am bevorzugtesten im Bereich von 1 Millimeter bis 2 Millimeter. Diese Dicke des Lichtleiters wird bevorzugt durch eine Messung senkrecht bezüglich der durch die Sichtfläche definierten Fläche bestimmt. Die oben genannte mittlere Dicke des Lichtleiters wird bevorzugt durch Messungen senkrecht bezüglich der durch die Sichtfläche definierten Fläche bestimmt. Die mittlere Dicke des Lichtleiters liegt bevorzugt im Bereich von 0.1 Millimeter - 5 Millimeter, bevorzugter im Bereich von 0.5 Millimeter - 5 Millimeter, noch bevorzugter im Bereich von 1 Millimeter - 5 Millimeter, am bevorzugtesten im Bereich von 1 Millimeter bis 2 Millimeter.

Bevorzugt weist wenigstens eine der wenigstens einen der wenigstens zwei Lichtumlenkstrukturen, welche sich von der Fläche in Richtung der Rückseite erstreckt, insbesondere welche als Vertiefung ausgebildet ist, eine maximale Tiefe T auf, welche kleiner oder gleich 0.1 Millimeter ist, bevorzugter welche kleiner oder gleich 0.05 Millimeter ist, noch bevorzugter welche kleiner oder gleich 0.025 Millimeter ist. Bevorzugter weisen eine Mehrzahl der Lichtumlenkstrukturen des Lichtleiters, noch bevorzugter sämtliche Lichtumlenkstrukturen des Lichtleiters, welche sich von der Fläche in Richtung der Rückseite erstrecken, insbesondere welche als Vertiefungen im Lichtleiter ausgebildet sind, einer derartige Dimensionierung auf.

Bevorzugt weist wenigstens eine der wenigstens einen der wenigstens zwei Lichtumlenkstrukturen, welche sich von der Fläche in Richtung der Rückseite erstreckt, insbesondere welche als Vertiefung im Lichtleiter ausgebildet ist, das oben beschriebene, erfindungsgemässe Verhältnis von maximaler Tiefe T zu Durchmesser d als auch das oben beschriebene, erfindungsgemässe Verhältnis der Dicke D zur maximalen Tiefe T auf.

Bevorzugter sind eine Mehrzahl der Lichtumlenkstrukturen des Lichtleiters, noch bevorzugter sämtliche Lichtumlenkelemente des Lichtleiters, welche sich von der Fläche in Richtung der Rückseite erstrecken, insbesondere welche als Vertiefung im Lichtleiter ausgebildet sind, derart ausgestaltet. Diese bevorzugten Ausführungsformen bewirken den Vorteil, dass das Licht sich im Lichtleiter über eine besonders lange Wegstrecke fortpflanzen kann.

Bevorzugt verjüngt sich der Querschnitt wenigstens einer der wenigstens einen der wenigstens zwei Lichtumlenkstrukturen, welche sich von der Fläche in Richtung der Rückseite erstreckt, insbesondere welche als Vertiefung im Lichtleiter ausgebildet ist, von der Fläche in Richtung der Rückseite. Bevorzugter verjüngt sich der Querschnitt einer Mehrzahl der Lichtumlenkstrukturen des Lichtleiters, noch bevorzugter sämtlicher Lichtumlenkstrukturen des Lichtleiters, welche sich von der Fläche in Richtung der Rückseite erstrecken, insbesondere welche als Vertiefung im Lichtleiter ausgebildet sind, von der Fläche in Richtung der Rückseite. Bevorzugt ist die in diesem Abschnitt genannte Verjüngung des Querschnittes eine ausgehend von der Fläche in die Richtung der Rückseite kontinuierliche Verjüngung des Querschnittes. Diese Ausführungsformen des erfindungsgemässen Lichtleiters haben den Vorteil, dass diese besonders einfach herstellbar sind.

Bevorzugt bleibt der Querschnitt wenigstens einer der wenigstens einen der wenigstens zwei Lichtumlenkstrukturen, welche sich von der Fläche in Richtung der Rückseite erstreckt, insbesondere welche als Vertiefung im Lichtleiter ausgebildet ist, von der Fläche in Richtung der Rückseite im Wesentlichen gleich, bevorzugter bleibt gleich. Bevorzugter bleibt der Querschnitt einer Mehrzahl der Lichtumlenkstrukturen des Lichtleiters, noch bevorzugter sämtlicher Lichtumlenkstrukturen des Lichtleiters, welche sich von der Fläche in Richtung der Rückseite erstrecken, insbesondere welche als Vertiefung im Lichtleiter ausgebildet sind, von der Fläche in Richtung der Rückseite im Wesentlichen gleich, bevorzugter gleich. Diese Ausführungsformen des erfindungsgemässen Lichtleiters haben den Vorteil, dass diese besonders einfach herstellbar sind.

Bevorzugt bleibt der Querschnitt wenigstens einer der wenigstens einen der wenigstens zwei Lichtumlenkstrukturen, welche sich von der Fläche in Richtung der Rückseite erstreckt, insbesondere welche als Vertiefung im Lichtleiter ausgebildet ist, von der Fläche in Richtung der Rückseite teilweise im Wesentlichen gleich, bevorzugt bleibt teilweise gleich, sowie verjüngt sich teilweise. Bevorzugter bleibt der Querschnitt einer Mehrzahl der Lichtumlenkstrukturen des Lichtleiters, noch bevorzugter sämtlicher Lichtumlenkstrukturen des Lichtleiters, welche sich von der Fläche in Richtung der Rückseite erstrecken, insbesondere welche als Vertiefung im Lichtleiter ausgebildet sind, von der Fläche in Richtung der Rückseite teilweise im Wesentlichen gleich, bevorzugt bleibt teilweise gleich, sowie verjüngt sich teilweise. Bevorzugt ist die in diesem Abschnitt genannte teilweise Verjüngung des Querschnittes eine in die Richtung der Rückseite kontinuierliche Verjüngung des Querschnittes. Diese Ausführungsformen des erfindungsgemässen Lichtleiters haben den Vorteil, dass diese besonders einfach herstellbar sind.

Bevorzugt ist wenigstens eine der wenigstens einen der wenigstens zwei Lichtumlenkstrukturen, welche sich von der Fläche in Richtung der Rückseite erstreckt, als Vertiefung ausgebildet, wobei eine innere Oberfläche des Lichtleiters die Vertiefung begrenzt, und wobei wenigstens ein Teilbereich der inneren Oberfläche des Lichtleiters, welcher die Vertiefung begrenzt, und welcher direkt an die Fläche anschliesst, mit der Fläche einen Winkel von 30 - 50°, bevorzugt einen Winkel von ca. 45°, bildet. Diese bevorzugte Ausführungsform bewirkt den Vorteil, dass das im Lichtleiter sich fortpflanzende Licht optimal an der Lichtumlenkstruktur umgelenkt wird. Durch diese Umlenkung kann an der Sichtseite eine besonders hohe Leuchtdichte erzielt werden. Bevorzugter weisen eine Mehrzahl der Lichtumlenkstrukturen des Lichtleiters, noch bevorzugter sämtliche Lichtumlenkstrukturen des Lichtleiters, welche als Vertiefung im Lichtleiter ausgebildet sind, den beschriebenen, erfindungsgemässen Winkel auf.

Nach einer Weiterbildung der Erfindung erstreckt sich wenigstens eine der wenigstens zwei Lichtumlenkstrukturen weg von der Fläche in eine von der Rückseite abgewandte Richtung. Diese Weiterbildung der Erfindung bewirkt den Vorteil, dass diese Art der Lichtumlenkstruktur einfach herstellbar ist. Bevorzugt erstrecken sich eine Mehrzahl der Lichtumlenkstrukturen des Lichtleiters, bevorzugter erstrecken sich sämtliche Lichtumlenkstrukturen des Lichtleiters, weg von der Fläche in eine von der Rückseite abgewandte Richtung. Solche Lichtumlenkstrukturen bzw. ein solcher Lichtleiter ist besonders einfach herstellbar.

Bevorzugt ist wenigstens eine der wenigstens einen der wenigstens zwei Lichtumlenkstrukturen, welche sich von der Fläche in eine von der Rückseite abgewandte Richtung wegerstreckt, als Erhebung ausgebildet. Diese Ausführungsform bewirkt den Vorteil, dass diese Art der Lichtumlenkstruktur besonders einfach herstellbar ist. Bevorzugter sind eine Mehrzahl der Lichtumlenkstrukturen des Lichtleiters, noch bevorzugter sind sämtliche Lichtumlenkstrukturen des Lichtleiters, welche sich von der Fläche in eine von der Rückseite abgewandte Richtung wegerstrecken, als Erhebung ausgebildet. Solche Lichtumlenkstrukturen sind bzw. ein solcher Lichtleiter ist dann besonders einfach herstellbar.

Bevorzugt weist wenigstens eine jeweilige Lichtumlenkstruktur der wenigstens einen der wenigstens zwei Lichtumlenkstrukturen, welche sich von der Fläche in eine von der Rückseite abgewandte Richtung wegerstreckt, insbesondere welche als Erhebung ausgebildet ist, eine maximale Höhe H auf, welche das 2.0-fache oder weniger des Durchmessers d des Kreises bzw. des Umkreises in der Fläche dieser jeweiligen Lichtumlenkstruktur ist, welche bevorzugt das 1.0-fache oder weniger des Durchmessers d des Kreises bzw. des Umkreises in der Fläche dieser jeweiligen Lichtumlenkstruktur ist, welche bevorzugter das 0.5-fache oder weniger des Durchmessers d des Kreises bzw. des Umkreises in der Fläche dieser jeweiligen Lichtumlenkstruktur ist. Bevorzugter weisen eine Mehrzahl der Lichtumlenkstrukturen des Lichtleiters, noch bevorzugter sämtliche Lichtumlenkstrukturen des Lichtleiters, welche sich von der Fläche in eine von der Rückseite abgewandte Richtung wegerstrecken, eine derartige maximale Höhe H relativ zum Durchmesser d des Kreises bzw. des Umkreises in der Fläche auf. Diese bevorzugten Ausführungsformen weisen den Vorteil auf, dass sich das Licht über eine besonders lange Wegstrecke im Lichtleiter fortpflanzen kann. Dies aus folgendem Grund: Eine bestimmte Anzahl von Lichtumlenkstrukturen, welche eine bestimmte Anordnung zueinander aufweisen, und welche jeweils eine maximale Höhe H aufweisen, welche grösser als das 2.0-fache des Durchmessers d des Kreises bzw. des Umkreises in der Fläche dieser jeweiligen Lichtumlenkstruktur ist, koppeln vergleichweise mehr Licht über die Sichtseite des Lichtleiters aus dem Lichtleiter aus als dieselbe bestimmte Anzahl von Lichtumlenkstrukturen, welche dieselbe bestimmte Anordnung zueinander aufweisen und welche jeweils eine erfindungsgemässe maximale Höhe H aufweisen, welche das 2.0-fache oder weniger des Durchmessers d des Kreises bzw. des Umkreises in der Fläche dieser jeweiligen Lichtumlenkstruktur ist. Somit bleibt nach dem Durchgang des Lichtes an solchen erfindungsgemässen Lichtumlenkstrukturen ein grösserer Anteil des Lichtes im Lichtleiter welcher sich im Lichtleiter fortpflanzen kann und somit kann sich das Licht im Lichtleiter über eine längere Wegstrecke fortpflanzen. Mit anderen Worten ausgedrückt, ist die Abschattung von Lichtumlenkstrukturen durch die Lichtumlenkstrukturen gemäss dieser bevorzugten Ausführungsform geringer im Vergleich zu anders dimensionierten Lichtumlenkstrukturen. Grundsätzlich gilt, dass mit geringer werdender maximaler Höhe H relativ zum Durchmesser d der Abschattungseffekt einer Lichtumlenkstruktur geringer wird. Je mehr Lichtumlenkstrukturen eines Lichtleiters eine derartige, wie oben beschriebene, erfindungsgemässe maximale Höhe H relativ zum Durchmesser d aufweisen, desto länger ist die Wegstrecke, über welche sich das Licht im Lichtleiter fortpflanzen kann, da sich die Lichtumlenkstrukturen untereinander weniger abschatten. Bevorzugt ist die maximale Höhe H kleiner oder gleich 0.1 Millimeter. Die maximale Höhe H wird bevorzugt senkrecht bezüglich der durch die Sichtfläche definierten Fläche gemessen. Die im Rahmen der Beispiele im Zusammenhang mit dem Verhältnis der maximalen Tiefe T zum Durchmesser d oben dargelegten Gedanken können analog auch auf das Verhältnis der maximalen Höhe H zum Durchmesser d angewandt werden.

Bevorzugt weist der Lichtleiter, bei welchem sich die wenigstens eine der wenigstens zwei Lichtumlenkstrukturen von der Fläche in eine von der Rückseite abgewandte Richtung wegerstreckt, zwischen der Rückseite und der Fläche eine Dicke D auf, wobei wenigstens eine jeweilige Lichtumlenkstruktur der wenigstens einen der wenigstens zwei Lichtumlenkstrukturen, welche sich von der Fläche in eine von der Rückseite abgewandte Richtung wegerstreckt, eine jeweilige maximale Höhe H aufweist, wobei das Verhältnis der Dicke D zur jeweiligen maximalen Höhe H 5:1 oder grösser ist, bevorzugt 10:1 oder grösser ist. Bevorzugter weisen eine Mehrzahl der Lichtumlenkstrukturen des Lichtleiters, noch bevorzugter sämtliche Lichtumlenkstrukturen des Lichtleiters, welche sich von der Fläche in eine von der Rückseite abgewandte Richtung wegerstrecken, ein derartiges, erfindungsgemässes Verhältnis von maximaler Höhe H zur Dicke D auf. Diese bevorzugten Ausführungsformen bewirken den Vorteil, dass sich das Licht im Lichtleiter über eine besonders lange Wegstrecke fortpflanzen kann. Dies aus folgendem Grund: Weist ein Lichtleiter mit einer Dicke D zwischen der Rückseite und der Fläche eine bestimmte Anzahl von Lichtumlenkstrukturen auf, welche ein bestimmte Anordnung zueinander aufweisen und welche jeweils eine jeweilige maximale Höhe H aufweisen, wobei das Verhältnis der Dicke D zur jeweiligen maximalen Höhe H einer jeweiligen Lichtumlenkstruktur kleiner als 5:1 ist, koppeln diese Lichtumlenkstrukturen vergleichweise mehr Licht aus dem Lichtleiter aus als dieselbe bestimmte Anzahl von Lichtumlenkstrukturen, welche dieselbe bestimmte Anordnung zueinander aufweisen und welche jeweils eine jeweilige maximale Höhe H aufweisen, wobei das Verhältnis der Dicke D des Lichtleiters zwischen der Rückseite und der Fläche zur jeweiligen maximalen Höhe H einer jeweiligen Lichtumlenkstruktur 5:1 oder grösser ist. Somit bleibt nach dem Durchgang des Lichtes an den Lichtumlenkstrukturen dieser bevorzugten Ausführungsform ein grösserer Anteil des Lichtes im Lichtleiter, welcher sich im Lichtleiter fortpflanzen kann, und somit kann sich das Licht im Lichtleiter über eine längere Wegstrecke fortpflanzen. Mit anderen Worten ausgedrückt, ist die Abschattung der Lichtumlenkstrukturen durch die Lichtumlenkstrukturen gemäss dieser bevorzugten Ausführungsform geringer im Vergleich zu anders dimensionierten Lichtumlenkstrukturen. Grundsätzlich gilt, dass mit grösser werdendem Verhältnis der Dicke D des Lichtleiters zwischen der Rückseite und der Fläche zur maximalen Höhe H der Abschattungseffekt einer Lichtumlenkstruktur geringer wird. Die maximale Höhe H wird bevorzugt senkrecht bezüglich der durch die Sichtfläche definierten Fläche gemessen. Je mehr Lichtumlenkstrukturen eines Lichtleiters ein derartiges, erfindungsgemässes Verhältnis von maximaler Höhe H zur Dicke D des Lichtleiters aufweisen, desto länger ist somit die Wegstrecke über welche sich das Licht im Lichtleiter fortpflanzen kann, da sich die Lichtumlenkstrukturen untereinander weniger abschatten. Diese bevorzugte Ausführungsform bewirkt den Vorteil, dass einerseits die Lichtumlenkstrukturen besonders einfach herzustellen sind, und andererseits, dass Licht im Lichtleiter eines besonders lange Wegstrecke zurücklegen kann.

Bevorzugt ist wenigstens eine jeweilige Lichtumlenkstruktur der wenigstens einen der wenigstens zwei Lichtumlenkstrukturen, welche sich von der Fläche in eine von der Rückseite abgewandte Richtung wegerstreckt, derart ausgestaltet, dass die maximale Höhe H der wenigstens einen jeweiligen Lichtumlenkstruktur zur Dicke des Lichtleiters zwischen der Rückseite und der Fläche im Bereich der wenigstens einen jeweiligen Lichtumlenkstruktur im erfindungsgemässen Verhältnis steht. Bevorzugter weist eine Mehrzahl der Lichtumlenkstrukturen des Lichtleiters, noch bevorzugter sämtliche Lichtumlenkstrukturen des Lichtleiters, welche sich von der Fläche in eine von der Rückseite abgewandte Richtung wegerstrecken, ein derartiges, erfindungsgemässes Verhältnis von maximaler Höhe H zur Dicke D des Lichtleiters zwischen der Rückseite und der Fläche auf.

Die geringere Abschattung bzw. der geringere Abschattungseffekt kann beispielsweise auch noch erzielt werden, falls die Dicke D des Lichtleiters zwischen der Rückseite und der Fläche sowie die maximale Höhe H wenigstens einer Lichtumlenkstruktur des Lichtleiters in folgendem Verhältnis zueinander steht:
1. Die geringere Abschattung kann auch erzielt werden, falls wenigstens eine jeweilige Lichtumlenkstruktur der wenigstens einen der wenigstens zwei Lichtumlenkstrukturen, welche sich von der Fläche in eine von der Rückseite abgewandte Richtung wegerstreckt, insbesondere welche als Erhebung ausgebildet ist, derart ausgestaltet ist, dass die maximale Höhe H der wenigsten einen jeweiligen Lichtumlenkstruktur zur mittleren Dicke des Lichtleiters zwischen der Rückseite und der Fläche im erfindungsgemässen Verhältnis steht. Bevorzugt weist eine Mehrzahl der Lichtumlenkstrukturen des Lichtleiters, bevorzugter sämtliche Lichtumlenkstrukturen des Lichtleiters, welche sich von der Fläche in eine von der Rückseite abgewandte Richtung wegerstrecken, insbesondere welche als Erhebung ausgebildet sind, ein derartiges, erfindungsgemässes Verhältnis von maximaler Höhe H zur mittleren Dicke des Lichtleiters zwischen der Rückseite und der Fläche auf.
2. Die geringere Abschattung kann ebenfalls erzielt werden, falls sämtliche Lichtumlenkstrukturen des Lichtleiters, welche sich von der Fläche in eine von der Rückseite abgewandte Richtung wegerstrecken, insbesondere welche als Erhebung ausgebildet sind, derart ausgestaltet sind, dass die mittlere maximale Höhe H dieser Lichtumlenkstrukturen zur mittleren Dicke des Lichtleiters zwischen der Rückseite und der Fläche im erfindungsgemässen Verhältnis steht.

Die Dicke des Lichtleiters zwischen der Rückseite und der Fläche im Bereich einer jeweiligen Lichtumlenkstruktur liegt bevorzugt im Bereich von 0.1 Millimeter - 5 Millimeter, bevorzugter im Bereich von 0.5 Millimeter - 5 Millimeter, noch bevorzugter im Bereich von 1 Millimeter bis 5 Millimeter, am bevorzugtesten im Bereich von 1 Millimeter bis 2 Millimeter. Diese Dicke des Lichtleiters wird bevorzugt durch eine Messung senkrecht bezüglich der durch die Sichtfläche definierten Fläche bestimmt. Die oben genannte mittlere Dicke des Lichtleiters zwischen der Rückseite und der Fläche wird bevorzugt durch Messungen senkrecht bezüglich der durch die Sichtfläche definierten Fläche bestimmt. Die mittlere Dicke des Lichtleiters zwischen der Rückseite und der Fläche liegt bevorzugt im Bereich von 0.1 Millimeter - 5 Millimeter, bevorzugter im Bereich von 0.5 Millimeter - 5 Millimeter, noch bevorzugter im Bereich von 1 Millimeter bis 5 Millimeter, am bevorzugtesten im Bereich von 1 Millimeter bis 2 Millimeter.

Bevorzugt weist wenigstens eine der wenigstens einen der wenigstens zwei Lichtumlenkstrukturen, welche sich von der Fläche in eine von der Rückseite abgewandte Richtung wegerstreckt, insbesondere welche als Erhebung ausgebildet ist, eine maximale Höhe H auf, welche kleiner oder gleich 0.1 Millimeter ist, bevorzugter welche kleiner oder gleich 0.05 Millimeter ist, noch bevorzugter welche kleiner oder gleich 0.025 Millimeter ist. Bevorzugter weisen eine Mehrzahl der Lichtumlenkstrukturen des Lichtleiters, noch bevorzugter sämtliche Lichtumlenkstrukturen des Lichtleiters, welche sich von der Fläche in eine von der Rückseite abgewandte Richtung wegerstrecken, insbesondere welche als Erhebung ausgebildet sind, eine derartige Dimensionierung auf.

Bevorzugt weist wenigstens eine der wenigstens einen der wenigstens zwei Lichtumlenkstrukturen, welche sich von der Fläche in eine von der Rückseite abgewandte Richtung wegerstreckt, insbesondere welche als Erhebung ausgebildet ist, das oben beschriebene, erfindungsgemässe Verhältnis von maximaler Höhe H zu Durchmesser d als auch das oben beschriebene, erfindungsgemässe Verhältnis von maximaler Höhe H zur Dicke D auf. Bevorzugter sind eine Mehrzahl der Lichtumlenkstrukturen, noch bevorzugter sämtliche Lichtumlenkstrukturen des Lichtleiters, welche sich von der Fläche in eine von der Rückseite abgewandte Richtung wegerstrecken, derart ausgestaltet. Diese bevorzugten Ausführungsformen bewirken den Vorteil, dass das Licht sich im Lichtleiter über eine besonders lange Wegstrecke fortpflanzen kann.

Bevorzugt verjüngt sich der Querschnitt wenigstens einer der wenigstens einen der wenigstens zwei Lichtumlenkstrukturen, welche sich von der Fläche in eine von der Rückseite abgewandte Richtung wegerstreckt, von der Fläche in die von der Rückseite abgewandte Richtung. Bevorzugter verjüngt sich der Querschnitt einer Mehrzahl der Lichtumlenkstrukturen des Lichtleiters, noch bevorzugter sämtlicher Lichtumlenkstrukturen des Lichtleiters, welche sich von der Fläche in eine von der Rückseite abgewandte Richtung wegerstrecken, von der Fläche in die von der Rückseite abgewandte Richtung. Bevorzugt ist die in diesem Abschnitt genannte Verjüngung des Querschnittes eine ausgehend von der Fläche in die von der Rückseite abgewandte Richtung kontinuierliche Verjüngung des Querschnittes. Diese Ausführungsformen des erfindungsgemässen Lichtleiters haben den Vorteil, dass diese besonders einfach herstellbar sind.

Bevorzugt bleibt der Querschnitt wenigstens einer der wenigstens einen der wenigstens zwei Lichtumlenkstrukturen, welche sich von der Fläche in eine von der Rückseite abgewandte Richtung wegerstreckt, von der Fläche in die von der Rückseite abgewandte Richtung im Wesentlichen gleich, bevorzugter bleibt gleich. Bevorzugter bleibt der Querschnitt einer Mehrzahl der Lichtumlenkstrukturen des Lichtleiters, noch bevorzugter sämtlicher Lichtumlenkstrukturen des Lichtleiters, welche sich von der Fläche in eine von der Rückseite abgewandte Richtung wegerstrecken, von der Fläche in die von der Rückseite abgewandte Richtung im Wesentlichen gleich, bevorzugter gleich. Diese Ausführungsformen des erfindungsgemässen Lichtleiters haben den Vorteil, dass diese besonders einfach herstellbar sind.

Bevorzugt bleibt der Querschnitt wenigstens einer der wenigstens einen der wenigstens zwei Lichtumlenkstrukturen, welche sich von der Fläche in eine von der Rückseite abgewandte Richtung wegerstreckt, von der Fläche in die von der Rückseite abgewandte Richtung teilweise im Wesentlichen gleich, bevorzugt bleibt teilweise gleich, sowie verjüngt sich teilweise. Bevorzugter bleibt der Querschnitt einer Mehrzahl der Lichtumlenkstrukturen des Lichtleiters, noch bevorzugter sämtlicher Lichtumlenkstrukturen des Lichtleiters, welche sich von der Fläche in eine von der Rückseite abgewandte Richtung wegerstrecken, von der Fläche in die von der Rückseite abgewandte Richtung teilweise im Wesentlichen gleich, bevorzugt bleibt teilweise gleich, sowie verjüngt sich teilweise. Bevorzugt ist die in diesem Abschnitt genannte teilweise Verjüngung des Querschnittes eine in die von der Rückseite abgewandte Richtung kontinuierliche Verjüngung des Querschnittes. Diese Ausführungsformen des erfindungsgemässen Lichtleiters haben den Vorteil, dass diese besonders einfach herstellbar sind.

Bevorzugt ist wenigstens eine der wenigstens einen der wenigstens zwei Lichtumlenkstrukturen, welche sich von der Fläche in eine von der Rückseite abgewandte Richtung wegerstreckt, als Erhebung ausgebildet, wobei die Erhebung eine äussere Oberfläche aufweist, und wobei wenigstens ein Teilbereich der äusseren Oberfläche der Erhebung, welcher direkt an die Fläche anschliesst, mit der Fläche einen Winkel von 30 - 50°, bevorzugt einen Winkel von ca. 45°, bildet. Diese bevorzugte Ausführungsform bewirkt den Vorteil, dass das im Lichtleiter sich fortpflanzende Licht optimal an der Lichtumlenkstruktur umgelenkt wird. Durch diese Umlenkung kann an der Rückseite eine besonders hohe Leuchtdichte erzielt werden. Bevorzugter weisen eine Mehrzahl der Lichtumlenkstrukturen des Lichtleiters, noch bevorzugter sämtliche Lichtumlenkstrukturen des Lichtleiters, welche als Erhebung ausgebildet sind, den beschriebenen, erfindungsgemässen Winkel auf.

Nach einer Weiterbildung der Erfindung weist der Lichtleiter wenigstens im Bereich der wenigstens zwei Lichtumlenkstrukturen eine Dicke im Bereich von 0.1 Millimeter - 5 Millimeter, bevorzugter im Bereich von 0.5 Millimeter - 5 Millimeter, noch bevorzugter im Bereich von 1 Millimeter - 5 Millimeter, am bevorzugtesten im Bereich von 1 Millimeter - 2 Millimeter, auf. Diese Dicke wird bevorzugt durch eine Messung senkrecht bezüglich der durch die Sichtfläche definierten Fläche bestimmt.

Nach einer Weiterbildung der Erfindung weist der Lichtleiter eine mittlere Dicke auf, wobei die mittlere Dicke des Lichtleiters im Bereich von 0.1 Millimeter - 5 Millimeter, bevorzugter im Bereich von 0.5 Millimeter - 5 Millimeter, noch bevorzugter im Bereich von 1 Millimeter bis 5 Millimeter, am bevorzugtesten im Bereich von 1 Millimeter - 2 Millimeter, liegt. Die mittlere Dicke des Lichtleiters wird bevorzugt durch Messungen senkrecht bezüglich der durch die Sichtfläche definierten Fläche bestimmt.

Nach einer Weiterbildung der Erfindung weist der Lichtleiter eine Länge von 1 Millimeter - 2000 Millimeter auf.

Nach einer Weiterbildung der Erfindung weist der Lichtleiter eine Breite von 1 Millimeter - 2000 Millimeter auf.

Nach einer Weiterbildung der Erfindung weist der Lichtleiter einen Grundkörper auf, welcher die Lichteinkoppelfläche, die Rückseite sowie die der Rückseite gegenüberliegende Sichtfläche bildet, welche die Fläche definiert. Bevorzugt ist die wenigstens eine Lichtumlenkstruktur, welche sich von der Fläche in eine von der Rückseite abgewandte Richtung wegerstreckt einstückig mit dem Grundkörper verbunden. Die Herstellung eines derartigen Lichtleiter ist besonders einfach. Selbstverständlich kann die wenigstens eine Lichtumlenkstruktur, welche sich von der Fläche in eine von der Rückseite abgewandte Richtung wegerstreckt, nicht einstückig, sondern auf eine andere dem Fachmann bekannte Art und Weise mit dem Grundkörper verbunden sein. Beispielsweise ist die wenigstens eine Lichtumlenkstruktur, welche sich von der Fläche in eine von der Rückseite abgewandte Richtung wegerstreckt, auf den Grundkörper aufgedruckt.

Nach einer Weiterbildung der Erfindung ist der Lichtleiter im Wesentlichen quaderförmig ausgebildet ist, wobei der Lichtleiter eine Länge von 1 Millimeter - 2000 Millimeter, eine Breite von 1 Millimeter - 2000 Millimeter sowie eine Dicke von 0.1 Millimeter - 5 Millimeter aufweist.

Nach einer Weiterbildung der Erfindung ist die Fläche wenigstens eine Ebene.

Nach einer Weiterbildung der Erfindung weist die Fläche eine gekrümmte Form auf.

Nach einer Weiterbildung der Erfindung ist die Rückseite im Wesentlichen parallel, bevorzugt parallel, zur Sichtfläche angeordnet.

Nach einer Weiterbildung der Erfindung bilden wenigstens die Sichtfläche sowie die wenigstens zwei Lichtumlenkstrukturen gemeinsam eine Sichtseite des Lichtleiters, wobei bevorzugt über die Sichtseite Licht aus dem Lichtleiter auskoppelbar ist.

Nach einer Weiterbildung der Erfindung ist wenigstens ein Querschnitt, um welchen ein Umkreis legbar ist, kreisförmig oder als Vieleck ausgebildet. Bevorzugt weist die Lichtumlenkstruktur, deren Querschnitt kreisförmig ausgebildet ist, eine Form auf ausgewählt aus der Gruppe bestehend aus konusförmig, zylinderförmig, halbkugelförmig. Bevorzugt weist die Lichtumlenkstruktur, deren Querschnitt als Vieleck ausgebildet ist, eine Form auf ausgewählt aus der Gruppe bestehend aus pyramidenförmig, quaderförmig, würfelförmig, prismenförmig.

Nach einer Weiterbildung der Erfindung weist die Lichtumlenkstruktur, dessen Querschnitt als Kreis ausgebildet ist, eine Form auf ausgewählt aus der Gruppe bestehend aus konusförmig, zylinderförmig, halbkugelförmig.

Nach einer Weiterbildung der Erfindung ist die wenigstens eine der wenigstens zwei Lichtumlenkstrukturen, welche sich von der Fläche in Richtung der Rückseite erstreckt, als Vertiefung im Lichtleiter ausgebildet, wobei die Vertiefung mittels Laser oder Ätzen oder Spritzguss oder Fräsen oder einer Mischung der genannten Verfahren hergestellt ist.

Nach einer Weiterbildung der Erfindung ist die wenigstens eine der wenigstens zwei Lichtumlenkstrukturen, welche sich von der Fläche in eine von der Rückseite abgewandte Richtung wegerstreckt, als Erhebung ausgebildet, wobei die Erhebung mittels Spritzguss oder Ätzen oder Bedruckung oder Fräsen oder einer Mischung der genannten Verfahren hergestellt ist.

Nach einer Weiterbildung der Erfindung weist der Lichtleiter einen Transmissionsgrad τ_{D65} (3 Millimeter) in Prozent, bestimmt gemäss der Norm DIN 5036-1, Ausgabe vom 1.7.1978, der Norm DIN 5036-3, Ausgabe vom 1.11.1979, der Norm DIN 5036-4, Ausgabe vom 1.8.1977 sowie der Norm 5036 SUPP 1, Ausgabe vom 1.2.1980, von wenigstens 80%, bevorzugt von wenigstens 85%, bevorzugter von wenigstens 90%, auf.

Nach einer Weiterbildung der Erfindung ist der Lichtleiter aus Polymethylmethacrylat (PMMA), Polymethacrylmethylimid (PMMI), Polycarbonat (PC), optischem Silikon, transparentem Polyamid oder Polyethylenterephthalat (PET) hergestellt.

Nach einer Weiterbildung der Erfindung weist der Lichtleiter wenigstens drei Lichtumlenkstrukturen auf, welche einen in der Fläche angeordneten Querschnitt aufweisen, wobei der Mittelpunkt des Kreises bzw. Umkreises in der Fläche einer jeweiligen Lichtumlenkstruktur zum Mittelpunkt des Kreises bzw. Umkreises in der Fläche sämtlicher weiteren Lichtumlenkstruktur einen Abstand A aufweist,
wobei der Abstand A vom Mittelpunkt des Kreises bzw. Umkreises in der Fläche von wenigstens einer der jeweiligen Lichtumlenkstrukturen zum Mittelpunkt des Kreises bzw. Umkreises in der Fläche sämtlicher weiteren Lichtumlenkstrukturen gleich gross ist,
oder wobei der Abstand A vom Mittelpunkt des Kreises bzw. Umkreises in der Fläche wenigstens einer der jeweiligen Lichtumlenkstrukturen zum Mittelpunkt des Kreises bzw. Umkreises in der Fläche sämtlicher weiteren Lichtumlenkstrukturen unterschiedlich ist,
oder wobei der Abstand A vom Mittelpunkt des Kreises bzw. Umkreises in der Fläche wenigstens einer der jeweiligen Lichtumlenkstrukturen zum Mittelpunkt des Kreises bzw. Umkreises in der Fläche sämtlicher weiteren Lichtumlenkstrukturen teilweise unterschiedlich ist.

Der Lichtleiter weist wenigstens zwei zusätzliche Lichtumlenkstrukturen auf. Die wenigstens zwei zusätzlichen Lichtumlenkstrukturen sind an der Rückseite angeordnet. Diese Weiterbildung der Erfindung bewirkt den Vorteil, dass zusätzliches Licht aus dem Lichtleiter ausgekoppelt werden kann.

Die Rückseite definiert eine weitere Fläche.

Bevorzugt weist wenigstens eine der wenigstens einen zusätzlichen Lichtumlenkstruktur einen Querschnitt auf, welcher in der weiteren Fläche angeordnet ist, von welcher weiteren Fläche die wenigstens eine der wenigstens einen zusätzlichen
Ebenfalls ist es möglich, dass wenigstens eine der wenigstens einen zusätzlichen Lichtumlenkstruktur identisch ausgebildet ist wie wenigstens eine der wenigstens zwei Lichtumlenkstrukturen. Möglich ist aber auch, dass wenigstens eine der wenigstens einen Lichtumlenkstruktur sich bevorzugt wegerstreckt. Bevorzugter weist der Lichtleiter mehrere zusätzliche Lichtumlenkstrukturen auf, wobei der Querschnitt einer Mehrzahl dieser mehreren zusätzlichen Lichtumlenkstrukturen in der weiteren Fläche angeordnet ist, und wobei bevorzugt die Mehrzahl dieser mehreren zusätzlichen Lichtumlenkstrukturen sich von der weiteren Fläche wegerstreckt. Noch bevorzugter ist der Querschnitt sämtlicher zusätzlichen Lichtumlenkstrukturen in der weiteren Fläche angeordnet von welcher sich bevorzugt diese sämtlichem zusätzlichen Lichtumlenkstrukturen wegerstrecken.

Bevorzugt erstreckt sich wenigstens eine der wenigstens einen zusätzlichen Lichtumlenkstruktur, bevorzugter eine Mehrzahl der zusätzlichen Lichtumlenkstrukturen, noch bevorzugter sämtliche zusätzlichen Lichtumlenkstrukturen, in Richtung der Sichtseite, wobei die Sichtseite bevorzugt von wenigstens der Sichtfläche sowie den wenigstens zwei Lichtumlenkstrukturen gebildet ist. Falls die zusätzliche Lichtumlenkstruktur sich in Richtung der Sichtseite erstreckt, ist diese bevorzugt als Vertiefung im Lichtleiter ausgebildet.

Bevorzugt erstreckt sich wenigstens eine der wenigstens einen zusätzlichen Lichtumlenkstruktur, bevorzugter eine Mehrzahl der zusätzlichen Lichtumlenkstrukturen, noch bevorzugter sämtliche zusätzlichen Lichtumlenkstrukturen, in eine von der Sichtseite abgewandte Richtung, wobei die Sichtseite bevorzugt von wenigstens der Sichtfläche sowie den wenigstens zwei Lichtumlenkstrukturen gebildet ist. Falls die zusätzliche Lichtumlenkstruktur sich in eine von der Sichtseite abgewandte Richtung erstreckt, ist die zusätzliche Lichtumlenkstruktur bevorzugt als Erhebung ausgebildet, bevorzugter als Erhebung bezüglich der weiteren Fläche ausgebildet.

Der Querschnitt wenigstens einer der wenigstens einen zusätzlichen Lichtumlenkstruktur in der weiteren Fläche kann identisch dimensioniert sein wie der Querschnitt wenigstens einer der wenigstens zwei Lichtumlenkstrukturen in der Fläche. Es ist auch möglich, dass der Querschnitt wenigstens einer der wenigstens einen zusätzlichen Lichtumlenkstruktur in der weiteren Fläche unterschiedlich dimensioniert ist wie der Querschnitt wenigstens einer der wenigstens zwei Lichtumlenkstrukturen in der Fläche.

Ebenfalls ist es möglich, dass wenigstens eine der wenigstens einen zusätzlichen Lichtumlenkstruktur identisch ausgebildet ist wie wenigstens eine der wenigstens zwei Lichtumlenkstrukturen. Möglich ist aber auch, dass wenigstens eine der wenigstens einen zusätzlichen Lichtumlenkstruktur unterschiedlich ausgebildet ist wie wenigstens eine der wenigstens zwei Lichtumlenkstrukturen.

Bevorzugt ist mittels der wenigstens einen zusätzlichen Lichtumlenkstruktur im Lichtleiter sich fortpflanzendes Licht in Richtung der Sichtfläche und/oder in Richtung der wenigstens zwei Lichtumlenkstrukturen umlenkbar. Diese bevorzugte Ausführungsform bewirkt den Vorteil, dass über die Sichtfläche und/oder über die wenigstens zwei Lichtumlenkstrukturen zusätzliches Licht ausgekoppelt werden kann. Falls wenigstens die Sichtfläche und die wenigstens zwei Lichtumlenkstrukturen gemeinsam die Sichtseite des Lichtleiters bilden, bietet diese bevorzugt Ausführungsform den Vorteil, dass zusätzliches Licht über die Sichtseite des Lichtleiters ausgekoppelt werden kann, bzw. es kann an der Sichtseite des Lichtleiters eine höhere Leuchtdichte erzielt werden.

Die wenigstens zwei zusätzlichen Lichtumlenkstrukturen sind derart ausgestaltet, dass der Querschnitt einer jeweiligen, zusätzlichen Lichtumlenkstruktur in der weiteren Fläche ein Kreis ist oder um den Querschnitt einer jeweiligen, zusätzlichen Lichtumlenkstruktur in der weiteren Fläche ein Umkreis legbar ist, wobei der Durchmesser d des Kreises bzw. des Umkreises im Bereich von grösser als 0 Mikrometer bis 50 Mikrometer liegt, wobei der Mittelpunkt des Kreises bzw. des Umkreises einer jeweiligen, zusätzlichen Lichtumlenkstruktur zum Mittelpunkt des Kreises bzw. des Umkreises sämtlicher weiteren, zusätzlichen Lichtumlenkstrukturen einen Abstand A aufweist, wobei der Abstand A grösser als der Durchmesser d des Kreises bzw. des Umkreises der jeweiligen Lichtumlenkstruktur geteilt durch den Wert 0.33 ist. Diese Ausführungsform bietet den Vorteil, dass die wenigstens zwei zusätzlichen Lichtumlenkstrukturen im unbeleuchteten Zustand des Lichtleiters kaum sichtbar sind für die Augen eines menschlichen Betrachters in einem üblichen Abstand von ca. 30cm - 70cm von der Sichtseite des Lichtleiters. Bevorzugt liegt der Durchmesser d des Kreises bzw. des Umkreises in der weiteren Fläche im Bereich von 5 Mikrometer bis 40 Mikrometer, bevorzugter im Bereich von 5 Mikrometer bis 30 Mikrometer, noch bevorzugter im Bereich von 10 Mikrometer bis 25 Mikrometer, noch weiter bevorzugter
Die Anzahl der wenigstens zwei Lichtumlenkstrukturen kann identisch sein zur Anzahl der wenigstens zwei zusätzlichen Lichtumlenkstrukturen oder die Anzahl der wenigstens zwei Lichtumlenkstrukturen kann unterschiedlich zur Anzahl der wenigstens zwei im Bereich von 10 Mikrometer bis 20 Mikrometer, am bevorzugtesten im Bereich von 10 Mikrometer bis 15 Mikrometer.

Bevorzugt ist der Querschnitt der wenigstens zwei zusätzlichen Lichtumlenkstrukturen in der weiteren Fläche gleich ausgebildet wie der Querschnitt der wenigstens zwei Lichtumlenkstrukturen in der Fläche gemäss Anspruch 3 dieser Schrift.

Bevorzugt ist der Durchmesser d des Kreises bzw. des Umkreises wenigstens einer zusätzlichen Lichtumlenkstruktur der wenigstens zwei zusätzlichen Lichtumlenkstrukturen unterschiedlich ist zum Durchmesser d des Kreises bzw. Umkreises in der weiteren Fläche sämtlicher weiteren zusätzlichen Lichtumlenkstrukturen der wenigstens zwei zusätzlichen Lichtumlenkstrukturen.

Bevorzugt erstreckt sich wenigstens eine der wenigstens zwei zusätzlichen Lichtumlenkstrukturen von der weiteren Fläche in Richtung der Rückseite sowie bevorzugt wenigstens eine der wenigstens einen der wenigstens zwei zusätzlichen Lichtumlenkstrukturen, welche sich von der weiteren Fläche in Richtung der Rückseite erstreckt, ist als Vertiefung im Lichtleiter ausgebildet, wobei bevorzugt die wenigstens eine der wenigstens zwei zusätzlichen Lichtumlenkstrukturen, welche sich von der weiteren Fläche in Richtung der Rückseite erstreckt, gleich ausgebildet ist wie die gemäss einem der Ansprüche 6 - 9 dieser Schrift definierten wenigstens einen der wenigstens zwei Lichtumlenkstrukturen.

Bevorzugt erstreckt sich wenigstens eine der wenigstens zwei zusätzlichen Lichtumlenkstrukturen von der weiteren Fläche in eine von der Rückseite abgewandte Richtung weg sowie bevorzugt wenigstens eine der wenigstens einen der wenigstens zwei zusätzlichen Lichtumlenkstrukturen, welche sich von der weiteren Fläche in eine von der Rückseite abgewandte Richtung wegerstreckt, ist als Erhebung ausgebildet, wobei bevorzugt wenigstens eine der wenigstens einen der wenigstens zwei zusätzlichen Lichtumlenkstrukturen, welche sich von der weiteren Fläche in eine von der Rückseite abgewandte Richtung wegerstreckt, gleich ausgebildet ist wie die gemäss einem der Ansprüche 11 - 14 dieser Schrift definierten wenigstens einen der wenigstens zwei Lichtumlenkstrukturen.

Die Anzahl der wenigstens zwei Lichtumlenkstrukturen kann identisch sein zur Anzahl der wenigstens zwei zusätzlichen Lichtumlenkstrukturen oder die Anzahl der wenigstens zwei Lichtumlenkstrukturen kann unterschiedlich zur Anzahl der wenigstens zwei zusätzlichen Lichtumlenkstrukturen sein.

Nach einer Weiterbildung der Erfindung sind die Querschnitte der wenigstens zwei Lichtumlenkstrukturen in der Fläche unterschiedlich relativ zueinander angeordnet wie die Querschnitte der wenigstens zwei zusätzlichen Lichtumlenkstrukturen in der weiteren Fläche relativ zueinander angeordnet sind. Bei dieser Ausführungsform bilden somit die Querschnitte der wenigstens zwei Lichtumlenkstrukturen in der Fläche sowie die Querschnitte der wenigstens zwei zusätzlichen Lichtumlenkstrukturen in der weiteren Fläche ein unterschiedliches Muster.

Nach einer Weiterbildung der Erfindung sind die Querschnitte der wenigstens zwei Lichtumlenkstrukturen in der Fläche relativ zueinander angeordnet wie die Querschnitte der wenigstens zwei zusätzlichen Lichtumlenkstrukturen in der weiteren Fläche relativ zueinander angeordnet sind. Bei dieser Ausführungsform bilden somit die Querschnitte der wenigstens zwei Lichtumlenkstrukturen in der Fläche sowie die Querschnitte der wenigstens zwei zusätzlichen Lichtumlenkstrukturen in der weiteren Fläche dasselbe Muster.

Nach einer Weiterbildung der Erfindung ist über dem Querschnitt in der weiteren Fläche von wenigstens einer der wenigstens einen zusätzlichen Lichtumlenkstruktur der Querschnitt in der Fläche von wenigstens einer der wenigstens zwei Lichtumlenkstrukturen, bevorzugt von einer der wenig zwei Lichtumlenkstrukturen, angeordnet.

Der Querschnitt in der Fläche von sämtlichen Lichtumlenkstrukturen der wenigstens zwei Lichtumlenkstrukturen ist seitlich versetzt angeordnet relativ zum Querschnitt in der weiteren Fläche sämtlicher Lichtumlenkstrukturen der wenigstens zwei Lichtumlenkstrukturen.

Diese versetzte Anordnung bewirkt den Vorteil, dass eine höhere Leuchtdichte an der Sichtfläche und/oder an den wenigstens zwei Lichtumlenkstrukturen erzielt werden kann. Bevorzugt bilden wenigstens die Sichtfläche und die wenigstens zwei Lichtumlenkstrukturen die Sichtseite des Lichtleiters. Somit bewirkt die versetzte Anordnung den Vorteil, dass eine höhere Leuchtdichte an der Sichtseite des Lichtleiters erzielt werden kann.

Der Querschnitt in der Fläche einer Lichtumlenkstruktur ist seitlich versetzt zu einem Querschnitt in der weiteren Fläche einer zusätzlichen Lichtumlenkstruktur angeordnet, bzw. der Querschnitt in der Fläche einer Lichtumlenkstruktur ist nicht über einem Querschnitt in der weiteren Fläche einer zusätzlichen Lichtumlenkstruktur angeordnet, wenn die Projektion des Querschnittes in der Fläche der Lichtumlenkstruktur auf die weitere Fläche nicht mit dem Querschnitt in der weiteren Fläche der zusätzlichen Lichtumlenkstruktur überlappt.

Nach einer Weiterbildung der Erfindung ist wenigstens eine der wenigstens einen zusätzlichen Lichtumlenkstruktur als Vertiefung im Lichtleiter ausgebildet, bevorzugt eine Mehrzahl der zusätzlichen Lichtumlenkstrukturen als Vertiefung im Lichtleiter ausgebildet, noch bevorzugter sämtliche zusätzlichen Lichtumlenkstrukturen als Vertiefung im Lichtleiter ausgebildet, wobei die wenigstens eine Vertiefung eine maximale Tiefe T aufweist, und wobei die maximale Tiefe T kleiner oder gleich 0.1 Millimeter ist, bevorzugter kleiner oder gleich 0.05 Millimeter ist, noch bevorzugter kleiner oder gleich 0.025 Millimeter ist.

Nach einer Weiterbildung der Erfindung ist wenigstens eine der wenigstens einen zusätzlichen Lichtumlenkstruktur als Erhebung ausgebildet, bevorzugt eine Mehrzahl der zusätzlichen Lichtumlenkstrukturen als Erhebung ausgebildet, noch bevorzugter sämtliche zusätzlichen Lichtumlenkstrukturen als Erhebung ausgebildet, wobei die Erhebung eine maximale Höhe H aufweist, und wobei die maximale Höhe H kleiner oder gleich 0.1 Millimeter ist, bevorzugter kleiner oder gleich 0.05 Millimeter ist, noch bevorzugter kleiner oder gleich 0.025 Millimeter ist.

Es wird ausserdem ein Bauteil angegeben umfassend wenigstens ein flächiges Dekorelement mit einer Sichtseite und einer Rückseite sowie wenigstens einem Lichtleiter, welcher erfindungsgemäss wie oben ausgeführt ausgebildet ist, wobei das flächige Dekorelement wenigstens einen Bereich aufweist, welcher für für den Menschen sichtbares Licht durchscheinend ist und wobei an der Rückseite der wenigstens eine erfindungsgemässe Lichtleiter angeordnet ist.

Das Merkmal, dass das Dekorelement flächig ausgebildet ist, bedeutet, dass das Dekorelement entlang von zwei Dimensionen wesentlich grösser, insbesondere um ein Vielfaches grösser, dimensioniert ist als entlang einer dritten Dimension, welche sich in der Regel senkrecht zur Flächenausdehnung der Sichtseite des Dekorelementes erstreckt. Das flächige Dekorelement ist beispielsweise bandförmig, insbesondere als Band, ausgebildet.

Nach einer Weiterbildung der Erfindung ist das flächige Dekorelement des Bauteils durch eine transparente oder transluzente Beschichtung, insbesondere durch eine transparente oder transluzente PVD-Beschichtung, oder durch einen transluzenten oder transparenten Lack oder durch einen transluzenten oder transparenten Kunststoff gebildet. Bevorzugt ist der Lichtleiter unmittelbar an der Rückseite des flächigen Dekorelementes angeordnet. Zwischen dem flächigen Dekorelement und dem Lichtleiter kann aber auch wenigstens eine weitere Schicht, welche transluzent oder transparent ist, angeordnet sein.

Nach einer Weiterbildung der Erfindung ist das flächige Dekorelement des Bauteils einstückig ausgebildet. Das flächige Dekorelement ist dadurch einfach herstellbar und weist eine optisch ansprechende Ausgestaltung auf.

Nach einer Weiterbildung der Erfindung ist das Bauteil als eine Zierleiste oder ein Bedienelement, wie beispielsweise eine Taste, insbesondere eines Fahrzeuges, ausgebildet, bevorzugt als eine Fuss- oder Einstiegleiste eines Fahrzeuges ausgebildet.

Das Fahrzeug ist bevorzugt ein Kraftfahrzeug. Das erfindungsgemässe Bauteil kann im Innenbereich und / oder Aussenbereich des Kraftfahrzeuges vorgesehen sein.

Nach einer Weiterbildung der Erfindung ist das Bauteil als eine Zierleiste oder als ein Bedienelement, wie beispielsweise eine Taste, eines Haushaltsgerätes ausgebildet. Das Haushaltsgerät ist beispielsweise ein Kühlschrank, ein Dampfgarer, eine Waschmaschine, ein Backofen, ein Kochherd, eine Geschirrspülmaschine oder eine Kaffeemaschine. Das Bauteil kann aber beispielsweise auch als Zierleiste eines Möbel ausgebildet sein.

Wenigstens ein Bereich des wenigstens einen Bereich, welcher für für den Menschen sichtbares Licht durchscheinend ist, ist durch wenigstens einen Durchbruch im flächigen Dekorelement gebildet. Das flächige Dekorelement ist dabei bevorzugt aus einem Material hergestellt, welches für für den Menschen sichtbares Licht opak ist. Dieses opake Material ist bevorzugt ein Metall, wie insbesondere Aluminium, Stahl oder Edelstahl. Das flächige Dekorelement des Bauteils kann aber auch aus einem anderen für für den Menschen sichtbares Licht opaken Material, wie zum Beispiel Kunststoff, oder aus einem für für den Menschen sichtbares Licht durchscheinenden Material, wie zum Beispiel Kunststoff, hergestellt sein, oder aus einem anderen Material, wie beispielsweise Holz, welches bevorzugt für für den Menschen sichtbares Licht opak ist, hergestellt sein. Bevorzugt bildet der wenigstens eine Durchbruch wenigstens ein von der Sichtseite des flächigen Dekorelementes her gesehen graphisches Element. Das graphische Element ist beispielsweise ein Symbol, ein Ornament, ein Buchstabe, ein Schriftzug oder ein Logo.

Nach einer Weiterbildung der Erfindung ist wenigstens ein Bereich des wenigstens einen Bereich, welcher für für den Menschen sichtbares Licht durchscheinend ist, durch ein transluzentes oder ein transparentes Material gebildet. Bevorzugt ist ein Grossteil des flächigen Dekorelementes, bevorzugter im Wesentlichen das gesamte flächige Dekorelement, noch bevorzugter das gesamte flächige Dekorelement aus einem transluzenten oder transparenten Material hergestellt. Bevorzugt ist das transluzente oder transparente Material ein Kunststoff. Bevorzugt sind die wenigstens zwei Lichtumlenkstrukturen des wenigstens einen erfindungsgemässen Lichtleiters zueinander derart angeordnet, dass diese gemeinsam wenigstens ein jeweiliges graphisches Element bilden. Diese das jeweilige graphische Element bildende Lichtumlenkstrukturen lenken das sich im Lichtleiter fortpflanzende Licht derart um, dass dieses jeweilige graphische Element auf der Sichtseite des Lichtleiters und / oder im wenigstens einen Bereich des flächigen Dekorelementes, welcher für für den Menschen sichtbares Licht durchscheinend ist, insbesondere auf einer Sichtseite des wenigstens einen Bereich des flächigen Dekorelementes, welcher für für den Menschen sichtbares Licht durchscheinend ist, ausgebildet wird. Mit anderen Worten ausgedrückt, wird Licht an Lichtumlenkstrukturen, welche gemeinsam die Form wenigstens eines graphischen Elementes bilden, in die Richtung der Sichtseite des Lichtleiters umgelenkt, wobei das umgelenkte Licht das wenigstens eine graphische Element in der Form von Licht auf der Sichtseite des Lichtleiters und / oder im wenigstens einen Bereich des flächigen Dekorelementes, welcher für für den Menschen sichtbares Licht durchscheinend ist, insbesondere auf der Sichtseite des wenigstens einen Bereich des flächigen Dekorelementes, welcher für für den Menschen sichtbares Licht durchscheinend ist, abbildet. Das graphische Element ist beispielsweise ein Symbol, ein Ornament, ein Buchstaben, ein Schriftzug oder ein Logo.

Nach einer Weiterbildung der Erfindung umfasst das Bauteil wenigstens ein Leuchtmittel, welches benachbart zur Lichteinkoppelfläche des Lichtleiters angeordnet ist zum Einkoppeln von Licht in den Lichtleiter. Beim Leuchtmittel handelt es sich insbesondere um eine oder mehrere Leuchtdioden. Ein mögliches Leuchtmittel ist beispielsweise aber auch eine Leuchtfolie, insbesondere eine Elektrolumineszenzfolie oder OLED, eine Glühbirne oder wenigstens ein weiterer Lichtleiter in welchen Licht über ein weiteres Leuchtmittel eingekoppelt wird.

Nach einer Weiterbildung der Erfindung weist das flächige Dekorelement eine mittlere Dicke von 1 Millimeter oder kleiner auf, bevorzugt eine mittlere Dicke von 0.4 Millimeter oder kleiner auf. Im Falle, dass das flächige Dekorelement aus Metall hergestellt ist, weist das flächige Dekorelement bevorzugt eine mittlere Dicke von 0.1 Millimeter - 0.3 Millimeter auf. Im Falle, dass das flächige Dekorelement aus einem Lack hergestellt ist, weist das flächige Dekorelement bevorzugt eine mittlere Dicke von 1 Mikrometer - 20 Mikrometer auf. Im Falle, dass das flächige Dekorelement aus Kunststoff hergestellt ist, weist das flächige Dekorelement bevorzugt eine mittlere Dicke von 10 Mikrometer - 500 Mikrometer auf. Im Falle, dass das flächige Dekorelement aus wenigstens einer PVD-Schicht hergestellt ist, weist die wenigstens eine PVD-Schicht bevorzugt eine mittlere Dicke von 0.1 Mikrometer - 3 Mikrometer auf.

Nach einer Weiterbildung der Erfindung ist wenigstens eine der wenigstens zwei Lichtumlenkstrukturen als Vertiefung ausgebildet, wobei das Dekorelement wenigstens teilweise in wenigstens eine der wenigstens einen der wenigstens zwei Lichtumlenkstrukturen, welche als Vertiefung ausgebildet ist, eingreift.

Es wird ausserdem eine Anordnung angegeben umfassend wenigstens ein erfindungsgemässes Bauteil, welches wie oben ausgeführt ausgebildet ist, wobei an der Rückseite des flächigen Dekorelementes des erfindungsgemässen Bauteils wenigstens ein erster Lichtleiter, ein zweiter Lichtleiter sowie ein dritter Lichtleiter angeordnet sind, welche übereinander angeordnet sind, wobei der erste Lichtleiter geeignet ist wenigstens einen ersten Teilbereich des wenigstens einen für für den Menschen sichtbares Licht durchscheinenden Bereich des flächigen Dekorelementes des erfindungsgemässen Bauteils, insbesondere einen ersten Teilbereich der Sichtseite des wenigstens einen für für den Menschen sichtbares Licht durchscheinenden Bereich des flächigen Dekorelementes des erfindungsgemässen Bauteils, zu beleuchten, wobei der zweite Lichtleiter geeignet ist wenigstens einen zweiten Teilbereich des wenigstens einen für für den Menschen sichtbares Licht durchscheinenden Bereich des flächigen Dekorelementes des erfindungsgemässen Bauteils, insbesondere einen zweiten Teilbereich der Sichtseite des wenigstens einen für für den Menschen sichtbares Licht durchscheinenden Bereich des flächigen Dekorelementes des erfindungsgemässen Bauteils, zu beleuchten, wobei der dritte Lichtleiter geeignet ist wenigstens einen dritten Teilbereich des wenigstens einen für für den Menschen sichtbares Licht durchscheinenden Bereich des flächigen Dekorelementes des erfindungsgemässen Bauteils, insbesondere einen dritten Teilbereich der Sichtseite des wenigstens einen für für den Menschen sichtbares Licht durchscheinenden Bereich des flächigen Dekorelementes des erfindungsgemässen Bauteils, zu beleuchten, wobei die Anordnung zusätzlich wenigstens ein erstes Leuchtmittel zum Einkoppeln von Licht in den ersten Lichtleiter, ein zweites Leuchtmittel zum Einkoppeln von Licht in den zweiten Lichtleiter sowie ein drittes Leuchtmittel zum Einkoppeln von Licht in den dritten Lichtleiter aufweist sowie Steuermittel zum Steuern wenigstens des ersten Leuchtmittels, des zweiten Leuchtmittels sowie des dritten Leuchtmittels aufweist. Der erste Lichtleiter, der zweite Lichtleiter, der dritte Lichtleiter sowie allfällige weitere Lichtleiter sind Bestandteile des erfindungsgemässen Bauteils der Anordnung. Der erste Lichtleiter, der zweite Lichtleiter, der dritte Lichtleiter sowie bevorzugt allfällige weitere Lichtleiter sind erfindungsgemäss, wie oben beschrieben, ausgebildet. Diese erfindungsgemässe Anordnung bewirkt den Vorteil, dass, aufgrund der wenigstens drei Lichtleiter sowie der wenigstens drei Leuchtmittel wenigstens drei Teilbereiche des wenigstens einen für für den Menschen sichtbares Licht durchscheinenden Bereichs des flächigen Dekorelementes, insbesondere der Sichtseite des wenigstens einen für für den Menschen sichtbares Licht durchscheinenden Bereichs des flächigen Dekorelementes, zeitlich unabhängig voneinander beleuchtbar sind. So können beispielweise der erste Teilbereich sowie der zweite Teilbereich gleichzeitig beleuchtet sein, danach kann beispielsweise nur noch der erste Teilbereich beleuchtet sein und anschliessend kann beispielsweise der erste Teilbereich sowie der dritte Teilbereich beleuchtet sein usw. Die erfindungsgemässe Anordnung kann eine beliebige Anzahl an Lichtleitern sowie eine beliebige Anzahl von Leuchtmitteln, welche den Lichtleitern zugeordnet sein, aufweisen und somit kann eine beliebige Anzahl von Teilbereichen zeitlich unabhängig voneinander beleuchtet werden. Somit können beispielsweise verschiedenste graphische Elemente im wenigstens einen für für den Menschen sichtbares Licht durchscheinenden Bereich des flächigen Dekorelementes des erfindungsgemässen Bauteils, insbesondere auf der Sichtseite des wenigstens einen für für den Menschen sichtbares Licht durchscheinenden Bereich des flächigen Dekorelementes des erfindungsgemässen Bauteils, dargestellt werden und / oder verschiedenste Lichteffekte, wie zum Beispiel verschiedene Mischfarben im wenigstens einen für für den Menschen sichtbares Licht durchscheinenden Bereich des flächigen Dekorelementes des erfindungsgemässen Bauteils, insbesondere auf der Sichtseite des wenigstens einen für für den Menschen sichtbares Licht durchscheinenden Bereich des flächigen Dekorelementes des erfindungsgemässen Bauteils, erzielt werden.

Nach einer Weiterbildung der Erfindung sind die Steuermittel derart ausgestaltet, dass wenigstens zwei Teilbereiche der Gruppe umfassend den ersten Teilbereich des wenigstens einen für für den Menschen sichtbares Licht durchscheinenden Bereich des flächigen Dekorelementes des erfindungsgemässen Bauteils, insbesondere den ersten Teilbereich der Sichtseite des wenigstens einen für für den Menschen sichtbares Licht durchscheinenden Bereich des flächigen Dekorelementes des erfindungsgemässen Bauteils, den zweite Teilbereich des wenigstens einen für für den Menschen sichtbares Licht durchscheinenden Bereich des flächigen Dekorelementes des erfindungsgemässen Bauteils, insbesondere den zweiten Teilbereich der Sichtseite des wenigstens einen für für den Menschen sichtbares Licht durchscheinenden Bereich des flächigen Dekorelementes des erfindungsgemässen Bauteils, sowie den dritten Teilbereich des wenigstens einen für für den Menschen sichtbares Licht durchscheinenden Bereich des flächigen Dekorelementes des erfindungsgemässen Bauteils, insbesondere den dritten Teilbereich der Sichtseite des wenigstens einen für für den Menschen sichtbares Licht durchscheinenden Bereich des flächigen Dekorelementes des erfindungsgemässen Bauteils, zeitlich gleichzeitig oder nacheinander beleuchtbar sind. Dies wird beispielhaft anhand von folgendem Beispiel erläutert:
Beispielsweise ist die erfindungsgemässe Anordnung, umfassend ein Bauteil, im Innenraum eines Kraftfahrzeuges angeordnet, wobei das flächige Dekorelement des Bauteils beispielsweise eine Armaturenbrettabdeckung oder eine Mittelkonsolenabdeckung ist. Diese Anordnung weist einen ersten Lichtleiter sowie ein erstes Leuchtmittel auf, welches geeignet ist, Licht in den ersten Lichtleiter einzukoppeln. Das in den ersten Lichtleiters eingekoppelte Licht wird an den Lichtumlenkstrukturen des ersten Lichtleiters umgelenkt und bildet beispielsweise auf der Sichtseite des flächigen Dekorelementes beispielsweise einen Telefongrundkörper. Die Anordnung weist zudem einen zweiten Lichtleiter sowie ein zweites Leuchtmittel auf, welches geeignet ist, Licht in den zweiten Lichtleiter einzukoppeln. Das in den zweiten Lichtleiter eingekoppelte Licht wird an den Lichtumlenkstrukturen des zweiten Lichtleiters umgelenkt und bildet beispielsweise auf der Sichtseite des flächigen Dekorelementes beispielsweise einen auf den Telefongrundkörper aufgelegten Telefonhörer. Des Weiteren weist die Anordnung einen dritten Lichtleiter sowie ein drittes Leuchtmittel auf, welches geeignet ist, Licht in den dritten Lichtleiter einzukoppeln. Das in den dritten Lichtleiter eingekoppelte Licht wird an den Lichtumlenkstrukturen des dritten Lichtleiters umgelenkt und bildet beispielsweise auf der Sichtseite des flächigen Dekorelementes beispielsweise einen vom Telefongrundkörper abgehobenen Telefonhörer. Zudem weist die Anordnung Steuermittel zum Steuern des ersten Leuchtmittels, des zweiten Leuchtmittels sowie des dritten Leuchtmittels auf, so dass wenigstens zwei Teilbereiche der Gruppe umfassend den ersten Teilbereich der Sichtseite des flächigen Dekorelementes, welcher beispielsweise den Telefongrundkörper bildet, den zweite Teilbereich der Sichtseite des flächigen Dekorelementes, welcher beispielsweise den auf den Telefongrundkörper aufgelegten Telefonhörer bildet, sowie den dritten Teilbereich der Sichtseite des flächigen Dekorelementes, welcher beispielsweise den vom Telefongrundkörper abgehobenen Telefonhörer bildet, zeitlich gleichzeitig oder nacheinander beleuchtbar sind. Das oben genannte Bauteil sowie der oben genannte erste Lichtleiter, zweite Lichtleiter sowie dritte Lichtleiter sind Bestandteile der erfindungsgemässen Anordnung und somit sind das Bauteil, der erste Lichtleiter, der zweite Lichtleiter sowie der dritte Lichtleiter erfindungsgemäss, wie oben ausgeführt, ausgebildet. In der Grundstellung dieser beispielhaften Anordnung sorgen die Steuermittel dazu, dass zuerst das erste sowie das zweite Leuchtmittel mit elektrischem Strom versorgt werden. Somit leuchten der Telefongrundkörper sowie der auf den Telefongrundkörper aufgelegte Telefonhörer auf der Sichtseite des flächigen Dekorelementes auf. Wird nun ein Telefonanruf empfangen, unterbrechen die Steuermittel der Anordnung die Zufuhr des elektrischen Stroms zum zweiten Leuchtmittel, so dass der auf den Telefongrundkörper aufgelegte Telefonhörer auf der Sichtseite der flächigen Dekorelementes erlischt. Gleichzeitig mit dem Erlöschen des aufgelegten Telefonhörers oder zeitlich danach, versorgen die Steuermittel der Anordnung das dritte Leuchtmittel mit elektrischem Strom und es leuchten somit der Telefongrundkörper sowie der vom Telefongrundkörper abgehobene Telefonhörer auf der Sichtseite des flächigen Dekorelementes auf. Ist das Telefongespräch beendet, so wird die Zufuhr von elektrischem Strom von den Steuermitteln der Anordnung zum dritten Leuchtelement unterbrochen und das zweite Leuchtelement wird wieder mit elektrischem Strom versorgt, so dass der Telefongrundkörper wieder gemeinsam mit dem auf dem Telefongrundkörper aufgelegten Telefonhörer auf der Sichtseite des flächigen Dekorelementes aufleuchten. Analog zu diesem Beispiel betreffend den Funktionszustand eines Telefons, kann beispielsweise die Schliessposition eines Schlosses einer Tür eines Kraftfahrzeuges, d.h. "Schloss geschlossen" bzw. "Schloss offen", dargestellt werden. Die visuelle Darstellung von verschiedensten Funktionszuständen, beispielsweise eines Kraftfahrzeuges oder eines Haushaltsgerätes, sind möglich.

Nach einer Weiterbildung der Erfindung sind bei der Anordnung wenigstens der erste Teilbereich, der zweite Teilbereich, sowie der dritte Teilbereich beleuchtbar, wobei wenigstens einer dieser wenigstens drei Teilbereiche mit wenigstens einem weiteren dieser wenigstens drei Teilbereiche wenigstens teilweise überlappt. Diese Ausführungsform bewirkt den Vorteil, dass im Überlappungsbereich der Teilbereiche, Lichteffekte, wie zum Beispiel verschiedenste Mischfarben erzeugbar sind. Überlappen sich beispielsweise der erste Teilbereich und der zweite Teilbereich und sendet beispielsweise das erste Leuchtmittel beispielsweise eine gelbes Licht aus und das zweite Leuchtmittel sendet beispielsweise ein blaues Licht aus, so entsteht im Überlappungsbereich des ersten Teilbereiches und des zweiten Teilbereiches eine Mischfarbe aus dem genannten gelben Licht sowie dem genannten blauen Licht.

Nach einer Weiterbildung der Erfindung sind bei der Anordnung wenigstens der erste Teilbereich, der zweite Teilbereich, sowie der dritte Teilbereich beleuchtbar, wobei wenigstens einer dieser wenigstens drei Teilbereiche vollständig von wenigstens einem weiteren dieser wenigstens drei Teilbereiche beabstandet ist.

Es wird ausserdem ein Kraftfahrzeug umfassend wenigstens eine erfindungsgemässe Anordnung, welche wie oben ausgeführt ausgebildet ist, angegeben.

Zudem wird ein Verfahren zum Steuern der erfindungsgemässen Anordnung, welche wie oben ausgeführt ausgebildet ist, angegeben, zur Darstellung zweier Funktionszustände, insbesondere eines Kraftfahrzeuges oder insbesondere eines Haushaltsgerätes, umfassend folgende Schritte:
Die Steuermittel der Anordnung steuern die Zufuhr von elektrischem Strom wenigstens zum ersten Leuchtmittel, dem zweiten Leuchtmittel sowie dem dritten Leuchtmittel derart, dass der wenigstens eine für für den Menschen sichtbares Licht durchscheinende Bereich des flächigen Dekorelementes wenigstens gemäss einer ersten Variante oder gemäss einer zweiten Variante oder gemäss einer dritten Variante oder gemäss einer vierten Variante oder gemäss einer fünften Variante oder gemäss einer sechsten Variante beleuchtet wird,
wobei die erste Variante folgende Verfahrensschritte umfasst:
- Der erste Teilbereich sowie der zweite Teilbereich werden gleichzeitig beleuchtet;
- danach wird der erste Teilbereich nicht mehr beleuchtet, wobei der zweite Teilbereich weiterhin beleuchtet wird und der dritte Teilbereich zusätzlich zum bereits beleuchteten zweiten Teilbereich beleuchtet wird;
- danach wird der dritte Teilbereich nicht mehr beleuchtet, wobei der zweite Teilbereich weiterhin beleuchtet wird und der erste Teilbereich zusätzlich zum bereits beleuchteten zweiten Teilbereich wieder beleuchtet wird;
wobei die zweite Variante folgende Verfahrensschritte umfasst:
- Der erste Teilbereich sowie der zweite Teilbereich werden gleichzeitig beleuchtet;
- danach wird der zweite Teilbereich nicht mehr beleuchtet, wobei der erste Teilbereich weiterhin beleuchtet wird und der dritte Teilbereich zusätzlich zum bereits beleuchteten ersten Teilbereich beleuchtet wird;
- danach wird der dritte Teilbereich nicht mehr beleuchtet, wobei der erste Teilbereich weiterhin beleuchtet wird und der zweite Teilbereich zusätzlich zum bereits beleuchteten ersten Teilbereich wieder beleuchtet wird;
wobei die dritte Variante folgende Verfahrensschritte umfasst:
- Der erste Teilbereich sowie der dritte Teilbereich werden gleichzeitig beleuchtet;
- danach wird der erste Teilbereich nicht mehr beleuchtet, wobei der dritte Teilbereich weiterhin beleuchtet wird und der zweite Teilbereich zusätzlich zum bereits beleuchteten dritten Teilbereich beleuchtet wird;
- danach wird der zweite Teilbereich nicht mehr beleuchtet, wobei der dritte Teilbereich weiterhin beleuchtet wird und der erste Teilbereich zusätzlich zum bereits beleuchteten dritten Teilbereich wieder beleuchtet wird;
wobei die vierte Variante folgende Verfahrensschritte umfasst:
- Der erste Teilbereich sowie der dritte Teilbereich werden gleichzeitig beleuchtet;
- danach wird der dritte Teilbereich nicht mehr beleuchtet, wobei der erste Teilbereich weiterhin beleuchtet wird und der zweite Teilbereich zusätzlich zum bereits beleuchteten ersten Teilbereich beleuchtet wird;
- danach wird der zweite Teilbereich nicht mehr beleuchtet, wobei der erste Teilbereich weiterhin beleuchtet wird und der dritte Teilbereich zusätzlich zum bereits beleuchteten ersten Teilbereich wieder beleuchtet wird;
wobei die fünfte Variante folgende Verfahrensschritte umfasst:
- Der zweite Teilbereich sowie der dritte Teilbereich werden gleichzeitig beleuchtet;
- danach wird der zweite Teilbereich nicht mehr beleuchtet, wobei der dritte Teilbereich weiterhin beleuchtet wird und der erste Teilbereich zusätzlich zum bereits beleuchteten dritten Teilbereich beleuchtet wird;
- danach wird der erste Teilbereich nicht mehr beleuchtet, wobei der dritte Teilbereich weiterhin beleuchtet wird und der zweite Teilbereich zusätzlich zum bereits beleuchteten dritten Teilbereich wieder beleuchtet wird;
wobei die sechste Variante folgende Verfahrensschritte umfasst:
- Der zweite Teilbereich sowie der dritte Teilbereich werden gleichzeitig beleuchtet;
- danach wird der dritte Teilbereich nicht mehr beleuchtet, wobei der zweite Teilbereich weiterhin beleuchtet wird und der erste Teilbereich zusätzlich zum bereits beleuchteten zweiten Teilbereich beleuchtet wird;
- danach wird der erste Teilbereich nicht mehr beleuchtet, wobei der zweite Teilbereich weiterhin beleuchtet wird und der dritte Teilbereich zusätzlich zum bereits beleuchteten zweiten Teilbereich wieder beleuchtet wird.

Nach einer Weiterbildung des Verfahrens weist die Anordnung, zusätzlich zum ersten Leuchtmittel, dem zweiten Leuchtmittel sowie dem dritten Leuchtmittel, wenigstens ein weiteres Leuchtmittel auf zur Beleuchtung wenigstens eines weiteren Teilbereich des wenigstens einen für für den Menschen sichtbares Licht durchscheinende Bereich des flächigen Dekorelementes, wobei die Stromzufuhr zum wenigstens einen weiteren Leuchtmittel mittels der Steuermittel steuerbar ist.

Zudem wird ein Kraftfahrzeug umfassend wenigstens einen erfindungsgemässen Lichtleiter, welcher wie oben ausgeführt ausgebildet ist, angegeben.

Es wird ausserdem ein Kraftfahrzeug umfassend wenigstens ein erfindungsgemässes Bauteil, welches wie oben ausgeführt ausgebildet ist, angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

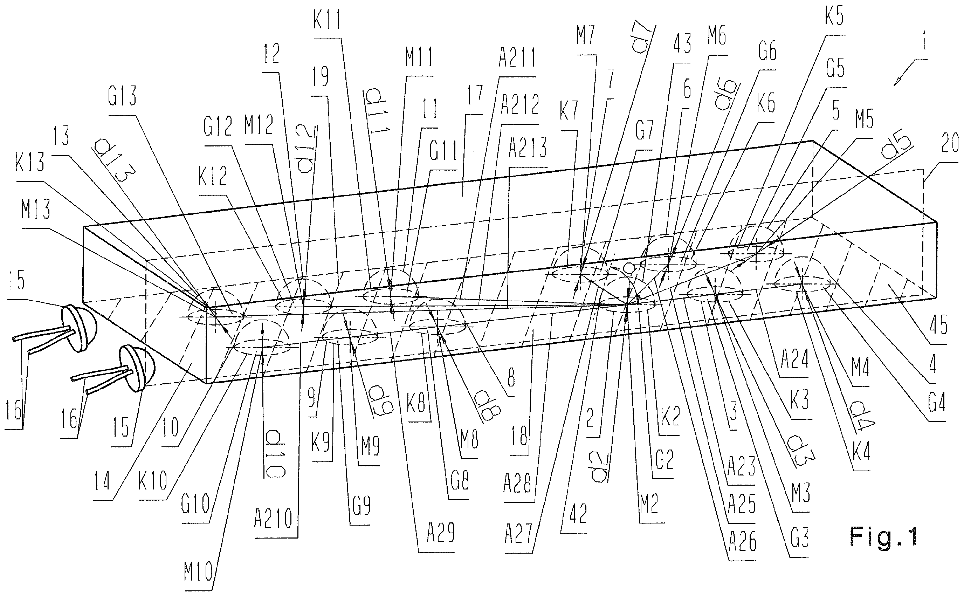

- Fig. 1: schematisch eine räumliche Ansicht einer ersten Ausführungsform des erfindungsgemässen Lichtleiters, wobei der Lichtleiter als Vertiefungen ausgebildete Lichtumlenkstrukturen aufweist, wobei diese Lichtumlenkstrukturen stark vergrössert dargestellt sind;

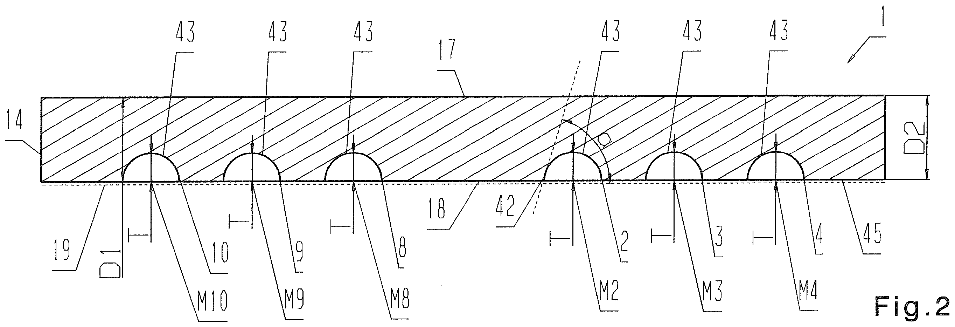

- Fig. 2: den erfindungsgemässen Lichtleiter gemäss Figur 1 in einem Längsschnitt durch eine in Figur 1 dargestellte Schnittebene;

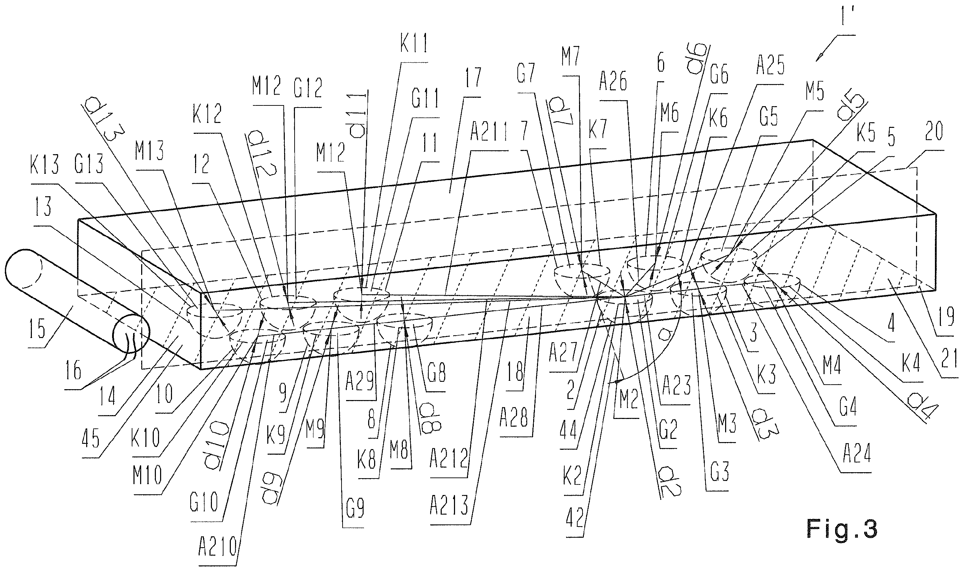

- Fig. 3: schematisch eine räumliche Ansicht einer zweiten Ausführungsform des erfindungsgemässen Lichtleiters, wobei der Lichtleiter als Erhebungen ausgebildete Lichtumlenkstrukturen aufweist, wobei die Lichtumlenkstrukturen des Lichtleiters stark vergrössert dargestellt sind;

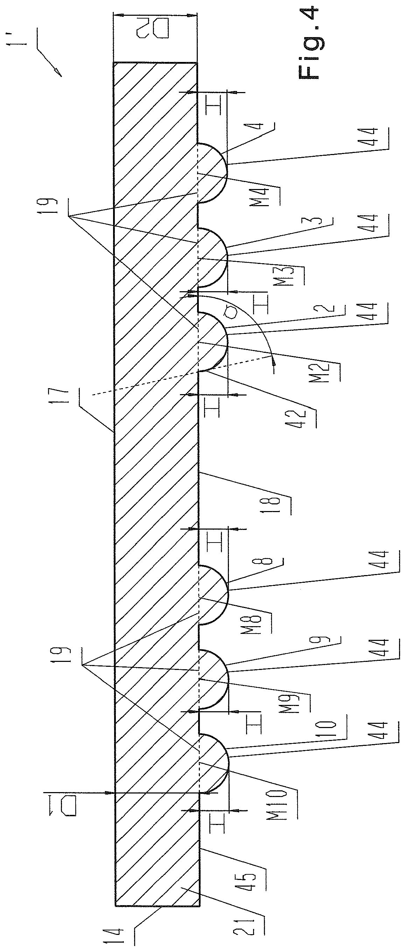

- Fig. 4: schematisch einen Längsschnitt durch den Lichtleiter gemäss Figur 3 entsprechend einer in der Figur 3 dargestellten Schnittebene;

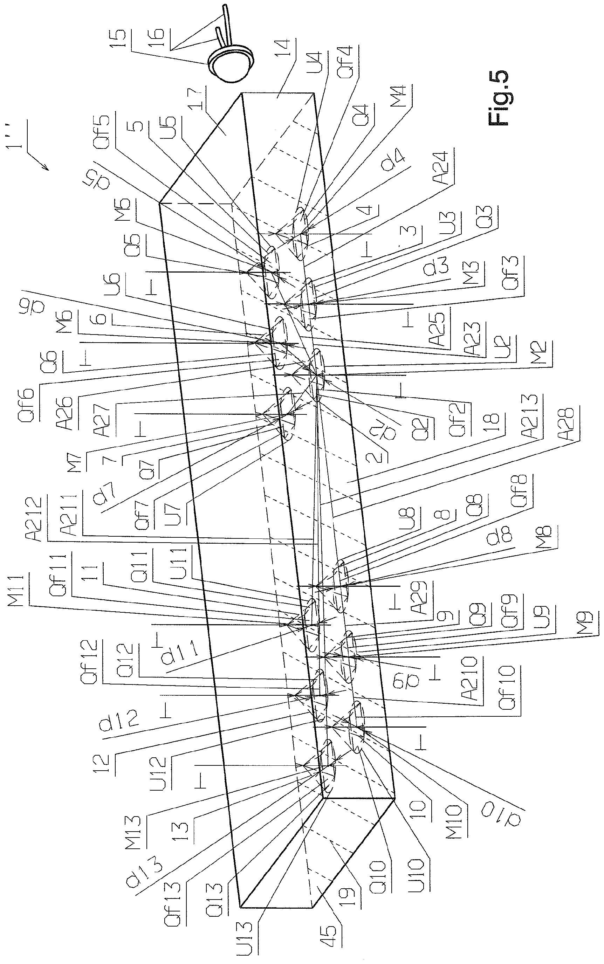

- Fig. 5: schematisch eine räumliche Ansicht einer dritten Ausführungsform des erfindungsgemässen Lichtleiters, wobei der Lichtleiter als Vertiefungen ausgebildete Lichtumlenkstrukturen aufweist, wobei diese Lichtumlenkstrukturen stark vergrössert dargestellt sind;

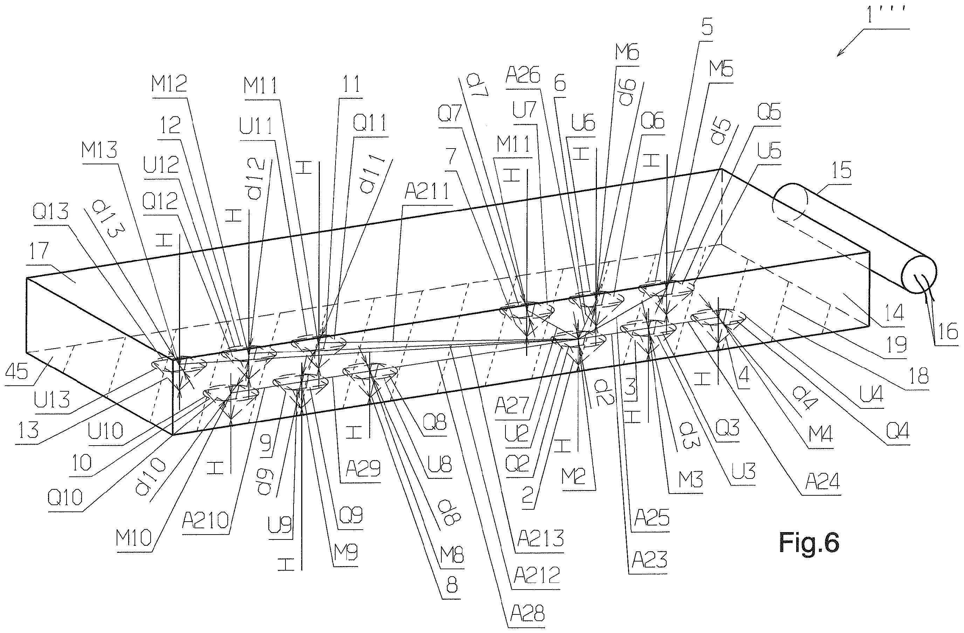

- Fig. 6: schematisch eine räumliche Ansicht einer vierten Ausführungsform des erfindungsgemässen Lichtleiters, wobei der Lichtleiter als Erhebungen ausgebildete Lichtumlenkstrukturen aufweist, wobei diese Lichtumlenkstrukturen stark vergrössert dargestellt sind;

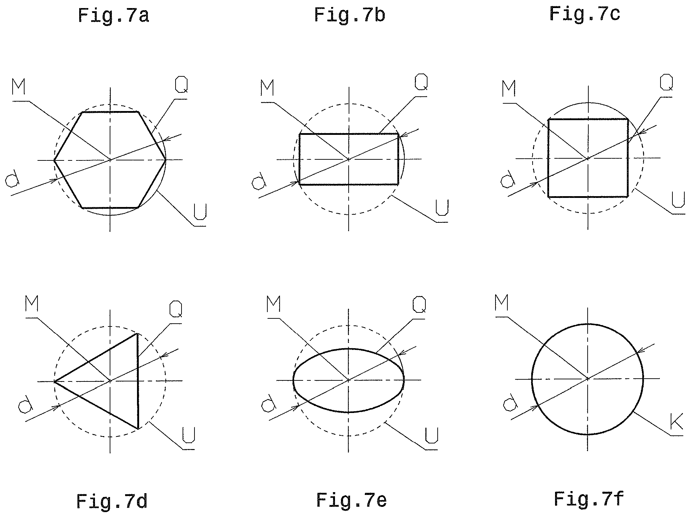

- Fig. 7a-7f: schematisch sowie stark vergrössert verschiedene Ausführungsformen des Querschnittes einer Lichtumlenkstruktur eines erfindungsgemässen Lichtleiters in einer Fläche, wobei die Fläche durch eine Sichtfläche des erfindungsgemässen Lichtleiters definiert wird, welche einer Rückseite des Lichtleiters gegenüberliegt;

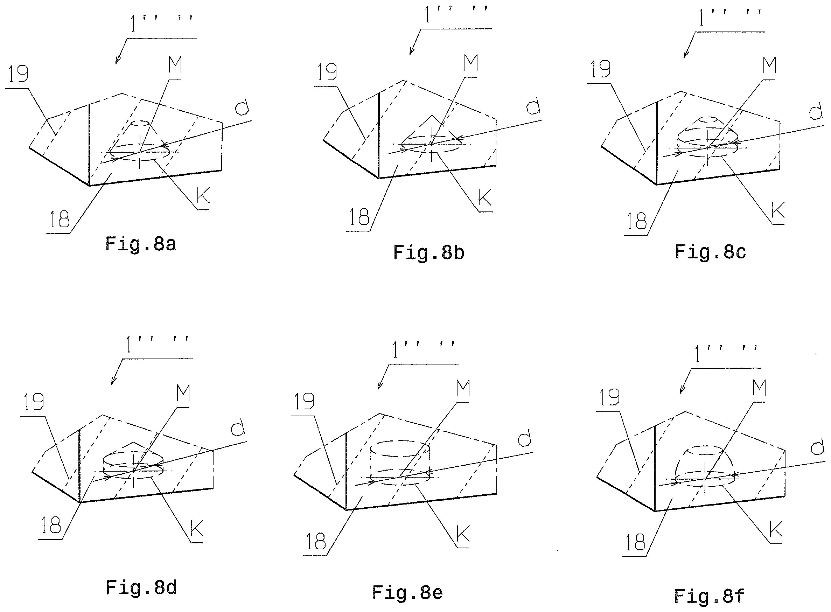

- Fig. 8a-8f: schematisch sowie stark vergrössert jeweils einen Abschnitt einer fünften Ausführungsform des erfindungsgemässen Lichtleiters, wobei ein jeweiliger Abschnitt jeweils schematisch dargestellt eine Ausführungsform einer als Vertiefung im Lichtleiter ausgebildeten und stark vergrössert dargestellten Lichtumlenkstruktur aufweist, wobei die in den Figuren 8a-8f dargestellten Vertiefungen in einer Fläche, welche durch eine Sichtfläche des Lichtleiters definiert ist und welche einer Rückseite des Lichtleiters gegenüberliegt, jeweils einen Querschnitt aufweisen, welcher als Kreis ausgebildet ist;

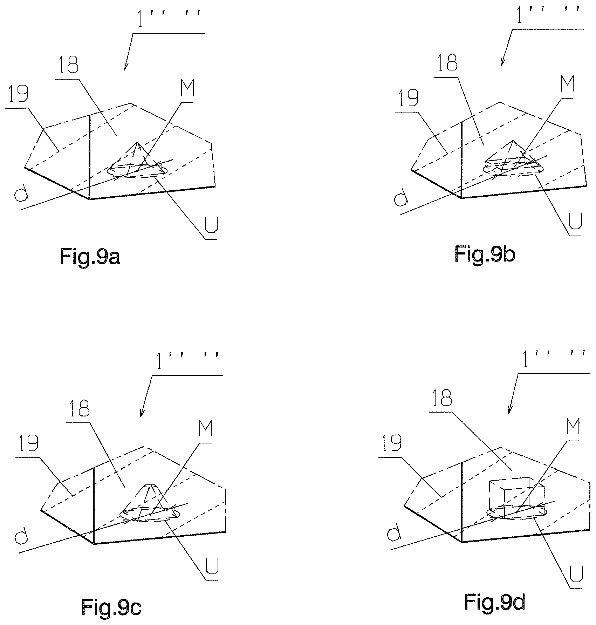

- Fig. 9a-9i: jeweils den Abschnitt des erfindungsgemässen Lichtleiters gemäss der Figur 8a, wobei ein jeweiliger Abschnitt, anstatt der Vertiefung gemäss der Figur 8a, jeweils schematisch dargestellt eine Ausführungsform von einer im Lichtleiter als Vertiefung ausgebildeten und stark vergrössert dargestellten Lichtumlenkstruktur aufweist, wobei der Querschnitt dieser jeweiligen Vertiefung in der Fläche als Vieleck ausgebildet ist;

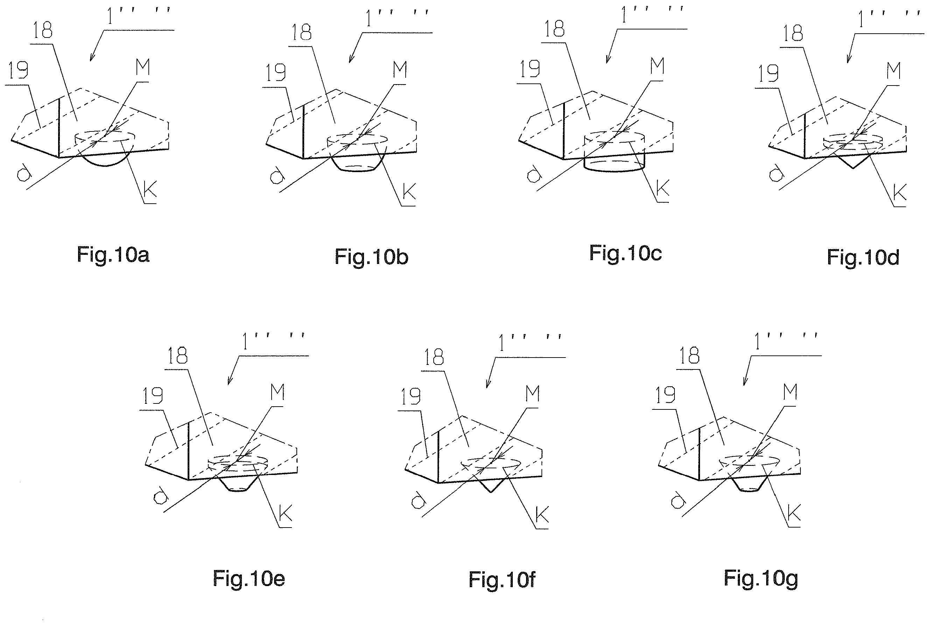

- Fig. 10a-10g: jeweils den Abschnitt des erfindungsgemässen Lichtleiters gemäss der Figur 8a, wobei ein jeweiliger Abschnitt, anstatt der Vertiefung gemäss der Figur 8a, jeweils schematisch dargestellt eine Ausführungsform von einer als Erhebung ausgebildeten und stark vergrössert dargestellten Lichtumlenkstruktur aufweist, wobei der Querschnitt dieser jeweiligen Erhebung in der Fläche als Kreis ausgebildet ist;

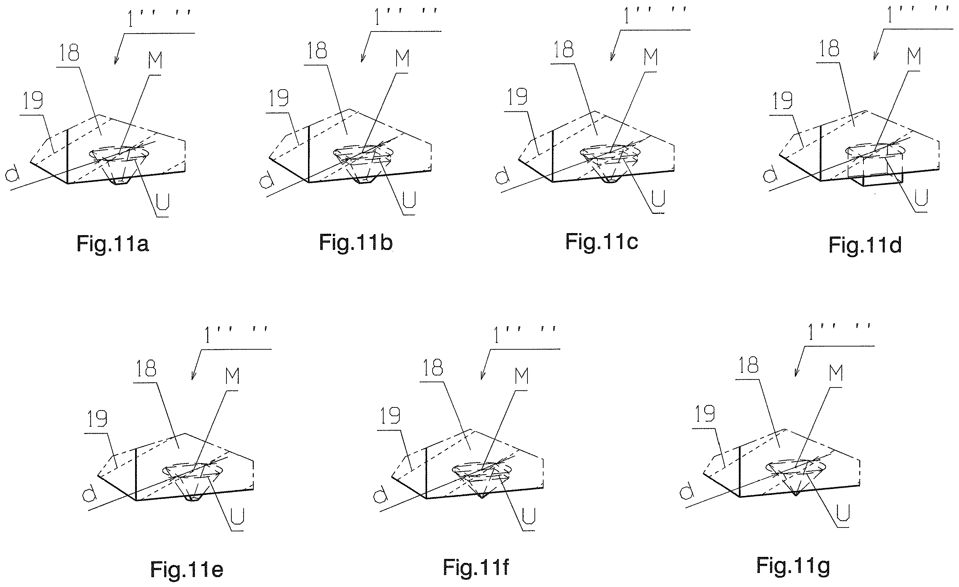

- Fig. 11a-11g: jeweils den Abschnitt des erfindungsgemässen Lichtleiters gemäss der Figur 8a, wobei ein jeweiliger Abschnitt, anstatt der Vertiefung gemäss der Figur 8a, jeweils schematisch dargestellt eine Ausführungsform von einer als Erhebung ausgebildeten und stark vergrössert dargestellten Lichtumlenkstruktur aufweist, wobei der Querschnitt dieser jeweiligen Erhebung in der Fläche als Vieleck ausgebildet ist;

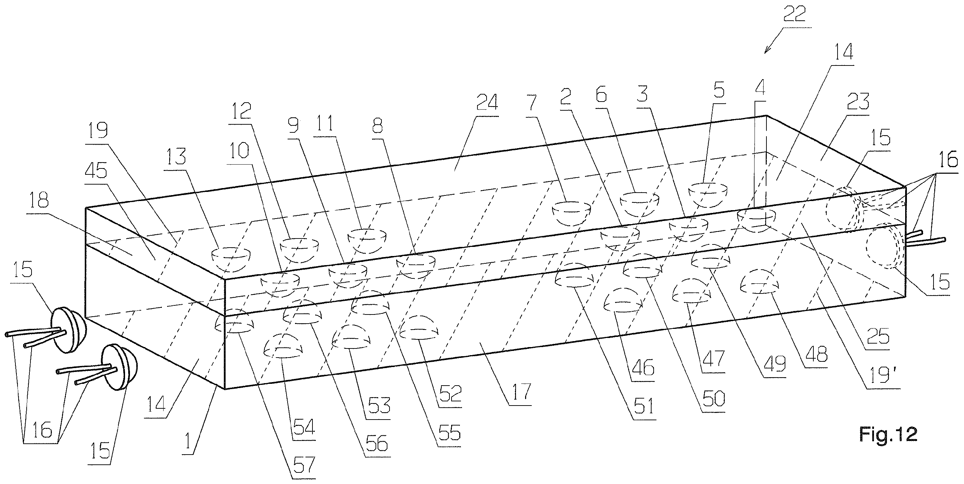

- Fig. 12: schematisch eine räumliche Ansicht einer ersten Ausführungsform eines erfindungsgemässen Bauteils umfassend die erste Ausführungsform des erfindungsgemässen Lichtleiters gemäss den Figuren 1, 2 wobei die in Figur 12 dargestellte erste Ausführungsform des erfindungsgemässen Lichtleiters, im Gegensatz zur in Figur 1 dargestellten ersten Ausführungsform des erfindungsgemässen Lichtleiters, noch zusätzliche Lichtumlenkstrukturen sowie eine weitere Lichteinkoppelfläche aufweist;

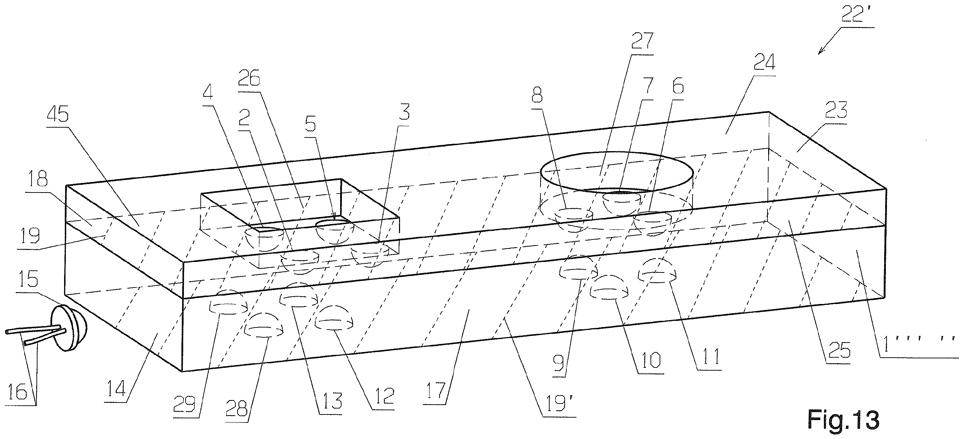

- Fig. 13: schematisch eine räumliche Ansicht einer zweiten Ausführungsform des erfindungsgemässen Bauteils umfassend eine sechste Ausführungsform des erfindungsgemässen Lichtleiters, wobei der Lichtleiter als Vertiefungen ausgebildete Lichtumlenkstrukturen aufweist, wobei diese Lichtumlenkstrukturen stark vergrössert dargestellt sind;

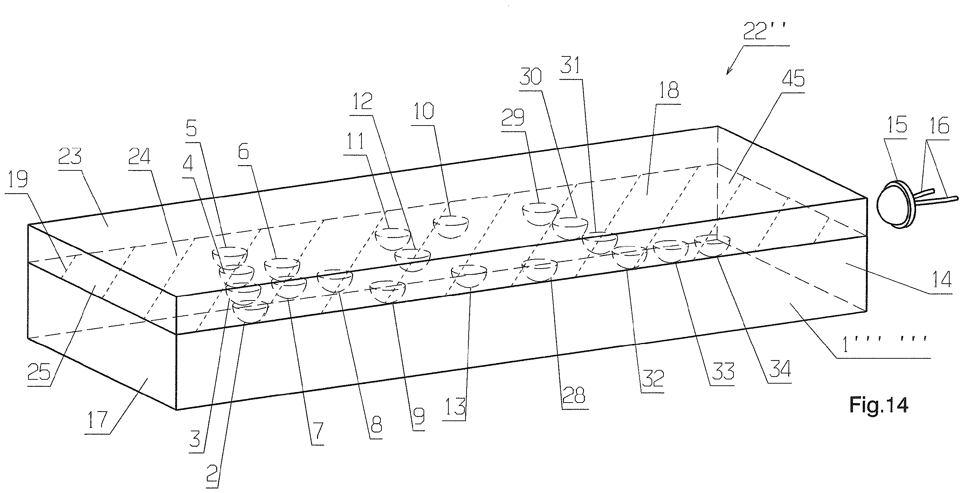

- Fig. 14: schematisch eine räumliche Ansicht einer dritten Ausführungsform des erfindungsgemässen Bauteils umfassend eine siebte Ausführungsform des erfindungsgemässen Lichtleiters, wobei der Lichtleiter als Vertiefungen ausgebildete Lichtumlenkstrukturen aufweist, wobei diese Lichtumlenkstrukturen stark vergrössert dargestellt sind;

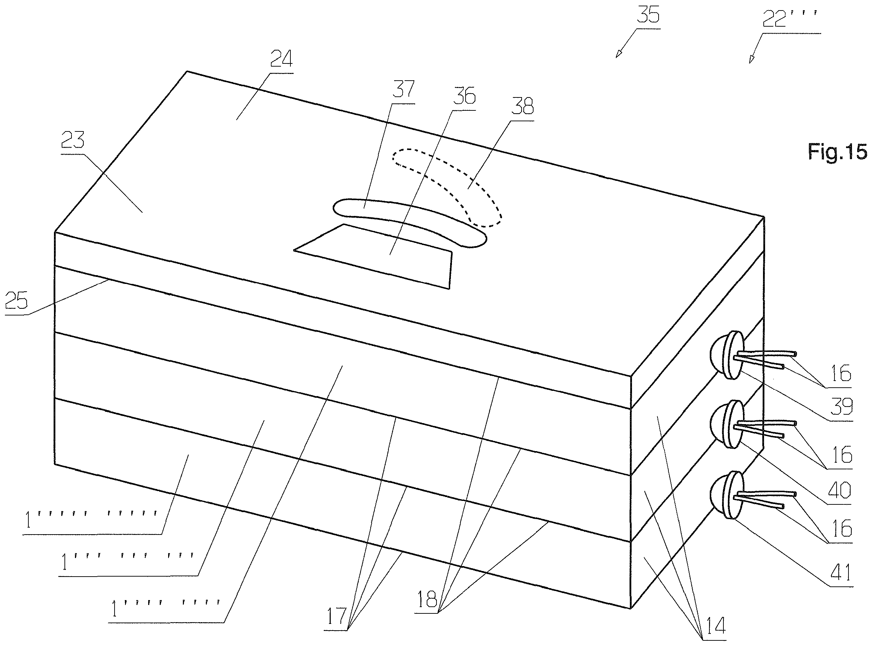

- Fig. 15: schematisch eine räumliche Ansicht einer Anordnung umfassend eine vierten Ausführungsform des erfindungsgemässen Bauteils, wobei dieses Bauteil eine achte, neunte sowie zehnte Ausführungsform des erfindungsgemässen Lichtleiters umfasst; sowie

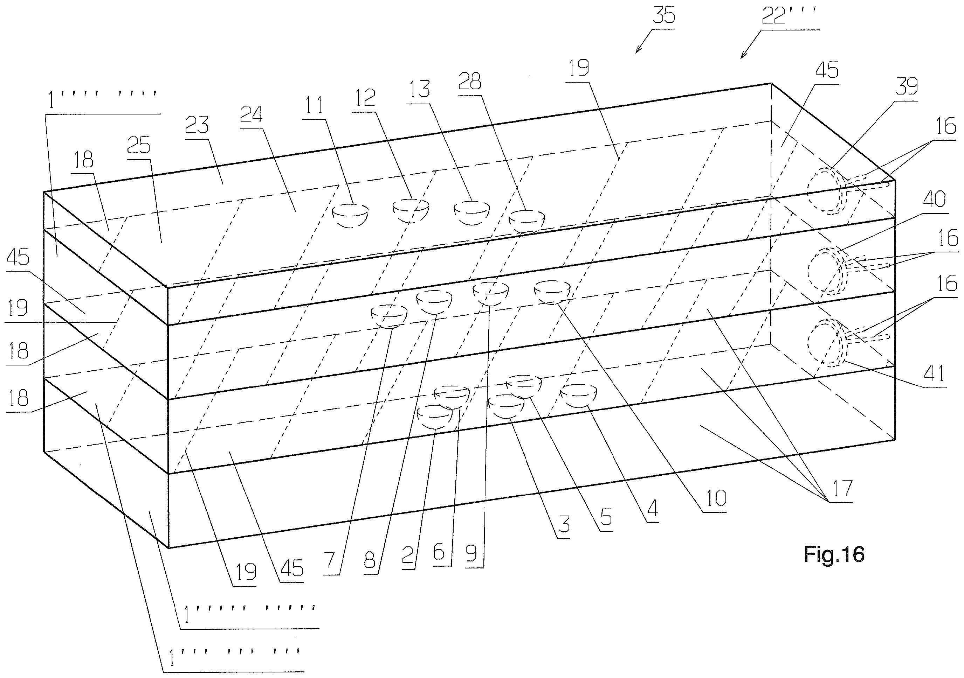

- Fig. 16: schematisch eine räumliche Ansicht der Anordnung gemäss Figur 15, wobei in der Figur 16 die Lichtumlenkstrukturen der erfindungsgemässen Lichtleiter stark vergrössert dargestellt sind.

### BESCHREIBUNG BEVORZUGTER AUSFÜHRUNGSFORMEN

Bei den im Folgenden in den Figuren 1 bis 16 gezeigten Ausführungsformen sind gleiche, ähnliche oder ähnlich wirkende Merkmale jeweils mit den gleichen Bezugszeichen versehen.

Die Figur 1 zeigt schematisch eine räumliche Ansicht einer ersten Ausführungsform des erfindungsgemässen Lichtleiters. Der quaderförmig ausgestaltete Lichtleiter 1 gemäss Figur 1 umfasst die Lichtumlenkstrukturen 2, 3, 4, 5, 6, 7, 8, 9, 10, 11, 12, 13. Die Lichtumlenkstrukturen 2, 3, 4, 5, 6, 7 sowie die Lichtumlenkstrukturen 8, 9, 10, 11, 12, 13 bilden je eine rechteckige Insel, wobei die beiden Inseln voneinander beabstandet sind. Wie in Figur 1 dargestellt, sind benachbart zu einer Lichteinkoppelfläche 14 des Lichtleiters 1 zwei Leuchtmittel 15, welche als Leuchtdioden ausgestaltet sind, angeordnet, welche über Kabel 16 mit einer nicht dargestellten Quelle verbunden sind, welche den beiden Leuchtmitteln 15 elektrischen Strom zuführt. Die beiden Leuchtmittel 15 emittieren Licht welches über die Lichteinkoppelfläche 14 in den Lichtleiter 1 eingekoppelt wird. Das in den Lichtleiter 1 eingekoppelte Licht pflanzt sich im Lichtleiter 1 durch Totalreflexion fort. Das sich im Lichtleiter 1 fortpflanzende Licht wird an den Lichtumlenkstrukturen 2, 3, 4, 5, 6, 7, 8, 9, 10, 11, 12, 13 umgelenkt und über die Lichtumlenkstrukturen 2, 3, 4, 5, 6, 7, 8, 9, 10, 11, 12, 13 und/oder über eine Sichtfläche 18 des Lichtleiters 1 aus dem Lichtleiter 1 ausgekoppelt. Die Lichtumlenkstrukturen 2, 3, 4, 5, 6, 7, 8, 9, 10, 11, 12, 13 sowie die Sichtfläche 18 bilden gemeinsam eine Sichtseite 45 des Lichtleiters 1, über welche Sichtseite 45 somit Licht aus dem Lichtleiter 1 auskoppelbar ist. Der Lichtleiter 1 umfasst zudem eine der Sichtfläche 18 gegenüberliegende Rückseite 17. Die Sichtfläche 18 definiert, wie in den Figuren 1 und 2 ersichtlich, eine schraffierte Fläche 19, von welcher sich die Lichtumlenkstrukturen 2, 3, 4, 5, 6, 7, 8, 9, 10, 11, 12, 13, welche alle als halbkugelförmige Vertiefungen im Lichtleiter 1 ausgebildet sind, zur Rückseite 17 hinerstrecken. Die Rückseite 17 ist parallel zur Sichtfläche 18 angeordnet. Die Figur 2 zeigt den Lichtleiter 1 gemäss Figur 1 in einem Längsschnitt durch die in Figur 1 sichtbare Schnittebene 20, welche sich durch die Lichtumlenkstrukturen 2, 3, 4, 8, 9, 10 hindurcherstreckt.

Wie in Figur 1 ersichtlich, entspricht die schraffierte Fläche 19 ausserhalb der Lichtumlenkstrukturen 2, 3, 4, 5, 6, 7, 8, 9, 10, 11, 12, 13 der Sichtfläche 18 des Lichtleiters 1. Im Bereich der Lichtumlenkstrukturen 2, 3, 4, 5, 6, 7, 8, 9, 10, 11, 12, 13 bildet die Fläche 19 eine als Kreisfläche ausgebildete Grundfläche der Lichtumlenkstrukturen 2, 3, 4, 5, 6, 7, 8, 9, 10, 11, 12, 13, von welcher sich die Lichtumlenkstrukturen 2, 3, 4, 5, 6, 7, 8, 9, 10, 11, 12, 13, welche alle als halbkugelförmige Vertiefungen im Lichtleiter 1 ausgebildet sind, zur Rückseite 17 hinerstrecken. Somit weist beispielsweise die Lichtumlenkstruktur 2 in der Fläche 19 eine Grundfläche und somit einen der Grundfläche entsprechenden als Kreis K2 ausgebildeten Querschnitt auf, welcher Kreis K2 eine Kreisfläche G2 aufweist, wobei sich die Lichtumlenkstruktur 2 vom genannten Kreis K2 bzw. von der Fläche 19 in Richtung der Rückseite 17 erstreckt. Diese Definition bezüglich Lichtumlenkstruktur 2 gilt analog auch für die weiteren Lichtumlenkstrukturen 3, 4, 5, 6, 7, 8, 9, 10, 11, 12, 13 des Lichtleiters 1. Somit weist beispielsweise die Lichtumlenkstruktur 11 in der Fläche 19 einen als Kreis K11 ausgebildeten Querschnitt auf, wobei der Kreis K11 eine Kreisfläche G11 aufweist und wobei sich die Lichtumlenkstruktur 11 vom genannten Kreis K11 in Richtung der Rückseite 17 erstreckt. Der Lichtleiter 1 umfasst somit die Lichtumlenkstrukturen 2, 3, 4, 5, 6, 7, 8, 9, 10, 11, 12, 13, welche alle einen in der Fläche 19 angeordneten Querschnitt aufweisen. Da die Fläche 19, wie bereits im Zusammenhang mit Figur 1 erwähnt, ausserhalb der Lichtumlenkstrukturen 2, 3, 4, 5, 6, 7, 8, 9, 10, 11, 12, 13 der Sichtfläche 18 des Lichtleiter 1 entspricht sowie im Bereich der Lichtumlenkstrukturen 2, 3, 4, 5, 6, 7, 8, 9, 10, 11, 12, 13 die Grundflächen bzw. die als Kreise K2, K3, K4, K5, K6, K7, K8, K9, K10, K11, K12, K13 ausgebildeten Querschnitte mit den entsprechenden Kreisflächen G2, G3, G4, G5, G6, G7, G8, G9, G10, G11, G12, G13 der Lichtumlenkstrukturen 2, 3, 4, 5, 6, 7, 8, 9, 10, 11, 12, 13 des Lichtleiters 1 bildet, ist die Fläche 19 in Figur 2 eigentlich nicht ersichtlich, da die in Figur 1 mit gestrichelten Linien dargestellte Fläche 19 mit der Sichtfläche 18, welche in Figur 2 mit einer durchgezogenen Linie dargestellt ist, übereinander fällt. Um die Fläche 19 in Figur 2 trotzdem sichtbar zu machen, ist unterhalb der Sichtfläche 18 die Fläche 19 mit einer gestrichelten Linie dargestellt. In den Figuren 1, 2 ist erkennbar, dass sich der Querschnitt der Lichtumlenkstrukturen 2, 3, 4, 5, 6, 7, 8, 9, 10, 11, 12, 13 von der Fläche 19 in Richtung der Rückseite 17 kontinuierlich verjüngt.

Zur weiteren Beschreibung des Lichtleiters 1 gemäss den Figuren 1, 2 wird folgende Nomenklatur sowie werden folgende Definitionen festgelegt:
- Sämtliche Lichtumlenkstrukturen bzw. halbkugelförmigen Vertiefungen des Lichtleiters 1, bzw. die Lichtumlenkstrukturen 2, 3, 4, 5, 6, 7, 8, 9, 10, 11, 12, 13, sind zueinander identisch ausgebildet;
- Die Lichtumlenkstruktur 2 in der Fläche 19 weist einen Querschnitt auf, welcher als der Kreis K2 mit der Kreisfläche G2 ausgebildet ist, wobei der Kreis K2 einen Durchmesser d2 sowie einen Mittelpunkt M2 aufweist. Diese bezüglich der Lichtumlenkstruktur 2 beschriebene Nomenklatur gilt analog auch für die Lichtumlenkstrukturen 3, 4, 5, 6, 7, 8, 9, 10, 11, 12, 13. Somit weist beispielsweise die Lichtumlenkstruktur 11 in der Fläche 19 einen Querschnitt auf, welcher als der Kreis Kl1 mit der Kreisfläche G11 ausgebildet ist, wobei der Kreis K11 einen Durchmesser d11 sowie einen Mittelpunkt M11 aufweist.

Wie schon erwähnt, sind die Lichtumlenkstrukturen 2, 3, 4, 5, 6, 7, 8, 9, 10, 11, 12, 13 identisch ausgebildet. Somit sind die Querschnitte der Lichtumlenkstrukturen 2, 3, 4, 5, 6, 7, 8, 9, 10, 11, 12, 13 in der Fläche 19 als identische Kreise ausgebildet und es gilt Folgendes bezüglich des Durchmessers d sowie der Kreisflächen G der als Kreis ausgebildeten Querschnitte der Lichtumlenkstrukturen 2, 3, 4, 5, 6, 7, 8, 9, 10, 11, 12, 13 in der Fläche 19:
- d2 = d3 = d4 = d5 = d6 = d7 = d8 = d9 = d10 = d11 = d12 = d13
- G2 = G3 = G4 = G5 = G6 = G7 = G8 = G9 = G10 = G11 = G12 = G13

Erfindungsgemäss liegt nun der Durchmesser d der als Kreis ausgebildeten Querschnitte der Lichtumlenkstrukturen 2, 3, 4, 5, 6, 7, 8, 9, 10, 11, 12, 13 des Lichtleiters 1 in der Fläche 19 im Bereich von grösser als 0 Mikrometer bis 50 Mikrometer, wobei der Mittelpunkt des Kreises in der Fläche 19 einer jeweiligen Lichtumlenkstruktur der Lichtumlenkstrukturen 2, 3, 4, 5, 6, 7, 8, 9, 10, 11, 12, 13 zum Mittelpunkt des Kreises in der Fläche 19 sämtlicher weiteren Lichtumlenkstrukturen des Lichtleiters einen Abstand A aufweist, wobei der Abstand A grösser als der Durchmesser d des Kreises der jeweiligen Lichtumlenkstruktur geteilt durch den Wert 0.33 ist. Diese erfindungsgemässe Regel wird nun genauer erläutert:
In einem ersten Schritt wird nun beispielsweise die Lichtumlenkstruktur 2 als die jeweilige Lichtumlenkstruktur festgelegt. Die Lichtumlenkstruktur 2 weist, wie schon erwähnt, in der Fläche 19 einen Querschnitt auf, welcher als der Kreis K2 mit der Kreisfläche G2 ausgebildet ist, wobei der Kreis K2 einen Durchmesser d2 sowie einen Mittelpunkt M2 aufweist. Da die Lichtumlenkstruktur 2 als die jeweilige Lichtumlenkstruktur festgelegt worden ist, sind die Lichtumlenkstrukturen 3, 4, 5, 6, 7, 8, 9, 10, 11, 12, 13 die oben erwähnten sämtlichen weiteren Lichtumlenkstrukturen des Lichtleiters 1. Erfindungsgemäss weist der Mittelpunkt M2 des Kreises K2 in der Fläche 19 der Lichtumlenkstruktur 2 zum Mittelpunkt des Kreises in der Fläche 19 sämtlicher weiteren Lichtumlenkstrukturen des Lichtleiters 1, d.h. zu den Mittelpunkten M3, M4, M5, M6, M7, M8, M9, M10, M11, M12, M13 jeweils einen Abstand A auf, wobei der jeweilige Abstand A grösser als der Durchmesser d2 des Kreises K2 der Lichtumlenkstruktur 2 geteilt durch den Wert 0.33 ist. Die Abstände A des Mittelpunktes M2 zu den Mittelpunkten M3, M4, M5, M6, M7, M8, M9, M10, M11, M12, M13 sind in Figur 1 mittels Volllinien dargestellt, welche sich vom Mittelpunkt M2 zu den Mittelpunkten M3, M4, M5, M6, M7, M8, M9, M10, M11, M12, M13 erstrecken. Die genannten Volllinien sind jeweils mit einem Bezugszeichen bezeichnet, wobei eine jeweiliges Bezugszeichen den Buchstaben "A" sowie eine Zahl umfasst. So ist, wie in Figur 1 ersichtlich, beispielsweise der Abstand A zwischen dem Mittelpunkt M2 des Kreises K2 der Lichtumlenkstruktur 2 und dem Mittelpunkt M3 des Kreises K3 der Lichtumlenkstruktur 3 mittels des Bezugszeichens "A23" bezeichnet, wobei die erste Ziffer der Zahl "23", d.h. die Ziffer "2" den Mittelpunkt M des Kreises K der jeweiligen Lichtumlenkstruktur bezeichnet, d.h. im vorliegenden Fall den Mittelpunkt M2 und wobei die zweite Ziffer der Zahl "23", d.h. die Ziffer "3" den Mittelpunkt M des Kreises einer weiteren Lichtumlenkstruktur bezeichnet, zu welchem sich die Volllinie ausgehend vom Mittelpunkt M2 erstreckt, d.h. im vorliegenden Fall den Mittelpunkt M3 des Kreises K3 der Lichtumlenkstruktur 3. Analog bezeichnet somit zum Beispiel das Bezugszeichen "A25" den Abstand A zwischen dem Mittelpunkt M2 des Kreises K2 der jeweiligen Lichtumlenkstruktur 2 und dem Mittelpunkt M5 des Kreises K5 der weiteren Lichtumlenkstruktur 5.

Wie in Figur 1 ersichtlich, ist der Abstand A vom Mittelpunkt M2 des Kreises K2 in der Fläche 19 der jeweiligen Lichtumlenkstruktur 2 des Lichtleiters 1 zum Mittelpunkt des Kreises in der Fläche 19 der sämtlichen weiteren Lichtumlenkstrukturen 3, 4, 5, 6, 7, 8, 9, 10, 11, 12, 13 des Lichtleiters 1 teilweise unterschiedlich.

In einem zweiten Schritt wird nun beispielsweise die Lichtumlenkstruktur 3 als die jeweilige Lichtumlenkstruktur festgelegt. Die Lichtumlenkstruktur 3 weist in der Fläche 19 einen Querschnitt auf, welcher als der Kreis K3 mit der Kreisfläche G3 ausgebildet ist, wobei der Kreis K3 den Durchmesser d3 sowie den Mittelpunkt M3 aufweist. Da die Lichtumlenkstruktur 3 als die jeweilige Lichtumlenkstruktur festgelegt worden ist, sind die Lichtumlenkstrukturen 2, 4, 5, 6, 7, 8, 9, 10, 11, 12, 13 die sämtlichen weiteren Lichtumlenkstrukturen. Erfindungsgemäss weist der Mittelpunkt M3 des Kreises K3 in der Fläche 19 der Lichtumlenkstruktur 3 zum Mittelpunkt des Kreises in der Fläche 19 sämtlicher weiteren Lichtumlenkstrukturen des Lichtleiters 1, d.h. zu den Mittelpunkten M2, M4, M5, M6, M7, M8, M9, M10, M11, M12, M13 jeweils einen Abstand A auf, wobei der jeweilige Abstand A grösser als der Durchmesser d3 des Kreises K3 der Lichtumlenkstruktur 3 geteilt durch den Wert 0.33 ist. Aus Übersichtsgründen sind in Figur 1 die Abstände A des Mittelpunktes M3 zu den Mittelpunkten M2, M4, M5, M6, M7, M8, M9, M10, M11, M12, M13 nicht dargestellt.

In weiteren Schritten werden die verbleibenden Lichtumlenkstrukturen 4, 5, 6, 7, 8, 9, 10, 11, 12, 13 jeweils als die jeweilige Lichtumlenkstruktur festgelegt, und analog, wie bereits im Zusammenhang mit den Lichtumlenkstrukturen 2, 3 beschrieben, die Abstände A vom Mittelpunkt des Kreises in der Fläche 19 der jeweiligen Lichtumlenkstruktur zum Mittelpunkt des Kreises in der Fläche 19 der jeweiligen sämtlichen weiteren Lichtumlenkstrukturen des Lichtleiters 1 bestimmt. Aus Übersichtsgründen ist in Figur 1 auf die Einzeichnung dieser Abstände A verzichtet worden.

Auf diese Art und Weise, wie oben beschrieben, können die erfindungsgemässen minimalen Abstände A zwischen den Mittelpunkten der Querschnitte der Lichtumlenkstrukturen 2, 3, 4, 5, 6, 7, 8, 9, 10, 11, 12, 13 des Lichtleiters 1 in der Fläche 19 bestimmt werden, so dass die Lichtumlenkstrukturen 2, 3, 4, 5, 6, 7, 8, 9, 10, 11, 12, 13 des Lichtleiters 1, in unbeleuchtetem Zustand des Lichtleiters 1, kaum sichtbar sind für einen menschlichen Betrachter der Sichtseite 45, dessen Augen in einem üblichen Abstand von ca. 30cm - 70cm von der Sichtseite 45 des Lichtleiters 1 sind.

Wie schon dargelegt, ist der Durchmesser d sämtlicher Querschnitte bzw. Kreise K2, K3, K4, K5, K6, K7, K8, K9, K10, K11, K12, K13 identisch. Bevorzugt liegt der Durchmesser d im Bereich von 5 Mikrometer bis 40 Mikrometer, bevorzugter im Bereich von 5 Mikrometer bis 30 Mikrometer, noch bevorzugter im Bereich von 10 Mikrometer bis 25 Mikrometer, noch weiter bevorzugter im Bereich von 10 Mikrometer bis 20 Mikrometer, am bevorzugtesten im Bereich von 10 Mikrometer bis 15 Mikrometer. Selbstverständlich können die Lichtumlenkstrukturen 2, 3, 4, 5, 6, 7, 8, 9, 10, 11, 12, 13 des Lichtleiters 1, bzw. deren Querschnitte in der Fläche 19, auch unterschiedlich ausgestaltet sein, so dass die Durchmesser d der Lichtumlenkstrukturen 2, 3, 4, 5, 6, 7, 8, 9, 10, 11, 12, 13 wenigstens teilweise unterschiedlich sind.

Die Lichtumlenkstrukturen 2, 3, 4, 5, 6, 7, 8, 9, 10, 11, 12, 13, d.h. sämtliche Lichtumlenkstrukturen des Lichtleiters 1, weisen bevorzugt eine maximale Tiefe T auf, wobei die maximale Tiefe T einer jeweiligen Lichtumlenkstruktur bevorzugt das 2.0-fache oder weniger des Durchmessers d des Querschnittes in der Fläche 19 der jeweiligen Lichtumlenkstruktur beträgt. Diese bevorzugte Ausführungsform bewirkt den Vorteil, dass sich das Licht über eine besonders lange Wegstrecke im Lichtleiter 1 fortpflanzen kann: Aufgrund der definierten maximalen Tiefe T der Lichtumlenkstrukturen bezüglich deren Durchmesser d lenken die nahe den Leuchtmitteln 15 angeordneten Lichtumlenkstrukturen 10, 13 das von den Leuchtmitteln 15 über die Lichteinkoppelfläche 14 in den Lichtleiter 1 eingekoppelte Licht nur teilweise um und somit wird nur ein Teil des eingekoppelten Lichtes über die Sichtfläche 18 und/oder über die Lichtumlenkstrukturen 10, 13 aus dem Lichtleiter 1 ausgekoppelt. Der nicht umgelenkte Teil des eingekoppelten Lichtes kann somit noch zu den relativ zu den Leuchtmitteln 15 weiter entfernten Lichtumlenkstrukturen 9, 12 gelangen, wird dort wiederum an den Lichtumlenkstrukturen 9, 12 nur teilweise umgelenkt und somit wiederum nur teilweise aus dem Lichtleiter 1 über die Sichtfläche 18 und/oder über die Lichtumlenkstrukturen 9, 12 ausgekoppelt, so dass noch aus von den Leuchtmitteln 15 weiter entfernten Bereichen der Sichtfläche 18 und/oder den weiter entfernten Lichtumlenkstrukturen 2, 3, 4, 5, 6, 7, 8, 11 Licht ausgekoppelt werden kann. Der bezüglich den Lichtumlenkstrukturen 10, 13 relativ zu den Lichtumlenkstrukturen 9, 12 beschriebene Effekt betreffend der Lichtauskoppelung tritt auch bezüglich den Lichtumlenkstrukturen 9, 12 relativ zu den Lichtumlenkstrukturen 8, 11, bezüglich den Lichtumlenkstrukturen 8, 11 relativ zu den Lichtumlenkstrukturen 2, 7 usw. auf. Somit kann das über die Lichteinkoppelfläche 14 eingekoppelte Licht sich bis zu den Lichtumlenkstrukturen 4, 5 im Lichtleiter 1 fortpflanzen und somit kann auch der am weitesten von der Lichteinkoppelfläche 14 beabstandete Bereich der Sichtseite 45 noch ausreichend beleuchtet werden bzw. eine ausreichende Leuchtdichte an diesem Bereich der Sichtseite 45 erzielt werden. Der Abschattungseffekt von näher bezüglich der Leuchtmitteln 15 angeordneten Lichtumlenkstrukturen bezüglich relativ zu den Leuchtmitteln 15 weiter weg angeordneter Lichtumlenkstrukturen ist somit geringer wenn die Lichtumlenkstrukturen erfindungsgemäss ausgestaltet sind. Bevorzugter beträgt die maximale Tiefe T einer jeweiligen Lichtumlenkstruktur des Lichtleiters 1 das 1.0-fache oder weniger des Durchmessers d des Querschnittes in der Fläche 19 der jeweiligen Lichtumlenkstruktur, noch bevorzugter beträgt die maximale Tiefe T einer jeweiligen Lichtumlenkstruktur des Lichtleiters 1 das 0.5-fache oder weniger des Durchmessers d des Querschnittes in der Fläche 19 der jeweiligen Lichtumlenkstruktur. Bevorzugt ist die maximale Tiefe T der Lichtumlenkstrukturen des Lichtleiters 1 kleiner oder gleich 0.1 Millimeter. Grundsätzlich gilt, dass mit geringer werdender maximaler Tiefe T relativ zum Durchmesser d der Abschattungseffekt einer Lichtumlenkstruktur geringer wird. Je mehr Lichtumlenkstrukturen eines Lichtleiters ein derartiges Verhältnis aufweisen, desto weniger schatten sich die Lichtumlenkstrukturen des Lichtleiters untereinander ab. Die maximale Tiefe T der Lichtumlenkstrukturen des Lichtleiters 1 wird bevorzugt senkrecht bezüglich der durch die Sichtfläche 18 definierten Fläche 19 gemessen. Wie schon oben dargelegt, weisen die Querschnitte bzw. Kreise K2, K3, K4, K5, K6, K7, K8, K9, K10, K11, K12, K13 alle denselben Durchmesser d auf, d.h. die Durchmesser d2, d3, d4, d5, d6, d7, d8, d9, d10, d11, d12, d13 sind identisch.

Der Lichtleiter 1 weist, wie in Figur 2 ersichtlich, im Bereich der Lichtumlenkstruktur 10 eine Dicke D1 auf und die Lichtumlenkstruktur 10 weist eine maximale Tiefe T auf, welche bevorzugt kleiner oder gleich 0.1 Millimeter ist. Das Verhältnis der Dicke D1 zur maximalen Tiefe T der Lichtumlenkstruktur 10 ist bevorzugt 5:1 oder grösser. Dieses bevorzugte Verhältnis, wie im Zusammenhang mit der Lichtumlenkstruktur 10 bestimmt, gilt bevorzugt auch analog für die weiteren Lichtumlenkstrukturen 2, 3, 4, 5, 6, 7, 8, 9, 11, 12, 13 des Lichtleiters 1. Diese bevorzugte Ausführungsform betreffend das Verhältnis der Dicke D1 zur maximalen Tiefe T bewirkt den Vorteil, dass sich das Licht im Lichtleiter über eine besonders lange Wegstrecke im Lichtleiter fortpflanzen kann, da sich die derart dimensionierten Lichtumlenkstrukturen untereinander weniger stark abschatten. Bevorzugter ist das Verhältnis der Dicke D1 zur maximalen Tiefe T 10:1 oder grösser. Grundsätzlich gilt, dass mit grösser werdendem Verhältnis von D1 zur maximalen Tiefe T der Abschattungseffekt einer Lichtumlenkstruktur geringer wird. Je mehr Lichtumlenkstrukturen eines Lichtleiters ein derartiges Verhältnis aufweisen, desto weniger schatten sich die Lichtumlenkstrukturen des Lichtleiters untereinander ab. Die Dicke D1 wird bevorzugt senkrecht bezüglich der durch die Sichtfläche 18 definierten Fläche 19 gemessen. Die geringere Abschattung bzw. der geringere Abschattungseffekt kann beispielsweise auch noch erzielt werden, falls die Dicke D des Lichtleiters 1 sowie die maximalen Tiefen T der Lichtumlenkstrukturen des Lichtleiters 1 in folgendem Verhältnis zueinander stehen:
1. Die geringere Abschattung kann auch erzielt werden, falls die Lichtumlenkstrukturen des Lichtleiters 1 derart ausgestaltet sind, dass die maximale Tiefe T einer jeweiligen Lichtumlenkstruktur zur mittleren Dicke D2 des Lichtleiters 1 im erfindungsgemässen Verhältnis steht;
2. Die geringere Abschattung kann ebenfalls erzielt werden, falls die Lichtumlenkstrukturen des Lichtleiters 1 derart ausgestaltet sind, dass die mittlere maximale Tiefe T sämtlicher Lichtumlenkstrukturen des Lichtleiters 1 zur mittleren Dicke D2 des Lichtleiters 1 im erfindungsgemässen Verhältnis steht.

Die genannte mittlere Dicke D2 wird bevorzugt durch Messungen senkrecht bezüglich der durch die Sichtfläche 18 definierten Fläche 19 bestimmt. Bevorzugt wird für die Bestimmung des erfindungsgemässen Verhältnisses der Dicke D des Lichtleiters zur maximalen Tiefe T die Dicke D1 im Bereich einer jeweiligen Lichtumlenkstruktur sowie die maximale Tiefe T dieser jeweiligen Lichtumlenkstruktur verwendet.

In den Figuren 1, 2 ist erkennbar, dass eine innere Oberfläche 43 des Lichtleiters 1 die als Vertiefungen ausgebildeten Lichtumlenkstrukturen 2, 3, 4, 5, 6, 7, 8, 9, 10, 11, 12, 13 des Lichtleiters 1 begrenzt. Die innere Oberfläche 43 des Lichtleiters 1 sowie die Sichtfläche 18 des Lichtleiters 1 bilden somit gemeinsam die Sichtseite 45 des Lichtleiters 1. Anhand der Figuren 1, 2 ist ausserdem ersichtlich, dass der Teilbereich 42 der inneren Oberfläche 43, welcher teilweise die Lichtumlenkstruktur 2 bzw. diese Vertiefung begrenzt und welcher direkt an die Fläche 19 anschliesst, mit der Fläche 19 einen Winkel α bildet. Dieser Winkel α liegt bevorzugt im Bereich von 30 - 50°, bevorzugter bei einem Winkel von ca. 45°. Diese bevorzugten Ausführungsformen bewirken den Vorteil, dass das im Lichtleiter 1 sich fortpflanzende Licht optimal an der Lichtumlenkstruktur 2 umgelenkt wird. Durch diese Umlenkung kann an der Sichtseite 45 eine besonders hohe Leuchtdichte erzielt werden. Bevorzugt weisen sämtliche Lichtumlenkstrukturen des Lichtleiters 1 einen derartigen Winkel α gemäss der oben genannten bevorzugten Ausführungsform auf. Wie bereits dargelegt, ist die Fläche 19 in Figur 2 eigentlich nicht ersichtlich, da die in Figur 1 mit gestrichelten Linien dargestellte Fläche 19 mit der Sichtfläche 18, welche in Figur 2 mit einer durchgezogenen Linie dargestellt ist, übereinander fällt. Um die Fläche 19 in Figur 2 trotzdem sichtbar zu machen, ist unterhalb der Sichtfläche 18 die Fläche 19 mit einer gestrichelten Linie dargestellt. Da die mit gestrichelten Linien dargestellte Fläche 19 mit der Sichtfläche 18, welche in Figur 2 mit einer durchgezogenen Linie dargestellt ist, übereinander fällt, müsste korrekterweise in Figur 2 der Winkel α zwischen der Fläche 42 und der Sichtfläche 18 eingezeichnet sein. Da erfindungsgemäss der Teilbereich 42 mit der Fläche 19 den Winkel α bildet, wurde aus Verständnisgründen der Winkel α zwischen dem Teilbereich 42 und der Fläche 19 eingezeichnet.

Figur 3 zeigt schematisch eine räumliche Ansicht einer zweiten Ausführungsform des erfindungsgemässen Lichtleiters. Figur 4 zeigt schematisch einen Längsschnitt durch den Lichtleiter 1' nach Figur 3 entsprechend einer in der Figur 3 dargestellten Schnittebene 20. Dieser Lichtleiter 1' gemäss den Figuren 3, 4 weist, wie der Lichtleiter 1, eine Lichteinkoppelfläche 14, eine Sichtfläche 18 sowie eine der Sichtfläche 18 gegenüberliegende Rückseite 17 auf. Diese Sichtfläche 18 definiert, wie beim Lichtleiter 1, eine in Figur 3 erkennbare, schraffierte Fläche 19.

In Figur 3 ist beispielhaft und schematisch ein Leuchtmittel 15 dargestellt, welches als Leuchtröhre ausgebildet ist, dessen Licht über die Lichteinkoppelfläche 14 in den Lichtleiter 1' eingekoppelt wird. Der Lichtleiter 1' weist, wie der Lichtleiter 1, 12 Lichtumlenkstrukturen 2, 3, 4, 5, 6, 7, 8, 9, 10, 11, 12, 13 auf. Die Sichtfläche 18 sowie die Lichtumlenkstrukturen 2, 3, 4, 5, 6, 7, 8, 9, 10, 11, 12, 13 bilden gemeinsam eine Sichtseite 45 des Lichtleiters 1'. Über die Sichtfläche 18 sowie über die Lichtumlenkstrukturen 2, 3, 4, 5, 6, 7, 8, 9, 10, 11, 12, 13, bzw. die Sichtseite 45, ist Licht aus dem Lichtleiter 1' auskoppelbar. Die Lichtumlenkstrukturen 2, 3, 4, 5, 6, 7, 8, 9, 10, 11, 12, 13 des Lichtleiters 1' weisen je, wie in Figur 3 ersichtlich, einen in der Fläche 19 angeordneten Querschnitt auf. Die Querschnitte bzw. Kreise K2, K3, K4, K5, K6, K7, K8, K9, K10, K11, K12, K13 dieser Lichtumlenkstrukturen 2, 3, 4, 5, 6, 7, 8, 9, 10, 11, 12, 13 des Lichtleiters 1' sind in der Fläche 19 zueinander angeordnet wie die Querschnitte bzw. Kreise des Lichtleiters 1, wie dies anhand der Figuren 1, 3 ersichtlich ist. Des Weiteren ist der Querschnitt bzw. Kreis einer jeweiligen Lichtumlenkstruktur des Lichtleiters 1' in der Fläche 19 identisch mit dem Querschnitt bzw. Kreis dieser jeweiligen Lichtumlenkstruktur des Lichtleiters 1 in der Fläche 19. Somit ist beispielsweise der Querschnitt bzw. Kreis K2 mit dem Mittelpunkt M2 der Lichtumlenkstruktur 2 des Lichtleiters 1' in der Fläche 19 identisch ausgestaltet wie der Querschnitt bzw. Kreis K2 mit dem Mittelpunkt M2 der Lichtumlenkstruktur 2 des Lichtleiters 1 in der Fläche 19. Der Querschnitt bzw. Kreis K2 der Lichtumlenkstruktur 2 des Lichtleiters 1' weist somit dieselbe Kreisfläche G2 sowie denselben Durchmesser d2 auf wie der Querschnitt bzw. Kreis K2 des Lichtumlenkstruktur 2 des Lichtleiters 1.

Da die Fläche 19 ausserhalb der Lichtumlenkstrukturen 2, 3, 4, 5, 6, 7, 8, 9, 10, 11, 12, 13 des Lichtleiters 1', wie in Figur 3 erkennbar, der Sichtfläche 18 des Lichtleiters 1' entspricht, ist die Fläche 19 in Figur 4 ausserhalb der Lichtumlenkstrukturen 2, 3, 4, 8, 9, 10 nicht ersichtlich, da in Figur 4 die in Figur 3 mit gestrichelten Linien dargestellte Fläche 19 mit der Sichtfläche 18, welche in Figur 4 mit einer durchgezogenen Linie 18 dargestellt ist, übereinander fällt. Im Bereich der Lichtumlenkstrukturen 2, 3, 4, 5, 6, 7, 8, 9, 10, 11, 12, 13 bildet die Fläche 19, wie in Figur 3 ersichtlich, die Grundflächen bzw. die als Kreise K2, K3, K3, K4, K5, K6, K7, K8, K9, K10, K11, K12, K13 ausgebildeten Querschnitte der Lichtumlenkstrukturen 2, 3, 4, 5, 6, 7, 8, 9, 10, 11, 12, 13 des Lichtleiters 1', von welchen sich die Lichtumlenkstrukturen 2, 3, 4, 5, 6, 7, 8, 9, 10, 11, 12, 13 wegerstrecken. Im Bereich der Lichtumlenkstrukturen 2, 3, 4, 8, 9, 10 des Lichtleiters 1' gemäss Figur 4 ist somit die Fläche 19 als gestrichelten Linie dargestellt.

Die Lichtumlenkstrukturen 2, 3, 4, 5, 6, 7, 8, 9, 10, 11, 12, 13 des Lichtleiters 1' erstrecken sich, wie in den Figuren 3, 4 ersichtlich, nicht wie die Lichtumlenkstrukturen des Lichtleiters 1 in Richtung der Rückseite 17, sondern diese erstrecken sich alle in eine von der Rückseite 17 abgewandte Richtung und sind, nicht wie die Lichtumlenkstrukturen des Lichtleiters 1 als Vertiefungen, sondern als Erhebungen ausgebildet. Wie in den Figuren 3, 4 erkennbar, verjüngt sich der Querschnitt der Lichtumlenkstrukturen 2, 3, 4, 5, 6, 7, 8, 9, 10, 11, 12, 13 von der Fläche 19 in eine von der Rückseite 17 abgewandte Richtung kontinuierlich.

Erfindungsgemäss weist der Mittelpunkt M des Kreises K in der Fläche 19 einer jeweiligen Lichtumlenkstruktur der Lichtumlenkstrukturen 2, 3, 4, 5, 6, 7, 8, 9, 10, 11, 12, 13 des Lichtleiters 1' zum Mittelpunkt des Kreises in der Fläche 19 der jeweiligen sämtlichen weiteren Lichtumlenkstrukturen des Lichtleiters 1' einen Abstand A auf, wobei der Abstand A grösser als der Durchmesser d des Kreises der jeweiligen Lichtumlenkstruktur geteilt durch den Wert 0.33 ist, so dass die Lichtumlenkstrukturen 2, 3, 4, 5, 6, 7, 8, 9, 10, 11, 12, 13 des Lichtleiters 1' von einem Betrachter kaum sichtbar sind, wenn dessen Augen in einem üblichen Abstand von ca. 30cm - 70cm von der Sichtseite 45 des Lichtleiters 1' auf die Sichtseite 45 schauen.

Die Abstände A des Mittelpunktes M2 zu den Mittelpunkten M3, M4, M5, M6, M7, M8, M9, M10, M11, M12, M13 sind in Figur 3 wiederum mittels Volllinien dargestellt, welche sich vom Mittelpunkt M2 zu den Mittelpunkten M3, M4, M5, M6, M7, M8, M9, M10, M11, M12, M13 erstrecken und sind erfindungsgemäss grösser als der Durchmesser d2 geteilt durch den Wert 0.33. Die genannten Volllinien sind analog, wie im Zusammenhang mit dem Lichtleiter 1 gemäss den Figur 1 diskutiert, mit Bezugzeichen versehen. Auf die Einzeichnung des Abstandes A ausgehend vom Mittelpunkt M des Kreises weiterer jeweiliger Lichtumlenkstrukturen zum Mittelpunkt des Kreises der jeweiligen sämtlichen weiteren Lichtumlenkstrukturen wurde aus Übersichtsgründen verzichtet.

Die Lichtumlenkstrukturen 2, 3, 4, 5, 6, 7, 8, 9, 10, 11, 12, 13, d.h. sämtliche Lichtumlenkstrukturen des Lichtleiters 1', weisen bevorzugt eine maximale Höhe H auf, wobei die maximale Höhe H einer jeweiligen Lichtumlenkstruktur bevorzugt das 2.0-fache oder weniger des Durchmessers d des Querschnittes in der Fläche 19 der jeweiligen Lichtumlenkstruktur beträgt. Diese bevorzugte Ausführungsform bewirkt den Vorteil, dass, wie bereits im Zusammenhang mit dem Lichtleiter 1 besprochen, sich das Licht über eine besonders lange Wegstrecke im Lichtleiter 1' fortpflanzen kann bzw. der Abschattungseffekt von näher bezüglich dem Leuchtmittel 15 angeordneten Lichtumlenkstrukturen bezüglich relativ zu dem Leuchtmittel 15 weiter weg angeordneten Lichtumlenkstrukturen geringer ist. Bevorzugter beträgt die maximale Höhe H einer jeweiligen Lichtumlenkstruktur des Lichtleiters 1' das 1.0-fache oder weniger des Durchmessers d des Querschnittes dieser jeweiligen Lichtumlenkstruktur, noch bevorzugter beträgt die maximale Höhe H einer jeweiligen Lichtumlenkstruktur des Lichtleiters 1' das 0.5-fache oder weniger des Durchmessers d des Querschnittes dieser jeweiligen Lichtumlenkstruktur. Bevorzugt ist die maximale Höhe H der Lichtumlenkstrukturen des Lichtleiters 1' kleiner oder gleich 0.1 Millimeter. Grundsätzlich gilt, dass mit geringer werdender maximaler Höhe H relativ zum Durchmesser d der Abschattungseffekt einer Lichtumlenkstruktur geringer wird. Je mehr Lichtumlenkstrukturen eines Lichtleiters ein derartiges erfindungsgemässes Verhältnis aufweisen, desto weniger schatten sich die Lichtumlenkstrukturen des Lichtleiters untereinander ab. Die maximale Höhe H der Lichtumlenkstrukturen des Lichtleiters 1' wird bevorzugt senkrecht bezüglich der durch die Sichtfläche 18 definierten Fläche 19 gemessen. Wie schon oben dargelegt, weisen die Querschnitte bzw. Kreise K2, K3, K4, K5, K6, K7, K8, K9, K10, K11, K12, K13 der Lichtumlenkstrukturen des Lichtleiters 1' alle denselben Durchmesser d auf, d.h. die Durchmesser d2, d3, d4, d5, d6, d7, d8, d9, d10, d11, d12, d13 sind identisch.

Der Lichtleiter 1' weist zwischen der Rückseite 17 und der Fläche 19, wie in Figur 4 ersichtlich, im Bereich der Lichtumlenkstruktur 10 eine Dicke D1 auf und die Lichtumlenkstruktur 10 weist eine maximale Höhe H auf, welche bevorzugt kleiner oder gleich 0.1 Millimeter ist. Die maximale Höhe H der Lichtumlenkstruktur ist möglichst klein, da mit geringer werdender Höhe H die Beschädigungswahrscheinlichkeit der Lichtumlenkstruktur abnimmt. Das Verhältnis der Dicke D1 zur maximalen Höhe H der Lichtumlenkstruktur 10 ist bevorzugt 5:1 oder grösser. Dieses Verhältnis gilt bevorzugt für sämtliche Lichtumlenkstrukturen 2, 3, 4, 5, 6, 7, 8, 9, 10, 11, 12, 13 des Lichtleiters 1'. Diese Ausführungsform bewirkt den Vorteil, dass sich das Licht im Lichtleiter über eine besonders lange Wegstrecke im Lichtleiter fortpflanzen kann, da sich die Lichtumlenkstrukturen untereinander weniger stark abschatten bzw. geringer abschatten. Bevorzugter ist das Verhältnis der Dicke D1 zur maximalen Höhe H 10:1 oder grösser. Grundsätzlich gilt, dass mit grösser werdendem Verhältnis von D1 zur maximalen Höhe H der Abschattungseffekt einer Lichtumlenkstruktur abnimmt. Je mehr Lichtumlenkstrukturen eines Lichtleiters ein derartiges erfindungsgemässes Verhältnis aufweisen, desto weniger schatten sich die Lichtumlenkstrukturen des Lichtleiters untereinander ab. Die Dicke D1 wird bevorzugt senkrecht bezüglich der durch die Sichtfläche 18 definierten Fläche 19 gemessen. Die geringere Abschattung bzw. der geringere Abschattungseffekt kann beispielsweise auch noch erzielt werden, falls die Dicke D des Lichtleiters 1' zwischen der Rückseite 17 und der Fläche 19 sowie die maximalen Höhen H der Lichtumlenkstrukturen des Lichtleiters 1' in folgendem Verhältnis zueinander stehen:
1. Die geringere Abschattung kann auch erzielt werden, falls die Lichtumlenkstrukturen des Lichtleiters 1' derart ausgestaltet sind, dass die maximale Höhe H einer jeweiligen Lichtumlenkstruktur zur mittleren Dicke D2 des Lichtleiters 1' zwischen der Rückseite 17 und der Fläche 19 im erfindungsgemässen Verhältnis steht;
2. Die geringere Abschattung kann ebenfalls erzielt werden, falls die Lichtumlenkstrukturen des Lichtleiters 1' derart ausgestaltet sind, dass die mittlere maximale Höhe H sämtlicher Lichtumlenkstrukturen des Lichtleiters 1' zur mittleren Dicke D2 des Lichtleiters 1' zwischen der Rückseite 17 und der Fläche 19 im erfindungsgemässen Verhältnis steht.

Die genannte mittlere Dicke D2 zwischen der Rückseite 17 und der Fläche 19 wird bevorzugt ebenfalls durch Messungen senkrecht bezüglich der durch die Sichtfläche 18 definierten Fläche 19 bestimmt. Bevorzugt wird aber für die Bestimmung des erfindungsgemässen Verhältnisses der Dicke des Lichtleiters zwischen der Rückseite 17 und der Fläche 19 relativ zur maximalen Höhe H die Dicke D1 im Bereich einer jeweiligen Lichtumlenkstruktur sowie die maximale Höhe H dieser jeweiligen Lichtumlenkstruktur verwendet.

In den Figuren 3, 4 ist erkennbar, dass die als Erhebungen ausgebildeten Lichtumlenkstrukturen 2, 3, 4, 5, 6, 7, 8, 9, 10, 11, 12, 13 jeweils eine äussere Oberfläche 44 aufweisen. Die äusseren Oberflächen 44 der Lichtumlenkstrukturen 2, 3, 4, 5, 6, 7, 8, 9, 10, 11, 12, 13 bilden somit gemeinsam mit der Sichtfläche 18 die Sichtseite 45 des Lichtleiters 1'. Aus Übersichtsgründen sind nur die Lichtumlenkstrukturen 2, 3, 4, 8, 9, 10 in Figur 4 mit dem Bezugszeichen 44 versehen. Anhand der Figuren 3, 4 ist ausserdem ersichtlich, dass ein Teilbereich 42 der äusseren Oberfläche 44 der Lichtumlenkstruktur 2 bzw. dieser Erhebung, welcher direkt an die Fläche 19 anschliesst, mit der Fläche 19 einen Winkel α bildet. Dieser Winkel α liegt bevorzugt im Bereich von 30 - 50°, bevorzugter beträgt dieser Winkel α ca. 45°. Diese bevorzugten Ausführungsformen bewirken den Vorteil, dass das im Lichtleiter sich fortpflanzende Licht optimal an der Lichtumlenkstruktur umgelenkt wird. Durch diese Umlenkung kann an der Sichtseite 45 eine besonders hohe Leuchtdichte erzielt werden.

Der Lichtleiter 1' weist, wie in den Figuren 3, 4 ersichtlich, einen als Quader ausgebildeten Grundkörper 21 auf. Der Grundkörper 21 bildet die Lichteinkoppelfläche 14, die Rückseite 17 sowie die der Rückseite 17 gegenüberliegende Sichtfläche 18, welche die Fläche 19 definiert. Der Grundkörper 21 ist mit den Lichtumlenkstrukturen 2, 3, 4, 5, 6, 7, 8, 9, 10, 11, 12, 13 einstückig verbunden. Die einstückige Verbindung des Grundkörpers 21 mit den Lichtumlenkstrukturen ist bevorzugt, da ein solcher Lichtleiter besonders einfach herstellbar ist. Die Lichtumlenkstrukturen müssen nicht zwingend mit dem Grundkörper 21 einstückig verbunden sein und können beispielsweise auch auf den Grundkörper 21 aufgedruckt sein.

Die Figur 5 zeigt schematisch eine räumliche Ansicht einer dritten Ausführungsform des erfindungsgemässen Lichtleiters mit stark vergrössert dargestellten 12 Lichtumlenkstrukturen 2, 3, 4, 5, 6, 7, 8, 9, 10, 11, 12, 13. Dieser Lichtleiter 1" weist, wie die Lichtleiter 1, 1', eine Lichteinkoppelfläche 14, eine Sichtfläche 18 sowie eine der Sichtfläche 18 gegenüberliegende Rückseite 17 auf. Diese Sichtfläche 18 definiert, wie bei den Lichtleitern 1, 1', eine schraffierte Fläche 19. Die Lichtumlenkstrukturen 2, 3, 4, 5, 6, 7, 8, 9, 10, 11, 12, 13 des Lichtleiter 1" weisen alle, wie in Figur 5 ersichtlich, einen in der Fläche 19 angeordneten Querschnitt Q auf. Die Lichtumlenkstrukturen 2, 3, 4, 5, 6, 7, 8, 9, 10, 11, 12, 13 sowie die Sichtfläche 18 bilden gemeinsam eine Sichtseite 45 des Lichtleiters 1". Über die Sichtfläche 18 sowie die Lichtumlenkstrukturen 2, 3, 4, 5, 6, 7, 8, 9, 10, 11, 12, 13, bzw. über die Sichtseite 45, ist Licht aus dem Lichtleiter 1" auskoppelbar. In Figur 5 ist beispielhaft und schematisch ein Leuchtmittel 15 dargestellt, welches als Leuchtdiode ausgebildet ist, dessen Licht über die Lichteinkoppelfläche 14 in den Lichtleiter 1" eingekoppelt wird. Die Lichtumlenkstrukturen 2, 3, 4, 5, 6, 7, 8, 9, 10, 11, 12, 13 des Lichtleiters 1", bzw. deren Querschnitte in der Fläche 19, sind identisch zueinander angeordnet wie die Lichtumlenkstrukturen der Lichtleiter 1, 1', bzw. deren Querschnitte in der Fläche 19, wie dies anhand der Figuren 1, 3, 5 ersichtlich ist.

Im Gegensatz zu den Querschnitten der Lichtumlenkstrukturen des Lichtleiters 1, welche in der Fläche 19 als Kreise K ausgebildet sind, sind die Querschnitte Q2, Q3, Q4, Q5, Q6, Q7, Q8, Q9, Q10, Q11, Q12, Q13 der Lichtumlenkstrukturen 2, 3, 4, 5, 6, 7, 8, 9, 10, 11, 12, 13 des Lichtleiters 1" in der Fläche 19, wie in Figur 5 erkennbar, als Quadrat ausgebildet. Somit sind die durch die Fläche 19 gebildeten Grundflächen der Lichtumlenkstrukturen 2, 3, 4, 5, 6, 7, 8, 9, 10, 11, 12, 13 des Lichtleiters 1" als Quadratflächen Qf ausgebildet bzw. die Querschnitte Q2, Q3, Q4, Q5, Q6, Q7, Q8, Q9, Q10, Q11, Q12, Q13 der Lichtumlenkstrukturen 2, 3, 4, 5, 6, 7, 8, 9, 10, 11, 12, 13 des Lichtleiters 1" weisen in der Fläche 19 eine Quadratfläche Qf auf. Somit weist beispielsweise der Querschnitt Q2 eine Quadratfläche Qf2 auf. Diese anhand des Querschnittes Q2 bezüglich der Quadratfläche Qf besprochene Nomenklatur gilt analog auch für die Querschnitte Q3, Q4, Q5, Q6, Q7, Q8, Q9, Q10, Q11, Q12, Q13. Die Lichtumlenkstrukturen 2, 3, 4, 5, 6, 7, 8, 9, 10, 11, 12, 13 des Lichtleiters 1" erstrecken sich, wie die Lichtumlenkstrukturen des Lichtleiters 1, in Richtung der Rückseite 17 und sind als pyramidenförmige Vertiefungen im Lichtleiter 1" ausgebildet, wobei der Querschnitt der Lichtumlenkstrukturen 2, 3, 4, 5, 6, 7, 8, 9, 10, 11, 12, 13 sich von der Fläche 19 in Richtung der Rückseite 17 kontinuierlich verjüngt, wie dies in Figur 5 erkennbar ist.

Um die Querschnitte Q2, Q3, Q4, Q5, Q6, Q7, Q8, Q9, Q10, Q11, Q12, Q13, welche alle als Quadrat ausgebildet sind, und welche alle identisch ausgestaltet sind, wird erfindungsgemäss jeweils ein virtueller Umkreis U mit einem Mittelpunkt M sowie einem Durchmesser d gelegt. Um den Querschnitt Q2, welcher als Quadrat ausgebildet ist, wird somit ein Umkreis U2 mit einem Mittelpunkt M2 sowie einem Durchmesser d2 gelegt. Entsprechend wird, wie gerade bezüglich Querschnitt Q2 diskutiert, ebenfalls um die Querschnitte Q3, Q4, Q5, Q6, Q7, Q8, Q9, Q10, Q11, Q12, Q13 ein Umkreis U mit einem Mittelpunkt M sowie einem Durchmesser d gelegt. In der Figur 5 sind die Umkreise U2, U3, U4, U5, U6, U7, U8, U9, U10, U11, U12, U13 mit einer gestrichelten Linie dargestellt. Da die Querschnitte Q3, Q4, Q5, Q6, Q7, Q8, Q9, Q10, Q11, Q12, Q13 identisch sind, sind die Durchmesser d der Umkreise U2, U3, U4, U5, U6, U7, U8, U9, U10, U11, U12, U13 ebenfalls identisch. Erfindungsgemäss liegt der Durchmesser d des Umkreises U, und somit der Umkreise U2, U3, U4, U5, U6, U7, U8, U9, U10, U11, U12, U13 im Bereich von grösser als 0 Mikrometer bis 50 Mikrometer. Bevorzugt liegt der Durchmesser d des Umkreises U im Bereich von 5 Mikrometer bis 40 Mikrometer, bevorzugter im Bereich von 5 Mikrometer bis 30 Mikrometer, noch bevorzugter im Bereich von 10 Mikrometer bis 25 Mikrometer, noch weiter bevorzugter im Bereich von 10 Mikrometer bis 20 Mikrometer, am bevorzugtesten im Bereich von 10 Mikrometer bis 15 Mikrometer.

Erfindungsgemäss gilt bezüglich der Abstände A der Mittelpunkte M der Umkreise U der Querschnitte Q in der Fläche 19 untereinander dieselbe Regel wie bezüglich der Abstände A der Mittelpunkte M der als Kreise ausgebildeten Querschnitte in der Fläche 19, welche im Zusammenhang mit dem Lichtleiter 1 diskutiert worden sind. Somit weist erfindungsgemäss der Mittelpunkt M des Umkreises U einer jeweiligen Lichtumlenkstruktur der Lichtumlenkstrukturen 2, 3, 4, 5, 6, 7, 8, 9, 10, 11, 12, 13 des Lichtleiters 1" zum Mittelpunkt M des Umkreises U der jeweiligen sämtlichen weiteren Lichtumlenkstrukturen des Lichtleiters 1" einen Abstand A auf, wobei der Abstand A grösser als der Durchmesser d des Umkreises U der jeweiligen Lichtumlenkstruktur geteilt durch den Wert 0.33 ist, so dass die Lichtumlenkstrukturen 2, 3, 4, 5, 6, 7, 8, 9, 10, 11, 12, 13 des Lichtleiters 1" erfindungsgemäss von einem Betrachter kaum sichtbar sind, wenn dessen Augen in einem üblichen Abstand von ca. 30cm - 70cm bezüglich der Sichtseite 45 des Lichtleiters 1" auf die Sichtseite 45 schauen. Der Abstand A des Mittelpunktes M2 zu den Mittelpunkten M3, M4, M5, M6, M7, M8, M9, M10, M11, M12, M13 ist somit grösser als der Durchmesser d2 des Umkreises U2 geteilt durch den Wert 0.33. Der Abstand A des Mittelpunktes M2 zu den Mittelpunkten M3, M4, M5, M6, M7, M8, M9, M10, M11, M12, M13 ist in Figur 5 mittels Volllinien dargestellt, welche sich vom Mittelpunkt M2 zu den Mittelpunkten M3, M4, M5, M6, M7, M8, M9, M10, M11, M12, M13 erstrecken. Die genannten Volllinien sind jeweils mit einem Bezugszeichen bezeichnet, wobei ein jeweiliges Bezugszeichen den Buchstaben "A" sowie eine Zahl umfasst. So ist, wie in Figur 5 ersichtlich, beispielsweise der Abstand A zwischen dem Mittelpunkt M2 des Umkreises U2 der Lichtumlenkstruktur 2 und dem Mittelpunkt M3 des Umkreises U3 der Lichtumlenkstruktur 3 mittels des Bezugszeichens "A23" bezeichnet, wobei die erste Ziffer der Zahl "23", d.h. die Ziffer "2", den Mittelpunkt des Umkreises der jeweiligen Lichtumlenkstruktur bezeichnet, d.h. im vorliegenden Fall den Mittelpunkt M2 und wobei die zweite Ziffer der Zahl "23", d.h. die Ziffer "3", den Mittelpunkt des Umkreises einer weiteren Lichtumlenkstruktur des Lichtleiters 1" bezeichnet, zu welchem sich die Volllinie ausgehend vom Mittelpunkt M2 erstreckt, d.h. im vorliegenden Fall den Mittelpunkt M3 des Umkreises U3 der Lichtumlenkstruktur 3. Analog bezeichnet somit zum Beispiel das Bezugszeichen "A25" den Abstand A zwischen dem Mittelpunkt M2 des Umkreises U2 der jeweiligen Lichtumlenkstruktur 2 und dem Mittelpunkt M5 des Umkreises U5 der weiteren Lichtumlenkstruktur 5 des Lichtleiters 1". Auf die Einzeichnung des Abstandes A ausgehend vom Mittelpunkt M des Umkreises U weiterer jeweiliger Umlenkstrukturen zum Mittelpunkt des Umkreises der jeweiligen sämtlichen weiteren Lichtumlenkstrukturen des Lichtleiters wurde in Figur 5 aus Übersichtsgründen verzichtet.

Die bei der Beschreibung des Lichtleiters 1 gemäss den Figuren 1, 2 gemachten Aussagen bezüglich der maximalen Tiefe T relativ zum Durchmesser d der Lichtumlenkstrukturen, dem Verhältnis der Dicken D1, D2 des Lichtleiters zur maximalen Tiefe T der Lichtumlenkstrukturen sowie des Winkels α gelten analog auch für den Lichtleiter 1" gemäss der Figur 5.

Figur 6 zeigt schematisch eine räumliche Ansicht einer vierten Ausführungsform des erfindungsgemässen Lichtleiters. Dieser Lichtleiter 1"' weist, wie der Lichtleiter 1", eine Lichteinkoppelfläche 14, eine Sichtfläche 18 sowie eine der Sichtfläche 18 gegenüberliegende Rückseite 17 auf. Diese Sichtfläche 18 definiert, wie beim Lichtleiter 1", eine schraffierte Fläche 19. In Figur 6 ist beispielhaft und schematisch ein Leuchtmittel 15 dargestellt, welches als Leuchtröhre ausgebildet ist, dessen Licht über die Lichteinkoppelfläche 14 in den Lichtleiter 1"' eingekoppelt wird. Der Lichtleiter 1"' weist, wie der Lichtleiter 1" gemäss Figur 5, 12 Lichtumlenkstrukturen 2, 3, 4, 5, 6, 7, 8, 9, 10, 11, 12, 13 auf. Die Lichtumlenkstrukturen 2, 3, 4, 5, 6, 7, 8, 9, 10, 11, 12, 13 des Lichtleiter 1"' weisen, wie in Figur 6 ersichtlich, einen in der Fläche 19 angeordneten Querschnitt Q auf. Die Lichtumlenkstrukturen 2, 3, 4, 5, 6, 7, 8, 9, 10, 11, 12, 13 sowie die Sichtfläche 18 bilden gemeinsam eine Sichtseite 45 des Lichtleiters 1"'. Über die Sichtfläche 18 sowie die Lichtumlenkstrukturen 2, 3, 4, 5, 6, 7, 8, 9, 10, 11, 12, 13, bzw. über die Sichtseite 45, ist Licht aus dem Lichtleiter 1"' auskoppelbar. Die in der Fläche 19 als Quadrate ausgebildeten Querschnitte Q2, Q3, Q4, Q5, Q6, Q7, Q8, Q9, Q10, Q11, Q12, Q13 dieser Lichtumlenkstrukturen 2, 3, 4, 5, 6, 7, 8, 9, 10, 11, 12, 13 des Lichtleiters 1'" sind zueinander angeordnet wie die Querschnitte Q des Lichtleiters 1", wie dies anhand der Figuren 5, 6 ersichtlich ist. Des Weiteren ist der Querschnitt Q einer jeweiligen Lichtumlenkstruktur des Lichtleiters 1"' identisch ausgebildet wie der Querschnitt Q der jeweiligen Lichtumlenkstruktur des Lichtleiters 1". Somit ist beispielsweise der Umkreis U2 mit dem Mittelpunkt M2 der Lichtumlenkstruktur 2 des Lichtleiters 1"' in der Fläche 19 identisch ausgestaltet wie der Umkreis U2 mit dem Mittelpunkt M2 der Lichtumlenkstruktur 2 des Lichtleiters 1" in der Fläche 19. Der Umkreis U2 der Lichtumlenkstruktur 2 des Lichtleiters 1"' weist somit dieselbe Kreisfläche sowie denselben Durchmesser d2 auf wie der Umkreis U2 der Lichtumlenkstruktur 2 des Lichtleiters 1".

Die Lichtumlenkstrukturen 2, 3, 4, 5, 6, 7, 8, 9, 10, 11, 12, 13 des Lichtleiters 1"' erstrecken sich, nicht wie die Lichtumlenkstrukturen des Lichtleiters 1" in Richtung der Rückseite 17, sondern diese erstrecken sich alle in eine von der Rückseite 17 abgewandte Richtung und sind, nicht wie die Lichtumlenkstrukturen des Lichtleiters 1" als Vertiefungen im Lichtleiter, sondern als Erhebungen ausgebildet, welche sich von der Fläche 19 wegerstrecken. Wie in der Figur 6 erkennbar, verjüngt sich der Querschnitt Q der Lichtumlenkstrukturen 2, 3, 4, 5, 6, 7, 8, 9, 10, 11, 12, 13 von der Fläche 19 in eine von der Rückseite 17 abgewandte Richtung kontinuierlich.

Erfindungsgemäss weist der Mittelpunkt M des Umkreises U einer jeweiligen Lichtumlenkstruktur der Lichtumlenkstrukturen 2, 3, 4, 5, 6, 7, 8, 9, 10, 11, 12, 13 des Lichtleiters 1"' zum Mittelpunkt M des Umkreises U der jeweiligen sämtlichen weiteren Lichtumlenkstrukturen des Lichtleiters 1"' einen Abstand A auf, wobei der Abstand A grösser als der Durchmesser d des Umkreises U der jeweiligen Lichtumlenkstruktur geteilt durch den Wert 0.33 ist, so dass die Lichtumlenkstrukturen 2, 3, 4, 5, 6, 7, 8, 9, 10, 11, 12, 13 des Lichtleiters 1"' erfindungsgemäss von einem Betrachter kaum sichtbar sind, wenn dessen Augen in einem üblichen Abstand von ca. 30cm - 70cm bezüglich der Sichtseite 45 des Lichtleiters 1"' auf die Sichtseite 45 schauen. Der Abstand A des Mittelpunktes M2 zu den Mittelpunkten M3, M4, M5, M6, M7, M8, M9, M10, M11, M12, M13 ist somit grösser als der Durchmesser d2 des Umkreises U2 geteilt durch den Wert 0.33. Der Abstand A des Mittelpunktes M2 zu den Mittelpunkten M3, M4, M5, M6, M7, M8, M9, M10, M11, M12, M13 ist in Figur 6 mittels Volllinien dargestellt, welche sich vom Mittelpunkt M2 zu den Mittelpunkten M3, M4, M5, M6, M7, M8, M9, M10, M11, M12, M13 erstrecken. Die genannten Volllinien sind analog, wie im Zusammenhang mit dem Lichtleiter 1" gemäss der Figur 5 diskutiert, mit Bezugzeichen versehen. Auf die Einzeichnung des Abstandes A ausgehend vom Mittelpunkt M des Umkreises weiterer jeweiliger Umlenkstrukturen zum Mittelpunkt des Umkreises der jeweiligen sämtlichen weiteren Lichtumlenkstrukturen wurde in Figur 6 aus Übersichtsgründen verzichtet.

Die bei der Beschreibung des Lichtleiters 1' gemäss den Figuren 3, 4 gemachten Aussagen bezüglich der maximalen Höhe H relativ zum Durchmesser d der Lichtumlenkstrukturen, dem Verhältnis der Dicken D1, D2 des Lichtleiters zur maximalen Höhe H der Lichtumlenkstrukturen sowie des Winkels α gelten analog auch für den Lichtleiter 1"' gemäss Figur 6.

Die Figuren 7a - 7f zeigen schematisch sowie stark vergrössert verschiedene Ausführungsformen des Querschnittes einer Lichtumlenkstruktur eines erfindungsgemässen Lichtleiters in einer Fläche, welche durch eine Sichtfläche des erfindungsgemässen Lichtleiters definiert ist, wobei die Sichtfläche einer Rückseite des erfindungsgemässen Lichtleiters gegenüberliegt. In den Figuren 7a - 7f ist der erfindungsgemässe Lichtleiter sowie die zu diesem dazugehörige Fläche 19, Sichtfläche 18 sowie Rückseite 17 nicht dargestellt. Die Figur 7f zeigt einen Querschnitt welcher als Kreis K mit einem Mittelpunkt M sowie einem Durchmesser d ausgebildet ist. Ein solch gearteter Querschnitt weisen die bereits beschriebenen Lichtumlenkstrukturen des Lichtleiters 1 gemäss den Figuren 1, 2 sowie des Lichtleiters 1' gemäss den Figuren 3, 4 auf. Die Figur 7c zeigt einen Querschnitt Q, welcher als Quadrat ausgebildet ist, um welcher ein mit einer gestrichelten Linie dargestellter Umkreis U mit einem Mittelpunkt M sowie einem Durchmesser d gelegt ist. Ein solch gearteter Querschnitt Q weisen die bereits beschriebenen Lichtumlenkstrukturen des Lichtleiters 1" gemäss der Figur 5 sowie des Lichtleiters 1"' gemäss der Figur 6 auf. Des weiteren zeigt die Figur 7a einen Querschnitt Q welcher als Sechseck ausgebildet ist, die Figur 7b einen Querschnitt Q welcher als Rechteck ausgebildet ist, die Figur 7d einen Querschnitt Q welcher als Dreieck ausgebildet ist sowie Figur 7e einen Querschnitt Q welcher als Ellipse ausgebildet ist, wobei um die Querschnitte gemäss den Figuren 7a, 7b, 7d, 7e jeweils ein Umkreis U mit einem Durchmesser d sowie einem Mittelpunkt M gelegt ist.

Die Figuren 8a - 8f zeigen jeweils schematisch sowie stark vergrössert einen Abschnitt einer fünften Ausführungsform des erfindungsgemässen Lichtleiters, d.h. einen Abschnitt des Lichtleiters 1" ", wobei ein jeweiliger Abschnitt jeweils schematisch dargestellt eine Ausführungsform einer als Vertiefung im Lichtleiter ausgebildeten und stark vergrössert dargestellten Lichtumlenkstruktur aufweist. Diese in den Figuren 8a - 8f mit gestrichelten Linien dargestellte Vertiefungen weisen in einer mit gestrichelten Linien dargestellten Fläche 19 jeweils einen Querschnitt auf, welcher als Kreis K mit einem Mittelpunkt M sowie einem Durchmesser d ausgebildet ist. Die Fläche 19 wird durch eine Sichtfläche 18 des Lichtleiters 1" " definiert, welche einer in den Figuren 8a - 8f nicht dargestellten Rückseite des Lichtleiters 1" " gegenüberliegt. Diese in den Figuren 8a - 8f nicht dargestellte Rückseite des Lichtleiters 1" " liegt der Sichtfläche 18 des Lichtleiters 1" " gegenüber, wie dies beispielsweise in der Figur 1 ersichtlich ist. Dabei zeigt Figur 8a eine im Lichtleiter als kegelstumpfförmige Vertiefung ausgebildete Lichtumlenkstruktur, Figur 8b eine im Lichtleiter als kegelförmige Vertiefung ausgebildete Lichtumlenkstruktur, Figur 8c eine weitere Ausführungsform einer im Lichtleiter als kegelstumpfförmige Vertiefung ausgebildete Lichtumlenkstruktur, Figur 8d eine weitere Ausführungsform einer im Lichtleiter als kegelförmige Vertiefung ausgebildete Lichtumlenkstruktur, Figur 8e eine im Lichtleiter als zylinderförmige Vertiefung ausgebildete Lichtumlenkstruktur sowie Figur 8f eine im Lichtleiter als halbkugelförmige Vertiefung ausgebildete Lichtumlenkstruktur. Die halbkugelförmige Vertiefung wurde bereits im Zusammenhang mit dem Lichtleiter 1 gemäss den Figuren 1, 2 diskutiert.

Bei den Lichtumlenkstrukturen gemäss den Figuren 8a, 8b sowie 8f verjüngt sich der Querschnitt der Lichtumlenkstrukturen von der Fläche 19 in Richtung der nicht dargestellten Rückseite des Lichtleiters 1" " kontinuierlich. Bei der Lichtumlenkstruktur gemäss Figur 8e bleibt der Querschnitt von der Fläche 19 in Richtung der nicht dargestellten Rückseite des Lichtleiters 1" " gleich. Bei den Lichtumlenkstrukturen gemäss den Figuren 8c sowie 8d bleibt der Querschnitt von der Fläche 19 in Richtung der nicht dargestellten Rückseite des Lichtleiters 1" " teilweise gleich und verjüngt sich teilweise kontinuierlich.

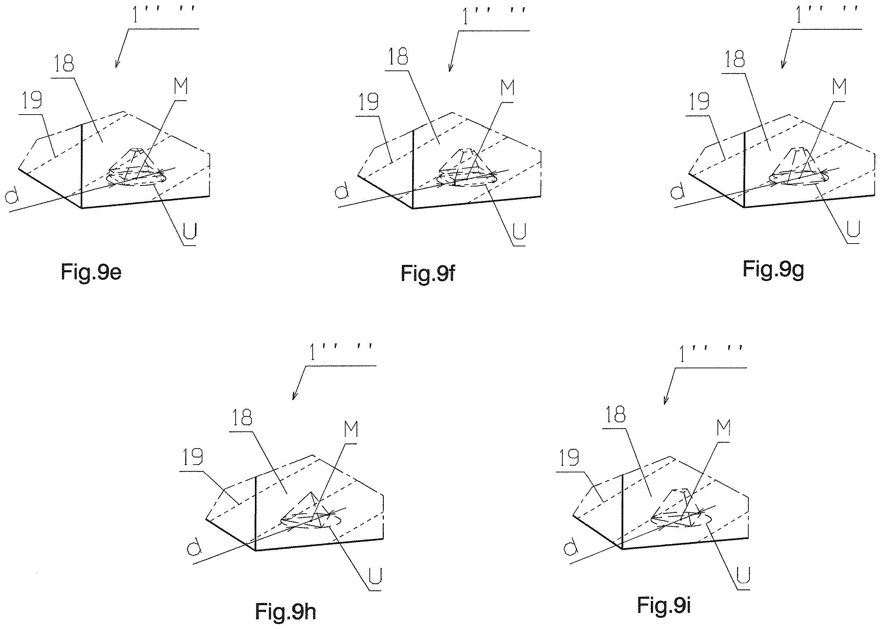

Die Figuren 9a - 9i zeigen jeweils den Abschnitt des erfindungsgemässen Lichtleiters 1" " gemäss der Figur 8a, wobei ein jeweiliger Abschnitt, anstatt der Vertiefung gemäss der Figur 8a, jeweils schematisch dargestellt eine Ausführungsform einer im Lichtleiter als Vertiefung ausgebildeten und stark vergrössert mit gestrichelten Linien dargestellten Lichtumlenkstruktur aufweist, wobei der Querschnitt der jeweiligen Vertiefung in der Fläche 19 als Vieleck ausgebildet ist. Um das Vieleck ist jeweils ein mit einer gestrichelten Linie dargestellter Umkreis U mit einem Durchmesser d sowie einem Mittelpunkt M gelegt. Dabei zeigen die Figuren 9a, 9b, 9c, 9e, 9f, 9g, 9h, 9i verschiedene Ausführungsformen von als pyramidenförmige Vertiefungen ausgebildete Lichtumlenkstrukturen sowie die Figur 9d eine als quaderförmige Vertiefung ausgebildete Lichtumlenkstruktur.

Die Vertiefungen im Lichtleiter 1" " gemäss den Figuren 8a - 8f sowie die Vertiefungen im Lichtleiter 1" " gemäss den Figuren 9a - 9i können beispielsweise mittels eines Lasers oder Ätzen oder Spritzguss oder Fräsen hergestellt werden. Diese genannten Verfahren sind dem Fachmann bekannt um als Lichtumlenkstrukturen ausgebildete Vertiefungen in einem Lichtleiter herzustellen.

Die Figuren 10a - 10g zeigen jeweils schematisch sowie stark vergrössert den Abschnitt des erfindungsgemässen Lichtleiters 1" " gemäss der Figur 8a, wobei ein jeweiliger Abschnitt, anstatt der Vertiefung gemäss der Figur 8a, jeweils schematisch dargestellt eine Ausführungsform einer als Erhebung ausgebildeten und stark vergrössert dargestellten Lichtumlenkstruktur aufweist, wobei der Querschnitt der jeweiligen Erhebung in der Fläche 19 als Kreis K ausgebildet ist. Der Kreis K weist einen Durchmesser d sowie einen Mittelpunkt M auf. Dabei zeigen die Figuren 10a, 10b je eine Ausführungsform einer als halbkugelförmigen Erhebung ausgebildeten Lichtumlenkstruktur, die Figur 10c eine als zylinderförmige Erhebung ausgebildete Lichtumlenkstruktur, die Figuren 10d, 10f je eine Ausführungsform einer als kegelförmige Erhebung ausgebildete Lichtumlenkstruktur sowie die Figuren 10e, 10g je eine Ausführungsform einer als kegelstumpfförmige Erhebung ausgebildete Lichtumlenkstruktur.

Bei den Lichtumlenkstrukturen gemäss den Figuren 10a, 10b, 10f sowie 10g verjüngt sich der Querschnitt der Lichtumlenkstrukturen von der Fläche 19 in eine von der Rückseite des Lichtleiters 1" " abgewandte Richtung kontinuierlich. Bei der Lichtumlenkstruktur gemäss Figur 10c bleibt der Querschnitt der Lichtumlenkstruktur von der Fläche 19 in der von der Rückseite des Lichtleiters 1" " abgewandten Richtung gleich. Bei den Lichtumlenkstrukturen gemäss den Figuren 10d sowie 10e bleibt der Querschnitt der Lichtumlenkstrukturen von der Fläche 19 in der von der Rückseite des Lichtleiters 1" " abgewandten Richtung teilweise gleich und verjüngt sich teilweise kontinuierlich.

Die Figuren 11a - 11g zeigen jeweils schematisch sowie stark vergrössert den Abschnitt des erfindungsgemässen Lichtleiters gemäss der Figur 8a, wobei ein jeweiliger Abschnitt, anstatt der Vertiefung gemäss der Figur 8a, jeweils schematisch dargestellt eine Ausführungsform einer als Erhebung ausgebildeten und stark vergrössert dargestellten Lichtumlenkstruktur aufweist, wobei der Querschnitt der jeweiligen Erhebung in der Fläche 19 als Vieleck ausgebildet ist. Um das Vieleck ist jeweils ein Umkreis U mit einem Mittelpunkt M sowie einem Durchmesser d gelegt. Dabei zeigen die Figuren 11a, 11b, 11c, 11e, 11f, 11g je eine Ausführungsform einer als pyramidenförmige Erhebung ausgebildete Lichtumlenkstruktur sowie die Figur 11d eine als quaderförmige Erhebung ausgebildete Lichtumlenkstruktur.

Die Erhebungen gemäss den Figuren 10a - 10g sowie den Figuren 11a - 11g des Lichtleiters 1" " können beispielsweise mittels Ätzen oder Spritzguss oder Fräsen hergestellt werden. Diese genannten Verfahren sind dem Fachmann bekannt um als Lichtumlenkstrukturen ausgebildete Erhebungen bei einem Lichtleiter herzustellen.

Die Figur 12 zeigt schematisch eine räumliche Ansicht einer ersten Ausführungsform eines erfindungsgemässen Bauteils 22 umfassend die erste Ausführungsform des erfindungsgemässen Lichtleiters gemäss Figur 1, wobei die in Figur 12 dargestellte erste Ausführungsform des erfindungsgemässen Lichtleiters, im Gegensatz zur in Figur 1 dargestellten ersten Ausführungsform des erfindungsgemässen Lichtleiters, noch zusätzliche Lichtumlenkstrukturen sowie eine zusätzliche Lichteinkoppelfläche aufweist. Auf die zusätzlichen Lichtumlenkstrukturen sowie die zusätzliche Lichteinkoppelfläche wird noch genauer eingegangen.

Das Bauteil 22 gemäss Figur 12 umfasst ein flächiges Dekorelement 23 mit einer Sichtseite 24 und einer Rückseite 25, wobei das gesamte flächige Dekorelement 23 für für den Menschen sichtbares Licht durchscheinend ist, sowie den erfindungsgemässen Lichtleiter gemäss Figur 12, welcher unmittelbar an der Rückseite 25 des flächigen Dekorelementes 23 angeordnet ist. Zwischen dem flächigen Dekorelement 23 sowie dem Lichtleiter gemäss Figur 12 kann selbstverständlich wenigstens eine Schicht angeordnet sein, welche wenigstens bereichsweise durchscheinend ist, bevorzugt vollflächig durchscheinend ist, für für den Menschen sichtbares Licht. Das Merkmal, dass das Dekorelement 23 flächig ausgebildet ist, bedeutet, dass das Dekorelement 23, wie in Figur 12 ersichtlich, entlang von zwei Dimensionen wesentlich grösser, insbesondere um ein Vielfaches grösser, dimensioniert ist als entlang einer dritten Dimension, welche sich in der Regel senkrecht zur Flächenausdehnung der Sichtseite 24 des Dekorelementes 23 erstreckt. Das flächige Dekorelement 23 ist, wie in Figur 12 erkennbar, bandförmig bzw. als Band ausgebildet.

Der Lichtleiter gemäss Figur 12 weist zwei einander gegenüberliegende Lichteinkoppelflächen 14 auf, wobei benachbart zu den Lichteinkoppelflächen 14 je zwei als Leuchtdioden ausgebildete Leuchtmittel 15 angeordnet sind, welche Licht aussenden, welches über die Lichteinkoppelflächen 14 in den Lichtleiter eingekoppelt wird. Das in den Lichtleiter gemäss Figur 12 eingekoppelte Licht pflanzt sich im Lichtleiter durch Totalreflexion fort. Das sich im Lichtleiter fortpflanzende Licht wird über die stark vergrössert dargestellten und im Lichtleiter gemäss Figur 12 als halbkugelförmige Vertiefungen ausgebildeten Lichtumlenkstrukturen 2, 3, 4, 5, 6, 7, 8, 9, 10, 11, 12, 13, welche in einer mit gestrichelten Linien dargestellten Fläche 19 einen als Kreis ausgebildeten Querschnitt aufweisen, umgelenkt, und über eine Sichtseite 45 des Lichtleiters gemäss Figur 12, aus dem Lichtleiter ausgekoppelt. Die Fläche 19 wird durch eine einer Rückseite 17 des Lichtleiters gemäss Figur 12 gegenüberliegende Sichtfläche 18 des Lichtleiters gemäss Figur 12 definiert. Die Lichtumlenkstrukturen 2, 3, 4, 5, 6, 7, 8, 9, 10, 11, 12, 13 sowie die Sichtfläche 18 bilden gemeinsam die Sichtseite 45 des Lichtleiters gemäss Figur 12. Die Querschnitte der Lichtumlenkstrukturen 2, 3, 4, 5, 6, 7, 8, 9, 10, 11, 12, 13 in der Fläche 19 sind erfindungsgemäss derart dimensioniert sowie zueinander angeordnet wie im Zusammenhang mit dem Lichtleiter 1 gemäss den Figuren 1, 2 beschrieben, so dass die Lichtumlenkstrukturen 2, 3, 4, 5, 6, 7, 8, 9, 10, 11, 12, 13 des Lichtleiters gemäss Figur 12 im unbeleuchteten Zustand des Lichtleiters gemäss Figur 12 kaum sichtbar sind für einen menschlichen Betrachter, wenn dessen Augen in einem üblichen Abstand von ca. 30cm - 70cm von der Sichtseite 45 auf die Sichtseite 45 schauen. Das über wenigstens einen Teilbereich der Sichtfläche 18 und/oder über wenigstens eine Lichtumlenkstruktur der Lichtumlenkstrukturen 2, 3, 4, 5, 6, 7, 8, 9, 10, 11, 12, 13, bzw. wenigstens einem Teilbereich der Sichtseite 45, ausgekoppelte Licht gelangt in das flächige Dekorelement 23, pflanzt sich in diesem fort und verlässt das Bauteil 22 über die Sichtseite 24 des flächigen Dekorelementes 23.

An der Rückseite 17 des Lichtleiters gemäss Figur 12 sind noch, zusätzlich zu den Lichtumlenkstrukturen 2, 3, 4, 5, 6, 7, 8, 9, 10, 11, 12, 13, die bereits genannten stark vergrössert dargestellten zusätzlichen Lichtumlenkstrukturen 46, 47, 48, 49, 50, 51, 52, 53, 54, 55, 56, 57 angeordnet. Die Lichtumlenkstrukturen 46, 47, 48, 49, 50, 51, 52, 53, 54, 55, 56, 57 sind, wie in Figur 12 ersichtlich, als halbkugelförmige Vertiefungen im Lichtleiter gemäss Figur 12 ausgebildet. An den zusätzlichen Lichtumlenkstrukturen 46, 47, 48, 49, 50, 51, 52, 53, 54, 55, 56, 57 kann im Lichtleiter gemäss Figur 12 sich fortpflanzendes Licht in Richtung der Sichtseite 45 umgelenkt und über die Sichtseite 45 ausgekoppelt werden. Die Rückseite 17 definiert eine mit gestrichelten Linien dargestellte weitere Fläche 19' wobei die zusätzlichen Lichtumlenkstrukturen 46, 47, 48, 49, 50, 51, 52, 53, 54, 55, 56, 57 alle, wie in Figur 12 ersichtlich, einen in der weiteren Fläche 19' angeordneten Querschnitt aufweisen. Die in der durch die Rückseite 17 definierten weiteren Fläche 19' als Kreis ausgebildeten Querschnitte der zusätzlichen Lichtumlenkstrukturen 46, 47, 48, 49, 50, 51, 52, 53, 54, 55, 56, 57 sind erfindungsgemäss derart dimensioniert sowie relativ zueinander angeordnet, dass die zusätzlichen Lichtumlenkstrukturen 46, 47, 48, 49, 50, 51, 52, 53, 54, 55, 56, 57 im unbeleuchteten Zustand des Lichtleiters gemäss Figur 12 kaum sichtbar sind für einen menschlichen Betrachter, wenn dessen Augen in einem üblichen Abstand von ca. 30cm - 70cm von der Sichtseite 45 auf die Sichtseite 45 schauen. Die Querschnitte in der weiteren Fläche 19' der zusätzlichen Lichtumlenkstrukturen 46, 47, 48, 49, 50, 51, 52, 53, 54, 55, 56, 57 müssen nicht zwingend erfindungsgemäss dimensioniert sowie relativ zueinander angeordnet sein. Eine erfindungsgemässe Dimensionierung sowie relative Anordnung zueinander der Querschnitte in der weiteren Fläche 19' der zusätzlichen Lichtumlenkstrukturen 46, 47, 48, 49, 50, 51, 52, 53, 54, 55, 56, 57 ist aber bevorzugt.

Die Lichtumlenkstrukturen 2, 3, 4, 5, 6, 7, 8, 9, 10, 11, 12, 13, 46, 47, 48, 49, 50, 51, 52, 53, 54, 55, 56, 57 des Lichtleiters gemäss Figur 12 sind, wie in Figur 12 ersichtlich, identisch ausgebildet. Zudem sind die Querschnitte der Lichtumlenkstrukturen 2, 3, 4, 5, 6, 7 in der Fläche 19 relativ zueinander angeordnet wie die Querschnitte der zusätzlichen Lichtumlenkstrukturen 46, 47, 48, 49, 50, 51 in der weiteren Fläche 19'. Somit bilden die Querschnitte der Lichtumlenkstrukturen 2, 3, 4, 5, 6, 7 in der Fläche 19 sowie die zusätzlichen Lichtumlenkstrukturen 46, 47, 48, 49, 50, 51 in der weiteren Fläche 19' dasselbe Muster, nämlich jeweils ein reckeckförmiges Muster. Über dem Querschnitt einer jeweiligen Lichtumlenkstruktur der zusätzlichen Lichtumlenkstrukturen 46, 47, 48, 49, 50, 51 in der weiteren Fläche 19' ist jeweils der Querschnitt einer jeweiligen Lichtumlenkstruktur der Lichtumlenkstrukturen 2, 3, 4, 5, 6, 7 in der Fläche 19 angeordnet. So ist beispielsweise über dem Querschnitt der Lichtumlenkstruktur 46 in der weiteren Fläche 19' der Querschnitt der Lichtumlenkstruktur 2 in der Fläche 19 angeordnet. Das in diesem Abschnitt bezüglich den Querschnitten der Lichtumlenkstrukturen 2, 3, 4, 5, 6, 7 sowie den Querschnitten der zusätzlichen Lichtumlenkstrukturen 46, 47, 48, 49, 50, 51 Gesagte gilt analog, wie in Figur 12 ersichtlich, auch bezüglich den Querschnitten der Lichtumlenkstrukturen 8, 9, 10, 11, 12, 13 in der Fläche 19 sowie den Querschnitten der zusätzlichen Lichtumlenkstrukturen 52, 53, 54, 55, 56, 57 in der weiteren Fläche 19'.

Das flächige Dekorelement 23 ist beispielsweise durch eine transparente oder transluzente Beschichtung, insbesondere durch eine transparente oder transluzente PVD-Beschichtung, oder einen transluzenten oder transparenten Lack oder einen transluzenten oder transparenten Kunststoff gebildet. Bevorzugt ist das flächige Dekorelement 23, wie in Figur 12 erkennbar, einstückig ausgebildet. Das flächige Dekorelement 23 ist dadurch einfach herstellbar und weist eine optisch ansprechende Ausgestaltung auf. Das flächige Dekorelement 23 kann in die als Vertiefungen ausgebildeten Lichtumlenkstrukturen 2, 3, 4, 5, 6, 7, 8, 9, 10, 11, 12, 13 wenigstens teilweise eingreifen.

Figur 13 zeigt schematisch eine räumliche Ansicht einer zweiten Ausführungsform des erfindungsgemässen Bauteils umfassend eine sechste Ausführungsform des erfindungsgemässen Lichtleiters. Das Bauteil 22' gemäss Figur 13 umfasst ein flächiges Dekorelement 23 mit einer Sichtseite 24 und einer Rückseite 25, wobei ein erfindungsgemässer Lichtleiter 1"' " an der Rückseite 25 des flächigen Dekorelementes 23 angeordnet ist. Das flächige Dekorelement 23 ist, wie in Figur 13 erkennbar, bandförmig bzw. als Band ausgebildet. Das flächige Dekorelement 23 ist aus einem für für den Menschen sichtbares Licht opakem Material hergestellt. Das flächige Dekorelement 23 ist beispielsweise aus einem Metall, wie insbesondere Aluminium, Stahl oder Edelstahl, hergestellt. Das flächige Dekorelement kann aber auch aus einem opaken Kunststoff, oder einem anderen opaken Material, wie beispielsweise Holz, hergestellt sein. Das Dekorelement 23 weist einen würfelförmigen Durchbruch 26 sowie einen zylinderförmigen Durchbruch 27 auf, wobei, wie in Figur 13 ersichtlich, beide Durchbrüche 26, 27 von der Sichtseite 24 des flächigen Dekorelementes 23 durch das flächige Dekorelement 23 hindurch zur Rückseite 25 des flächigen Dekorelementes 23 sich erstrecken.

Der Lichtleiter 1"' " weist eine Lichteinkoppelfläche 14, eine Rückseite 17 sowie einer der Rückseite 17 gegenüberliegende Sichtfläche 18 auf, wobei die Sichtfläche 18 eine Fläche 19 definiert. Zudem weist der Lichtleiter 1"' " stark vergrössert dargestellte im Lichtleiter 1"' " als halbkugelförmige Vertiefungen ausgebildete Lichtumlenkstrukturen 2, 3, 4, 5 sowie stark vergrössert dargestellte im Lichtleiter 1"' " als halbkugelförmige Vertiefungen ausgebildete Lichtumlenkstrukturen 6, 7, 8 auf. Wie in Figur 13 ersichtlich, sind die Lichtumlenkstrukturen 2, 3, 4, 5 unterhalb des Durchbruchs 26 und die Lichtumlenkstrukturen 6, 7, 8 unterhalb des Durchbruchs 27 angeordnet. Die Lichtumlenkstrukturen 2, 3, 4, 5, 6, 7, 8 sowie die Sichtfläche 18 bilden gemeinsam eine Sichtseite 45 des Lichtleiters 1"' ". Über die Sichtfläche 18 sowie die Lichtumlenkstrukturen 2, 3, 4, 5, 6, 7, 8 bzw. die Sichtseite 45 ist Licht aus dem Lichtleiter 1"' " auskoppelbar. Benachbart zur Lichteinkoppelfläche 14 ist ein als Leuchtdiode ausgebildetes Leuchtmittel 15 angeordnet, um über die Lichteinkoppelfläche 14 Licht in den Lichtleiter 1'" " einzukoppeln. Das in den Lichtleiter 1"' " eingekoppelte Licht pflanzt sich im Lichtleiter 1"' " durch Totalreflexion fort und wird über die Lichtumlenkstrukturen 2, 3, 4, 5, 6, 7, 8 umgelenkt und über die Sichtseite 45 aus dem Lichtleiter 1"' " ausgekoppelt. Das über die Sichtseite 45 ausgekoppelte Licht pflanzt in den Durchbrüchen 26, 27 fort und verlässt das Bauteil 22' über die Sichtseite 24 des flächigen Dekorelementes 23. Die Lichtumlenkstrukturen 2, 3, 4, 5, 6, 7, 8 weisen alle, wie in Figur 13 ersichtlich, einen in der Fläche 19 angeordneten und als Kreis ausgebildeten Querschnitt auf. Die Querschnitte der Lichtumlenkstrukturen 2, 3, 4, 5, 6, 7, 8 sind erfindungsgemäss in der Fläche 19 wiederum derart dimensioniert sowie zueinander angeordnet, dass die Lichtumlenkstrukturen 2, 3, 4, 5, 6, 7, 8 im unbeleuchteten Zustand des Lichtleiters 1"' " kaum sichtbar sind für einen menschlichen Betrachter, wenn dessen Augen in einem üblichen Abstand von ca. 30cm - 70cm von der Sichtseite 45 auf die Sichtseite 45 schauen.

Beim Lichtleiter 1"' " gemäss Figur 13 sind an der Rückseite 17 unterhalb des Durchbruchs 26 stark vergrössert dargestellte zusätzliche Lichtumlenkstrukturen 12, 13, 28, 29 und unterhalb des Durchbruchs 27 stark vergrössert dargestellte zusätzliche Lichtumlenkstrukturen 9, 10, 11 angeordnet. Die zusätzlichen Lichtumlenkstrukturen 9, 10, 11, 12, 13, 28, 29 sind, wie in Figur 13 ersichtlich, als halbkugelförmige Vertiefungen im Lichtleiter 1"' " ausgebildet. An den Lichtumlenkstrukturen 9, 10, 11 kann im Lichtleiter 1"' " sich fortpflanzendes Licht in Richtung der Sichtseite 45 des Lichtleiters 1"' " umgelenkt und über die Sichtseite 45 sowie den Durchbruch 27 aus dem Dekorelement 23 ausgekoppelt werden. Analog kann an den zusätzlichen Lichtumlenkstrukturen 12, 13, 28, 29 im Lichtleiter 1"' " sich fortpflanzendes Licht in Richtung der Sichtseite 45 des Lichtleiters 1"' " umgelenkt und über die Sichtseite 45 sowie den Durchbruch 26 aus dem Dekorelement 23 ausgekoppelt werden. Die Rückseite 17 definiert eine mit gestrichelten Linien dargestellte weitere Fläche 19', wobei die Lichtumlenkstrukturen 9, 10, 11, 12, 13, 28, 29 alle, wie in Figur 13 ersichtlich, einen in der weiteren Fläche 19' angeordneten und als Kreis ausgebildeten Querschnitt aufweisen. Die in der durch die Rückseite 17 definierten weiteren Fläche 19' als Kreis ausgebildeten Querschnitte der zusätzlichen Lichtumlenkstrukturen 9, 10, 11, 12, 13, 28, 29 sind erfindungsgemäss wiederum derart dimensioniert sowie zueinander angeordnet, dass die zusätzlichen Lichtumlenkstrukturen 9, 10, 11, 12, 13, 28, 29 im unbeleuchteten Zustand des Lichtleiters 1"' " kaum sichtbar sind für einen menschlichen Betrachter, wenn dessen Augen in einem üblichen Abstand von ca. 30cm - 70cm von der Sichtseite 45 auf die Sichtseite 45 schauen. Die Querschnitte der zusätzlichen Lichtumlenkstrukturen 9, 10, 11, 12, 13, 28, 29 in der weiteren Fläche 19' müssen nicht zwingend erfindungsgemäss dimensioniert sowie relativ zueinander angeordnet sein. Eine erfindungsgemässe Dimensionierung sowie relative Anordnung zueinander der Querschnitte der zusätzlichen Lichtumlenkstrukturen 9, 10, 11, 12, 13, 28, 29 in der weiteren Fläche 19' ist aber bevorzugt.

Die Lichtumlenkstrukturen 2, 3, 4, 5, 12, 13, 28, 29 des Lichtleiters 1'" " gemäss Figur 13 sind, wie in Figur 13 ersichtlich, identisch ausgebildet. Zudem ist in Figur 13 erkennbar, dass die Querschnitte der Lichtumlenkstrukturen 2, 3, 4, 5 in der Fläche 19 relativ zueinander angeordnet wie die Querschnitte der zusätzlichen Lichtumlenkstrukturen 12, 13, 28, 29 in der weiteren Fläche 19'. Somit bilden die Querschnitte der Lichtumlenkstrukturen 2, 3, 4, 5 in der Fläche 19 sowie die Querschnitte der zusätzlichen Lichtumlenkstrukturen 12, 13, 28, 29 in der weiteren Fläche 19' dasselbe Muster, nämlich jeweils ein quadratförmiges Muster. Über dem Querschnitt einer jeweiligen Lichtumlenkstruktur der zusätzlichen Lichtumlenkstrukturen 12, 13, 28, 29 ist jeweils kein Querschnitt einer jeweiligen Lichtumlenkstruktur der Lichtumlenkstrukturen 2, 3, 4, 5 angeordnet. Sämtliche Querschnitte der Lichtumlenkstrukturen 2, 3, 4, 5 in der Fläche 19 sind somit seitlich versetzt angeordnet relativ zu sämtlichen Querschnitten der zusätzlichen Lichtumlenkstrukturen 12, 13, 28, 29 in der weiteren Fläche 19'.

Des Weiteren ist in Figur 13 erkennbar, dass die Querschnitte der Lichtumlenkstrukturen 6, 7, 8 in der Fläche 19 relativ zueinander angeordnet wie die Querschnitte der zusätzlichen Lichtumlenkstrukturen 9, 10, 11 in der weiteren Fläche 19'. Somit bilden die Querschnitte der Lichtumlenkstrukturen 6, 7, 8 in der Fläche 19 sowie die Querschnitte der zusätzlichen Lichtumlenkstrukturen 9, 10, 11 in der weiteren Fläche 19' dasselbe Muster, nämlich jeweils ein dreieckförmiges Muster. Über dem Querschnitt einer jeweiligen Lichtumlenkstruktur der zusätzlichen Lichtumlenkstrukturen 9, 10, 11 in der weiteren Fläche 19' ist jeweils kein Querschnitt einer jeweiligen Lichtumlenkstruktur der Lichtumlenkstrukturen 6, 7, 8 in der Fläche 19 angeordnet. Sämtliche Querschnitte der Lichtumlenkstrukturen 6, 7, 8 in der Fläche 19 sind somit seitlich versetzt angeordnet relativ zu sämtlichen Querschnitten der zusätzlichen Lichtumlenkstrukturen 9, 10, 11 in der weiteren Fläche 19'.

Allgemein formuliert ist der Querschnitt einer Lichtumlenkstruktur in der Fläche 19 seitlich versetzt zu einem Querschnitt einer zusätzlichen Lichtumlenkstruktur in der weiteren Fläche 19' angeordnet, bzw. der Querschnitt einer Lichtumlenkstruktur in der Fläche 19 ist nicht über einem Querschnitt einer zusätzlichen Lichtumlenkstruktur in der weiteren Fläche 19' angeordnet, wenn die Projektion des Querschnittes der Lichtumlenkstruktur in der Fläche 19 auf die weitere Fläche 19' nicht mit dem Querschnitt der zusätzlichen Lichtumlenkstruktur in der weiteren Fläche 19' überlappt.

Die seitliche Versetzung der Querschnitte der zusätzlichen Lichtumlenkstrukturen 9, 10, 11 in der weiteren Fläche 19' relativ zu den Querschnitten der Lichtumlenkstrukturen 6, 7, 8 in der Fläche 19, d.h. kein Querschnitt der Lichtumlenkstrukturen 6, 7, 8 ist über einem Querschnitt der zusätzlichen Lichtumlenkstrukturen 9, 10, 11 angeordnet, bzw. die seitliche Versetzung der Querschnitte der zusätzlichen Lichtumlenkstrukturen 12, 13, 28, 29 relativ zu den Querschnitten der Lichtumlenkstrukturen 2, 3, 4, 5 bewirkt den Vorteil, dass eine höhere Leuchtdichte an der Sichtseite 45 des Lichtleiters 1"' " erzielt werden kann.

Zwischen dem flächigen Dekorelement 23 und dem erfindungsgemässer Lichtleiter 1"' " kann selbstverständlich wenigstens eine transluzente oder transparente Schicht, wie z.B. wenigstens eine Folie, welche in Figur 13 nicht dargestellt ist, angeordnet sein. Wenigstens eine dieser wenigstens einen Schicht kann beispielweise wenigstens teilweise in den Durchbruch 26 und / oder den Durchbruch 27 eingreifen. Hierbei füllt die eingreifende wenigstens eine Schicht den Durchbruch 26 und / oder Durchbruch 27 teilweise oder vollständig aus. Möglich ist auch, dass wenigstens eine dieser wenigstens einen Schicht sich durch den Durchbruch 26 und / oder den Durchbruch 27 hindurcherstreckt und aus dem Durchbruch 26 und / oder aus dem Durchbruch 27 herausragt. Der Durchbruch 26 und / oder der Durchbruch 27 kann beispielsweise auch mit einem fliessfähigen, transluzenten oder transparenten Material, wie beispielsweise einem Lack, wenigstens teilweise befüllt sein. Es kann beispielsweise auch ein Lack wenigstens bereichsweise auf der Sichtseite 24 des flächigen Dekorelementes 23 angeordnet sein. Wie in Figur 13 ersichtlich, ist der Durchbruch 26 derart ausgestaltet, dass von der Sichtseite 24 her ein als Quadrat ausgebildetes graphisches Element sichtbar ist. Im Falle des Durchbruches 27 ist ein von der Sichtseite 24 her als Kreis ausgebildetes graphisches Element sichtbar. Der Durchbruch 26 und / oder der Durchbruch 27 kann aber auch anders ausgestaltet sein, dass von der Sichtseite 24 her ein anderes graphisches Element sichtbar ist.

Figur 14 zeigt schematisch eine räumliche Ansicht einer dritten Ausführungsform des erfindungsgemässen Bauteils umfassend eine siebte Ausführungsform des erfindungsgemässen Lichtleiters.

Das Bauteil 22" gemäss Figur 14 umfasst ein flächiges Dekorelement 23 mit einer Sichtseite 24 und einer Rückseite 25, wobei ein erfindungsgemässer Lichtleiter 1'" "' an der Rückseite 25 des flächigen Dekorelementes 23 angeordnet ist. Das flächige Dekorelement 23 ist, wie in Figur 14 erkennbar, bandförmig bzw. als Band ausgebildet.

Das flächige Dekorelement 23 ist aus einem transparenten Kunststoff hergestellt, so dass das gesamte flächige Dekorelement 23 durchscheinend ist für für den Menschen sichtbares Licht. Zwischen dem flächigen Dekorelement 23 sowie dem Lichtleiter 1"' '" kann selbstverständlich wenigstens eine weitere, nicht dargestellte Schicht, angeordnet sein, welche wenigstens bereichsweise durchscheinend ist, bevorzugt vollflächige durchscheinend ist, für für den Menschen sichtbares Licht. Der Lichtleiter 1"' "' weist eine Lichteinkoppelfläche 14 auf, wobei benachbart zur Lichteinkoppelfläche 14 ein als Leuchtdiode ausgebildetes Leuchtmittel 15 angeordnet ist, um über die Lichteinkoppelfläche 14 Licht in den Lichtleiter 1"' "'einzukoppeln. Das in den Lichtleiter 1"' "' eingekoppelte Licht pflanzt sich im Lichtleiter 1"' "' durch Totalreflexion fort. Das sich im Lichtleiter 1"' "' fortpflanzende Licht wird über stark vergrössert dargestellte und im Lichtleiter 1"' "' als halbkugelförmige Vertiefungen ausgebildete Lichtumlenkstrukturen 2, 3, 4, 5, 6, 7, 8, 9, 10, 11, 12, 13, 28, 29, 30, 31, 32, 33, 34, welche in einer mit gestrichelten Linien dargestellten Fläche 19 einen als Kreis ausgebildeten Querschnitt aufweisen, umgelenkt, und über eine Sichtseite 45 des Lichtleiters 1"' "', aus dem Lichtleiter 1'" "' ausgekoppelt. Die Fläche 19 wird durch eine Sichtfläche 18 des Lichtleiters 1"' "' definiert, wobei die Sichtfläche 18 einer Rückseite 17 des Lichtleiters 1"' "' gegenüberliegt. Die Sichtseite 45 wird gemeinsam durch die Sichtfläche 18 sowie die Lichtumlenkstrukturen 2, 3, 4, 5, 6, 7, 8, 9, 10, 11, 12, 13, 28, 29, 30, 31, 32, 33, 34 gebildet.

Die Querschnitte der Lichtumlenkstrukturen 2, 3, 4, 5, 6, 7, 8, 9, 10, 11, 12, 13, 28, 29, 30, 31, 32, 33, 34 sind erfindungsgemäss in der Fläche 19 derart dimensioniert sowie zueinander angeordnet, so dass die Lichtumlenkstrukturen 2, 3, 4, 5, 6, 7, 8, 9, 10, 11, 12, 13, 28, 29, 30, 31, 32, 33, 34 des Lichtleiters 1"' "' im unbeleuchteten Zustand des Lichtleiters 1"' "' kaum sichtbar sind für einen menschlichen Betrachter, wenn dessen Augen in einem üblichen Abstand von ca. 30cm - 70cm von der Sichtseite 45 auf die Sichtseite 45 schauen. Das über die Sichtseite 45 des Lichtleiters 1"' "' ausgekoppelte Licht gelangt in das flächige Dekorelement 23, pflanzt sich in diesem fort und verlässt das Bauteil 22" über die Sichtseite 24 des flächigen Dekorelementes 23.

Wie in der Figur 14 ersichtlich, sind die Lichtumlenkstrukturen 2, 3, 4, 5, 6, 7, 8, 9 derart zueinander angeordnet, dass diese gemeinsam den Buchstaben "A" bilden. Die Lichtumlenkstrukturen 10, 11, 12, 13, 28 sind zueinander derart angeordnet, dass diese gemeinsam den Buchstaben "C" bilden und die Lichtumlenkstrukturen 29, 30, 31, 32, 33, 34 sind derart zueinander angeordnet, dass diese gemeinsam den Buchstaben "L" bilden. Wird mittels des Leuchtmittels 15 Licht in den Lichtleiter 1"' "' eingekoppelt, so lenken die Lichtumlenkstrukturen 2, 3, 4, 5, 6, 7, 8, 9 ein Teil des eingekoppelten Lichtes derart um, dass an der Sichtseite 24 des flächigen Dekorelementes 23 der Buchstabe "A" sichtbar ist. Die Lichtumlenkstrukturen 10, 11, 12, 13, 28 lenken ein Teil des eingekoppelten Lichtes derart um, dass an der Sichtseite 24 des flächigen Dekorelementes 23 der Buchstabe "C" sichtbar ist und die Lichtumlenkstrukturen 29, 30, 31, 32, 33, 34 lenken einen Teil des eingekoppelten Lichtes derart um, dass an der Sichtseite 24 des flächigen Dekorelementes 23 der Buchstabe "L" sichtbar ist. Selbstverständlich können die Lichtumlenkstrukturen beliebig angeordnet sein und somit beliebige graphische Elemente, wie beispielsweise ein Symbol, ein Ornament, ein Buchstaben, ein Schriftzug oder ein Logo, bilden.

Bevorzugt ist der Lichtleiter 1"' "', wie in Figur 14 erkennbar, unmittelbar an der Rückseite 25 des flächigen Dekorelementes 23 angeordnet. Zwischen dem flächigen Dekorelement 23 sowie dem Lichtleiter 1"' '" kann aber auch wenigstens eine in Figur 14 nicht dargestellte, weitere Schicht angeordnet sein.

Figur 15 zeigt schematisch eine räumliche Ansicht einer Anordnung umfassend eine vierte Ausführungsform des erfindungsgemässen Bauteils, wobei dieses Bauteil eine achte, neunte sowie zehnte Ausführungsform des erfindungsgemässen Lichtleiters umfasst. Figur 16 zeigt schematisch eine räumliche Ansicht der Anordnung gemäss Figur 15, wobei in der Figur 16 die Lichtumlenkstrukturen der erfindungsgemässen Lichtleiter stark vergrössert dargestellt sind. Beispielsweise ist die Anordnung gemäss den Figuren 15, 16 im Innenraum eines Kraftfahrzeuges angeordnet, wobei das weiter unten genannte flächige Dekorelement 23 beispielsweise eine Armaturenbrettabdeckung oder eine Mittelkonsolenabdeckung ist.

Die Anordnung 35 gemäss Figur 15 umfasst ein erfindungsgemässes Bauteil 22"'. Das Bauteil 22'" weist ein flächiges Dekorelement 23 mit einer Sichtseite 24 sowie einer Rückseite 25 auf, wobei an der Rückseite 25 ein erfindungsgemässer erster Lichtleiter 1"" "", unterhalb des ersten Lichtleiters 1"" "" ein zweiter erfindungsgemässer Lichtleiter 1'" "' "' und unterhalb des zweiten Lichtleiters 1'" "' "' ein dritter erfindungsgemässer Lichtleiter 1""' ""' angeordnet ist. Die Anordnung 35 umfasst zudem ein erstes Leuchtmittel 39, ein zweites Leuchtmittel 40 und ein drittes Leuchtmittel 41, wobei alle drei Leuchtmittel als Leuchtdiode ausgestaltetes sind, sowie in der Figur 15 nicht dargestellte Steuermittel zur Steuerung der Zuführung von elektrischem Strom über die Kabel 16 zum ersten Leuchtmittel 39, zum zweiten Leuchtmittel 40 sowie zum dritten Leuchtmittel 41. Das erste Leuchtmittel 39 dient dazu, Licht in den ersten Lichtleiter 1"" "" einzukoppeln, das zweite Leuchtmittel 40 dient dazu, Licht in den zweiten Lichtleiter 1'" "' "' einzukoppeln und das dritte Leuchtmittel 41 dient dazu, Licht in den dritten Lichtleiter 1'"" ""' einzukoppeln. Das Dekorelement 23 und somit auch dessen Sichtseite 24 ist bevorzugt aus einem transluzenten oder transparenten Material gebildet, wie beispielsweise aus einem transluzenten oder transparenten Kunststoff, aus einem transluzenten oder transparenten Lack oder aus einer transluzenten oder transparenten Beschichtung, wie beispielsweise einer PVD-Beschichtung.

Wie in Figur 15 erkennbar, stellt ein erster Teilbereich 36 der Sichtseite 24 des flächigen Dekorelementes 23 schematisch einen Telefongrundkörper dar und ein zweiter Teilbereich 37 der Sichtseite 24 des flächigen Dekorelementes 23 stellt schematisch einen Telefonhörer in einer ersten Position dar, wobei der Telefonhörer in dieser ersten Position auf den Telefongrundkörper aufgelegt ist. Ein von einer gestrichelten Linie begrenzter dritter Teilbereich 38 der Sichtseite 24 des Dekorelementes 23 stellt den genannten Telefonhörer in einer zweiten Position dar, wobei in dieser zweiten Position der Telefonhörer vom Telefongrundkörper abgehoben ist. Der erste Teilbereich 36 bzw. der Telefongrundkörper, der zweite Teilbereich 37 bzw. der aufgelegte Telefonhörer, sowie der dritte Teilbereich 38 bzw. der abgehobene Telefonhörer, werden durch Hinterleuchtung der Sichtseite 24 des flächigen Dekorelementes 23 durch die erfindungsgemässen Lichtleiter 1"" "", 1"' "' "', 1""' "", generiert. Dies wird nun anhand der Figur 16 diskutiert.

Wie in Figur 16 ersichtlich, weist der dritte Lichtleiter 1""' ""' halbkugelförmige als Vertiefungen im dritten Lichtleiter 1""' ""' ausgebildete Lichtumlenkstrukturen 2, 3, 4, 5, 6 auf, welche derart zueinander angeordnet sind, dass der im Rahmen der Figur 15 besprochene erste Teilbereich 36 der Sichtseite 24 des flächigen Dekorelementes 23, welcher als Telefongrundkörper ausgebildet ist, durch Hinterleuchtung der Sichtseite 24 durch an den Lichtumlenkstrukturen 2, 3, 4, 5, 6 umgelenktem Licht generiert werden kann. Hierzu bilden die Lichtumlenkstrukturen 2, 3, 4, 5, 6 eine Insel, welche etwa die Form des ersten Teilbereiches 36 aufweist. Der auf dem dritten Lichtleiter 1'"" "", angeordnete zweite Lichtleiter 1"' "' "' weist ebenfalls halbkugelförmige als Vertiefungen im zweiten Lichtleiter 1"' "' "' ausgebildete Lichtumlenkstrukturen 7, 8, 9, 10 auf. Diese Lichtumlenkstrukturen 7, 8, 9, 10 sind zueinander derart angeordnet, dass der zweite Teilbereich 37 der Sichtseite 24 des Dekorelementes 23, welcher als auf dem Telefongrundkörper aufgelegter Telefonhörer ausgebildet ist, durch Hinterleuchtung der Sichtseite 24 durch an den Lichtumlenkstrukturen 7, 8, 9, 10 umgelenktem Licht generiert werden kann. Schliesslich weist der auf dem zweiten Lichtleiter 1"' "' "' angeordnete erste Lichtleiter 1"" "" halbkugelförmige als Vertiefungen im ersten Lichtleiter 1"" "" ausgebildete Lichtumlenkstrukturen 11, 12, 13, 28 auf, welche zueinander derart angeordnet sind, dass der dritte Teilbereich 38 der Sichtseite 24 des Dekorelementes 23, welcher als vom Telefongrundkörper mit einer gestrichelten Line dargestellter, abgehobener Telefonhörer ausgebildet ist, durch Hinterleuchtung der Sichtseite 24 des flächigen Dekorelementes 23 durch an den Lichtumlenkstrukturen 11, 12, 13, 28 umgelenktem Licht generiert werden kann. Die Lichtleiter 1"" "", 1"' "' "', 1""' "", weisen je eine Sichtfläche 18 auf. Der Sichtseite 18 eines jeweiligen Lichtleiters liegt einer Rückseite 17 des jeweiligen Lichtleiters gegenüber. Die Sichtfläche 18 des Lichtleiters 1"" "" sowie die Lichtumlenkstrukturen 11, 12, 13, 28 bilden gemeinsam eine Sichtseite 45 des Lichtleiters 1"" "". Die Sichtfläche 18 des Lichtleiters 1"' "' "' sowie die Lichtumlenkstrukturen 7, 8, 9, 10 bilden gemeinsam eine Sichtseite 45 des Lichtleiters 1"' "' "'. Die Sichtfläche 18 des Lichtleiters 1""' "", sowie die Lichtumlenkstrukturen 2, 3, 4, 5, 6 bilden gemeinsam eine Sichtseite 45 des Lichtleiters 1""' ""'. Die Sichtfläche 18 des Lichtleiters 1"" "" definiert eine mit gestrichelten Linien dargestellte Fläche 19, die Sichtfläche 18 des Lichtleiters 1"' "' "' definiert eine mit gestrichelten Linien dargestellte Fläche 19 und die Sichtfläche 18 des Lichtleiters 1""' "", definiert eine mit gestrichelten Linien dargestellte Fläche 19.

Die als Kreise ausgebildeten Querschnitte der Lichtumlenkstrukturen 2, 3, 4, 5, 6, 7, 8, 9, 10, 11, 12, 13, 28 sind erfindungsgemäss in der Fläche 19 des jeweiligen Lichtleiters 1"'' '''', 1"' "' ''', 1""' ""' derart ausgebildet und zueinander angeordnet, dass im unbeleuchteten Zustand der Lichtleiter 1"" "", 1"' "' "', 1""' ""', die Lichtumlenkstrukturen 2, 3, 4, 5, 6, 7, 8, 9, 10, 11, 12, 13, 28 kaum sichtbar sind für einen menschlichen Betrachter, dessen Augen in einem üblichen Abstand von ca. 30cm - 70cm von der Sichtseite 45 des jeweiligen Lichtleiters 1"" "", 1"' "' "', 1""' "", die jeweilige Sichtseite 45 betrachten. Wie in der Figur 15 ersichtlich, sind die Teilbereiche 36, 37, 38 vollständig voneinander beabstandet. Die in den Figuren 15, 16 nicht dargestellten Steuermittel zum Steuern der Zuführung von elektrischem Strom zum ersten Leuchtmittel 39, zum zweiten Leuchtmittel 40 sowie zum dritten Leuchtmittel 41 der Anordnung 35 sind bevorzugt derart ausgestaltet, dass wenigstens zwei Teilbereiche der Gruppe umfassend den ersten Teilbereich 36, den zweiten Teilbereich 37 sowie den dritten Teilbereich 38 zeitlich gleichzeitig oder nacheinander beleuchtbar sind.

Die bezüglich zu den Lichtleitern 1"" "", 1"' "' "', 1""' "", jeweilig angeordneten Leuchtmittel 39, 40, 41 der Anordnung 35 werden nun mittels der Steuermittel beispielsweise wie folgt gesteuert: In der Grundstellung der Anordnung 35 werden beispielsweise das dritte Leuchtmittel 41 sowie das zweite Leuchtmittel 40 mit elektrischem Strom versorgt. Somit leuchten der Telefongrundkörper sowie der aufgelegte Telefonhörer auf der Sichtseite 24 des flächigen Dekorelementes 23. Wird nun ein Telefonanruf empfangen, unterbrechen die Steuermittel der Anordnung 35 die Zufuhr des elektrischen Stroms zum zweiten Leuchtmittel 40, so dass der aufgelegte Telefonhörer auf der Sichtseite 24 des flächigen Dekorelementes 23 erlischt. Gleichzeitig mit dem Erlöschen des aufgelegten Telefonhörers oder danach, versorgen die Steuermittel der Anordnung 35 das erste Leuchtmittel 39 mit elektrischem Strom und es leuchten somit der erste Teilbereich 36 bzw. der Telefongrundkörper, sowie der dritte Teilbereich 38 bzw. der vom Telefongrundkörper abgehobene Telefonhörer, auf der Sichtseite 24 des flächigen Dekorelementes 23 auf. Ist das Telefongespräch beendet, so wird die Zufuhr von elektrischem Strom von den Steuermitteln der Anordnung 35 zum ersten Leuchtmittel 39 unterbrochen und das zweite Leuchtmittel 40 wird wieder mit elektrischem Strom versorgt, so dass der erste Teilbereich 36, bzw. der Telefongrundkörper, wieder gemeinsam mit dem zweiten Teilbereich 37, bzw. dem auf dem Telefongrundkörper aufgelegten Telefonhörer, auf der Sichtseite 24 des flächigen Dekorelementes 23 aufleuchten.

Analog zu diesem Beispiel betreffend den Funktionszustand eines Telefons, kann beispielsweise die Schliessposition eines Schlosses einer Tür eines Kraftfahrzeuges, wie beispielweise "Schloss offen" sowie "Schloss geschlossen", dargestellt werden.

Die im Zusammenhang mit den Lichtleitern gemäss den Figuren 1 - 6 sowie den Figuren 12 - 16 beschriebenen Leuchtmittel sind als Leuchtdiode oder als Leuchtröhre ausgestaltet. Das Leuchtmittel kann beispielsweise aber auch als Leuchtfolie, insbesondere als eine Elektrolumineszenzfolie oder OLED, als eine Glühbirne oder als wenigstens ein weiterer Lichtleiter, in welcher Licht über ein weiteres Leuchtmittel eingekoppelt wird, ausgestaltet sein.

Die flächigen Dekorelemente 23 gemäss der Figuren 12 - 16 weisen bevorzugt eine mittlere Dicke von 1 Millimeter oder kleiner auf, bevorzugter eine mittlere Dicke von 0.4 Millimeter oder kleiner auf. Im Falle, dass das flächige Dekorelement 23 aus Metall hergestellt ist, weist das flächige Dekorelement 23 bevorzugt eine mittlere Dicke von 0.1 Millimeter - 0.3 Millimeter auf. Im Falle, dass das flächige Dekorelement 23 aus einem Lack hergestellt ist, weist das flächige Dekorelement 23 bevorzugt eine mittlere Dicke von 1 Mikrometer - 20 Mikrometer auf. Im Falle, dass das flächige Dekorelement 23 aus Kunststoff hergestellt ist, weist das flächige Dekorelement 23 bevorzugt eine mittlere Dicke von 10 Mikrometer - 500 Mikrometer auf. Im Falle, dass das flächige Dekorelement 23 aus einer PVD-Beschichtung hergestellt ist, weist das flächige Dekorelement 23 bevorzugt eine mittlere Dicke von 0.1 Mikrometer - 3 Mikrometer auf.

Die oben beschriebenen Lichtleiter 1, 1', 1", 1"', 1" ", 1"' ", 1"' ''', 1"" "', 1"" "", 1"' "' "', 1'"'' "", sind beispielsweise aus Polymethylmethacrylat (PMMA), Polymethacrylmethylimid (PMMI), Polycarbonat (PC), optischem Silikon, transparentem Polyamid oder Polyethylenterephthalat (PET) hergestellt. Die Verwendung der genannten Materialien sind dem Fachmann für die Herstellung von Lichtleitern bekannt.

Beispielsweise sind die Bauteile 22, 22', 22", 22"' gemäss den Figuren 12 - 16 als eine Zierleiste, ein Bedienelement, wie beispielsweise eine Taste, bevorzugt als eine Fuss- oder Einstiegleiste eines Fahrzeuges ausgebildet. Das Fahrzeug ist bevorzugt ein Kraftfahrzeug. Die erfindungsgemässen Bauteile 22, 22', 22", 22'" können beispielsweise im Innenbereich und / oder Aussenbereich des Kraftfahrzeuges vorgesehen sein. Die Bauteile 22, 22', 22", 22'" können beispielsweise aber auch als eine Zierleiste oder als ein Bedienelement, wie beispielsweise eine Taste, eines Haushaltsgerätes ausgebildet sein. Das Haushaltsgerät ist beispielsweise ein Kühlschrank, ein Dampfgarer, eine Waschmaschine, ein Backofen, ein Kochherd, eine Geschirrspülmaschine oder eine Kaffeemaschine. Die Bauteile 22, 22', 22", 22'" können aber beispielsweise auch als eine Zierleiste eines Möbels ausgestaltet sein.

Die vorstehende Erfindung ist selbstverständlich nicht auf die beschriebenen Ausführungsformen beschränkt, und eine Vielzahl von Abwandlungen ist möglich. So können beispielsweise die in den Figuren 1 - 6 sowie den Figuren 12 - 16 dargestellten Lichtleiter, anstatt als Quader, beispielsweise auch als Zylinder, Torus oder auch als ein anderes dreidimensionales Objekt ausgebildet sein. Die Lichteinkoppelfläche(n) 14, die Rückseite 17, die Sichtfläche 18 als auch die durch die Sichtfläche 18 definierte Fläche 19 der Lichtleiter gemäss den Figuren 1 - 6 sowie den Figuren 12 - 16 sowie die durch die Rückseite 17 definierte weitere Fläche 19' der Lichtleiter gemäss den Figuren 12, 13, sind als Ebene ausgestaltet, können aber auch eine andere Form, wie beispielweise eine gekrümmt Form, aufweisen. Zudem können die Lichtumlenkstrukturen gemäss den Figuren 1 - 6 sowie den Figuren 12 - 16, anders ausgebildet sein als in den Figuren dargestellt. Mögliche andere Ausbildungen von Lichtumlenkstrukturen sind beispielhaft in den Figuren 8a - 8f, den Figuren 9a - 9i, den Figuren 10a - 10g sowie den Figuren 11a - 11g dargestellt. Des Weiteren können die Lichtleiter gemäss den Figuren 1 - 6 sowie den Figuren 12 - 16 eine grössere oder einer geringere Anzahl an Lichtumlenkstrukturen aufweisen als in den jeweiligen Figuren dargestellt sind. Die Lichtumlenkstrukturen der Lichtleiter gemäss den Figuren 1 - 6 sowie gemäss den Figuren 12 - 16 können erfindungsgemäss zueinander auch anders angeordnet sein als in den jeweiligen Figuren dargestellt. Die Lichtleiter gemäss den Figuren 1 - 6 sowie gemäss den Figuren 12 - 16 weisen ausschliesslich Lichtumlenkstrukturen auf, welche entweder als Vertiefung im Lichtleiter oder als Erhebung ausgebildet sind. Selbstverständlich können die Lichtleiter gemäss der vorliegenden Erfindung auch Erhebungen und Vertiefungen im Lichtleiter aufweisen. Selbstverständlich können die Lichtleiter gemäss den Figuren 1 - 6 sowie gemäss den Figuren 14 - 16 auch wenigstens eine zusätzliche Lichtumlenkstruktur, bevorzugt wenigstens zwei zusätzliche Lichtumlenkstrukturen, aufweisen, welche bevorzugt an der Rückseite der Lichtleiter angeordnet ist/sind. Falls die Lichtleiter gemäss den Figuren 1 - 6 sowie gemäss den Figuren 14 - 16 wenigstens zwei zusätzliche Lichtumlenkstrukturen aufweisen, so sind bevorzugt die Querschnitte dieser zusätzlichen Lichtumlenkstrukturen in der weiteren Fläche 19' erfindungsgemäss dimensioniert sowie zueinander angeordnet, so dass diese kaum sichtbar sind für einen menschlichen Betrachter, dessen Augen in einem üblichen Abstand von ca. 30cm - 70cm von der Sichtseite 45 der Lichtleiter gemäss den Figuren 1 - 6 sowie gemäss den Figuren 14 - 16 die Sichtseite 45 der Lichtleiter gemäss den Figuren 1 - 6 sowie gemäss den Figuren 14 - 16 betrachten. Eine Vielzahl weiterer Abwandlungen ist möglich.

**BEZUGSZEICHENLISTE**

| | | | |
|---|---|---|---|
| 1 | Lichtleiter | 26 | Durchbruch |
| 1 | Lichtleiter | 27 | Durchbruch |
| 1" | Lichtleiter | 35 | Anordnung |
| 1"' | Lichtleiter | 36 | erster Teilbereich |
| 1" " | Lichtleiter | 37 | zweiter Teilbereich |
| 1'" | Lichtleiter | 38 | dritter Teilbereich |
| 1"' "' | Lichtleiter | 39 | erstes Leuchtmittel |
| l"" '" | Lichtleiter | 40 | zweites Leuchtmittel |
| 1"" "" | erster Lichtleiter | 41 | drittes Leuchtmittel |
| 1'" '" '" | zweiter Lichtleiter | 42 | Teilbereich |
| 1""' ""' | dritter Lichtleiter | 43 | innere Oberfläche |
| | | 44 | äussere Oberfläche |
| Ziffern 2 bis 13: | Lichtumlenkstruktur | 45 | Sichtseite |
| Ziffern 28bis 34: | Lichtumlenkstruktur | Ziffern 46 bis 57: | Lichtumlenkstruktur |
| 14 | Lichteinkoppelfläche | | |
| 15 | Leuchtmittel | d | Durchmesser |
| 16 | Kabel | D1, D2 | Dicke |
| 17 | Rückseite | U | Umkreis |
| 18 | Sichtfläche | M | Mittelpunkt |
| 19, 19' | Fläche | A | Abstand |
| 20 | Schnittebene | H | Höhe |
| 21 | Grundkörper | T | Tiefe |
| 22 | Bauteil | K | Kreis |
| 22' | Bauteil | Q | Querschnitt |
| 22" | Bauteil | G | Kreisfläche |
| 22"' | Bauteil | Qf | Quadratfläche |
| 23 | flächiges Dekorelement | | |
| 24 | Sichtseite | | |
| 25 | Rückseite | | |

## Patentansprüche

1. Bauteil (22, 22', 22", 22"') umfassend wenigstens ein flächiges Dekorelement (23) mit einer Sichtseite (24) und einer Rückseite (25) sowie wenigstens einen Lichtleiter (1, 1', 1" , 1'", 1" ", 1'" ", 1'" "', 1"" "', 1''", "", 1'" '" "', 1'"'' ""') umfassend Lichtumlenkstrukturen (2, 3, 4, 5, 6, 7, 8, 9, 10, 11, 12, 13, 28, 29, 30, 31, 32, 33, 34, 46, 47, 48, 49, 50, 51, 52, 53, 54, 55, 56, 57), wenigstens eine Lichteinkoppelfläche (14), eine Sichtfläche (18) sowie eine Rückseite (17), welche der Sichtfläche gegenüberliegt,
wobei die Sichtfläche (18) eine Fläche (19) definiert,
wobei die Rückseite (17) des Lichtleiters eine weitere Fläche (19') definiert,
wobei der Lichtleiter wenigstens zwei Lichtumlenkstrukturen (2, 3, 4, 5, 6, 7, 8, 9, 10, 11, 12, 13) umfasst, welche einen in der Fläche (19) angeordneten Querschnitt aufweisen, wobei der Querschnitt einer jeweiligen Lichtumlenkstruktur in der Fläche (19) ein Kreis (K, K2, K3, K4, K5, K6, K7, K8, K9, K10, K11, K12, K13) ist oder um den Querschnitt (Q, Q2, Q3, Q4, Q5, Q6, Q7, Q8, Q9, Q10, Q11, Q12, Q13) einer jeweiligen Lichtumlenkstruktur in der Fläche (19) ein Umkreis (U, U2, U3, U4, U5, U6, U7, U8, U9, U10, U11, U12, U13) legbar ist,
wobei der Lichtleiter wenigstens zwei zusätzliche Lichtumlenkstrukturen (9, 10, 11, 12, 13, 28, 29) umfasst, welche einen in der weiteren Fläche (19') angeordneten Querschnitt aufweisen, wobei der Querschnitt einer jeweiligen zusätzlichen Lichtumlenkstruktur in der weiteren Fläche (19') ein Kreis ist oder um den Querschnitt einer jeweiligen zusätzlichen Lichtumlenkstruktur in der weiteren Fläche (19') ein Umkreis legbar ist,
wobei über die Lichteinkoppelfläche (14) in den Lichtleiter eingekoppeltes Licht über die Sichtfläche (18) sowie die wenigstens zwei Lichtumlenkstrukturen aus dem Lichtleiter auskoppelbar ist,
wobei der Durchmesser d (d2, d3, d4, d5, d6, d7, d8, d9, d10, d11, d12, d13) des Kreises bzw. des Umkreises in der Fläche (19) einer jeweiligen Lichtumlenkstruktur (2, 3, 4, 5, 6, 7, 8, 9, 10, 11, 12, 13) im Bereich von grösser als 0 Mikrometer bis 50 Mikrometer liegt,
wobei der Durchmesser d des Kreises bzw. des Umkreises in der weiteren Fläche (19') einer jeweiligen zusätzlichen Lichtumlenkstruktur (9, 10, 11, 12, 13, 28, 29) im Bereich von grösser als 0 Mikrometer bis 50 Mikrometer liegt,
wobei der Mittelpunkt (M2, M3, M4, M5, M6, M7, M8, M9, M10, M11, M12, M13) des Kreises bzw. des Umkreises in der Fläche (19) einer jeweiligen Lichtumlenkstruktur (2) zum Mittelpunkt (M3, M4, M5, M6, M7, M8, M9, M10, M11, M12, M13) des Kreises bzw. des Umkreises in der Fläche (19) sämtlicher weiteren Lichtumlenkstrukturen (3, 4, 5, 6, 7, 8, 9, 10, 11, 12, 13) einen Abstand A (A23, A24, A25, A26, A27, A28, A29, A210, A211, A212, A213) aufweist, wobei der Abstand A grösser als der Durchmesser d (d2) des Kreises bzw. des Umkreises in der Fläche (19) der jeweiligen Lichtumlenkstruktur (2) geteilt durch den Wert 0.33 ist,
wobei der Mittelpunkt des Kreises bzw. des Umkreises in der weiteren Fläche (19') einer jeweiligen zusätzlichen Lichtumlenkstruktur (9) zum Mittelpunkt des Kreises bzw. des Umkreises in der weiteren Fläche (19') sämtlicher weiteren zusätzlichen Lichtumlenkstrukturen (10, 11, 12, 13, 28, 29) einen Abstand A aufweist, wobei der Abstand A grösser als der Durchmesser d des Kreises bzw. des Umkreises in der weiteren Fläche (19') der jeweiligen zusätzlichen Lichtumlenkstruktur (9) geteilt durch den Wert 0.33 ist,
**dadurch gekennzeichnet, dass**
das flächige Dekorelement (23) wenigstens einen Bereich (23, 26, 27) aufweist, welcher für für den Menschen sichtbares Licht durchscheinend ist und wobei an der Rückseite (25) des flächigen Dekorelements (23) der wenigstens eine Lichtleiter angeordnet ist, und dass wenigstens ein Bereich (26, 27) des wenigstens einen Bereichs (23, 26, 27), welcher für für den Menschen sichtbares Licht durchscheinend ist, durch einen Durchbruch (26, 27) im flächigen Dekorelement (23) gebildet ist, und dass
der Querschnitt in der Fläche (19) von sämtlichen der wenigstens zwei Lichtumlenkstrukturen (2, 3, 4, 5, 6, 7, 8, 9, 10, 11, 12, 13) seitlich versetzt angeordnet ist relativ zum Querschnitt in der weiteren Fläche (19') sämtlicher der wenigstens zwei zusätzlichen Lichtumlenkstrukturen (9, 10, 11, 12, 13, 28, 29).

2. Bauteil (22, 22', 22", 22"') nach Anspruch 1, **dadurch gekennzeichnet, dass** der Durchmesser d des Kreises (K, K2, K3, K4, K5, K6, K7, K8, K9, K10, K11, K12, K13) bzw. des Umkreises (U, U2, U3, U4, U5, U6, U7, U8, U9, U10, U11, U12, U13) in der Fläche (19) im Bereich von 5 Mikrometer bis 40 Mikrometer liegt, bevorzugt im Bereich von 5 Mikrometer bis 30 Mikrometer liegt, bevorzugter im Bereich von 10 Mikrometer bis 25 Mikrometer liegt, noch bevorzugter im Bereich von 10 Mikrometer bis 20 Mikrometer liegt, am bevorzugtesten im Bereich von 10 Mikrometer bis 15 Mikrometer liegt.

3. Bauteil (22, 22', 22", 22"') nach Anspruch 1 oder 2, **dadurch gekennzeichnet, dass** der Querschnitt der wenigstens zwei Lichtumlenkstrukturen (2, 3, 4, 5, 6, 7, 8, 9, 10, 11, 12, 13) in der Fläche (19) ein Kreis (K2, K3, K4, K5, K6, K7, K8, K9, K10, K11, K12, K13) ist, wobei die wenigstens zwei Kreise denselben Durchmesser d aufweisen, oder dass um den Querschnitt der wenigstens zwei Lichtumlenkstrukturen in der Fläche (19) ein Umkreis (U2, U3, U4, U5, U6, U7, U8, U9, U10, U11, U12, U13) legbar ist, wobei die wenigstens zwei Umkreise denselben Durchmesser d aufweisen oder dass der Querschnitt wenigstens einer der wenigstens zwei Lichtumlenkstrukturen in der Fläche (19) ein Kreis ist und um den Querschnitt wenigstens einer der wenigstens zwei Lichtumlenkstrukturen in der Fläche (19) ein Umkreis legbar ist, wobei der wenigstens eine Kreis und der wenigstens eine Umkreis denselben Durchmesser d aufweisen.

4. Bauteil (22, 22', 22", 22'") nach Anspruch 1 oder 2, **dadurch gekennzeichnet, dass** der Durchmesser d des Kreises (K2, K3, K4, K5, K6, K7, K8, K9, K10, K11, K12, K13) bzw. des Umkreises (U2, U3, U4, U5, U6, U7, U8, U9, U10, U11, U12, U13) in der Fläche (19) wenigstens einer Lichtumlenkstruktur (2, 3, 4, 5, 6, 7, 8, 9, 10, 11, 12, 13) der wenigstens zwei Lichtumlenkstrukturen unterschiedlich ist zum Durchmesser d des Kreises bzw. des Umkreises in der Fläche (19) sämtlicher weiteren Lichtumlenkstrukturen der wenigstens zwei Lichtumlenkstrukturen.

5. Bauteil (22, 22', 22", 22'") nach einem der vorangehenden Ansprüche, **dadurch gekennzeichnet, dass** wenigstens eine der wenigstens zwei Lichtumlenkstrukturen (2, 3, 4, 5, 6, 7, 8, 9, 10, 11, 12, 13) sich von der Fläche (19) in Richtung der Rückseite (17) erstreckt sowie bevorzugt wenigstens eine der wenigstens einen der wenigstens zwei Lichtumlenkstrukturen, welche sich von der Fläche (19) in Richtung der Rückseite (17) erstreckt, als Vertiefung im Lichtleiter ausgebildet ist.

6. Bauteil (22, 22', 22", 22"') nach Anspruch 5, **dadurch gekennzeichnet, dass** wenigstens eine jeweilige Lichtumlenkstruktur (2, 3, 4, 5, 6, 7, 8, 9, 10, 11, 12, 13) der wenigstens einen der wenigstens zwei Lichtumlenkstrukturen, welche sich von der Fläche (19) in Richtung der Rückseite (17) erstreckt, eine maximale Tiefe T aufweist, welche das 2.0-fache oder weniger des Durchmessers d des Kreises (K2, K3, K4, K5, K6, K7, K8, K9, K10, K11, K12) bzw. des Umkreises (U2, U3, U4, U5, U6, U7, U8, U9, U10, U11, U12, U13) in der Fläche (19) dieser jeweiligen Lichtumlenkstruktur ist, welche bevorzugt das 1.0-fache oder weniger des Durchmessers d des Kreises bzw. des Umkreises in der Fläche (19) dieser jeweiligen Lichtumlenkstruktur ist, welche bevorzugter das 0.5-fache oder weniger des Durchmessers d des Kreises bzw. des Umkreises in der Fläche (19) dieser jeweiligen Lichtumlenkstruktur ist.

7. Bauteil (22, 22', 22", 22'") nach Anspruch 5, **dadurch gekennzeichnet, dass** der Lichtleiter (1) eine Dicke D (D1, D2) aufweist sowie wenigstens eine jeweilige Lichtumlenkstruktur der wenigstens einen der wenigstens zwei Lichtumlenkstrukturen (2, 3, 4, 5, 6, 7, 8, 9, 10, 11, 12, 13), welche sich von der Fläche (19) in Richtung der Rückseite (17) erstreckt, eine jeweilige maximale Tiefe T aufweist, wobei das Verhältnis der Dicke D (D1, D2) zur jeweiligen maximalen Tiefe T 5:1 oder grösser ist, bevorzugt 10:1 oder grösser ist.

8. Bauteil (22, 22', 22", 22'") nach einem der Ansprüche 5 - 7, **dadurch gekennzeichnet, dass** der Querschnitt (K2, K3, K4, K5, K6, K7, K8, K9, K10, K11, K12, K13 U2, U3, U4, U5, U6, U7, U8, U9, U10, U11, U12, U13) wenigstens einer der wenigstens einen der wenigstens zwei Lichtumlenkstrukturen (2, 3, 4, 5, 6, 7, 8, 9, 10, 11, 12, 13) welche sich von der Fläche (19) in Richtung der Rückseite (17) erstreckt, sich von der Fläche (19) in Richtung der Rückseite (17) verjüngt oder gleich bleibt oder teilweise gleich bleibt sowie teilweise sich verjüngt.

9. Bauteil (22, 22', 22", 22'") nach einem der Ansprüche 5 - 8, **dadurch gekennzeichnet, dass** wenigstens eine der wenigstens einen der wenigstens zwei Lichtumlenkstrukturen (2, 3, 4, 5, 6, 7, 8, 9, 10, 11, 12, 13), welche sich von der Fläche (19) in Richtung der Rückseite (17) erstreckt, als Vertiefung ausgebildet ist, wobei eine innere Oberfläche (43) des Lichtleiters die Vertiefung begrenzt, und wobei wenigstens ein Teilbereich (42) der inneren Oberfläche (43) des Lichtleiters, welcher die Vertiefung begrenzt und welcher direkt an die Fläche (19) anschliesst, mit der Fläche (19) einen Winkel von 30 - 50°, bevorzugt einen Winkel von ca. 45°, bildet.

10. Bauteil (22, 22', 22", 22"') nach einem der Ansprüche 1 - 4, **dadurch gekennzeichnet, dass** wenigstens eine der wenigstens zwei Lichtumlenkstrukturen (2, 3, 4, 5, 6, 7, 8, 9, 10, 11, 12, 13) sich von der Fläche (19) in eine von der Rückseite (17) abgewandte Richtung wegerstreckt sowie bevorzugt wenigstens eine der wenigstens einen der wenigstens zwei Lichtumlenkstrukturen, welche sich von der Fläche in eine von der Rückseite abgewandte Richtung wegerstreckt, als Erhebung ausgebildet ist.

11. Bauteil (22, 22', 22", 22"') nach Anspruch 10, **dadurch gekennzeichnet, dass** wenigstens eine jeweilige Lichtumlenkstruktur (2, 3, 4, 5, 6, 7, 8, 9, 10, 11, 12, 13) der wenigstens einen der wenigstens zwei Lichtumlenkstrukturen, welche sich von der Fläche (19) in eine von der Rückseite (17) abgewandte Richtung wegerstreckt, eine maximale Höhe H aufweist, welche das 2.0-fache oder weniger des Durchmessers d des Kreises (K2, K3, K4, K5, K6, K7, K8, K9, K10, K11, K12, K13) bzw. des Umkreises (U2, U3, U4, U5, U6, U7, U8, U9, U10, U11, U12, U13) in der Fläche (19) dieser jeweiligen Lichtumlenkstruktur ist, welche bevorzugt das 1.0-fache oder weniger des Durchmessers d des Kreises bzw. des Umkreises in der Fläche (19) dieser jeweiligen Lichtumlenkstruktur ist, welche bevorzugter das 0.5-fache oder weniger des Durchmessers d des Kreises bzw. des Umkreises in der Fläche (19) dieser jeweiligen Lichtumlenkstruktur ist.

12. Bauteil (22, 22', 22", 22'") nach Anspruch 10, **dadurch gekennzeichnet, dass** der Lichtleiter (1') zwischen der Rückseite (17) und der Fläche (19) eine Dicke D (D1, D2) aufweist sowie wenigstens eine jeweilige Lichtumlenkstruktur der wenigstens einen der wenigstens zwei Lichtumlenkstrukturen (2, 3, 4, 5, 6, 7, 8, 9, 10, 11, 12, 13), welche sich von der Fläche (19) in eine von der Rückseite (17) abgewandte Richtung wegerstreckt, eine jeweilige maximale Höhe H aufweist, wobei das Verhältnis der Dicke D (D1, D2) zur jeweiligen maximalen Höhe H 5:1 oder grösser ist, bevorzugt 10:1 oder grösser ist.

13. Bauteil (22, 22', 22", 22"') nach einem der Ansprüche 10 - 12, **dadurch gekennzeichnet, dass** der Querschnitt (K2, K3, K4, K5, K6, K7, K8, K9, K10, K11, K12, K13 U2, U3, U4, U5, U6, U7, U8, U9, U10, U11, U12, U13) wenigstens einer der wenigstens einen der wenigstens zwei Lichtumlenkstrukturen (2, 3, 4, 5, 6, 7, 8, 9, 10, 11, 12, 13) welche sich von der Fläche (19) in eine von der Rückseite (17) abgewandte Richtung wegerstreckt, sich von der Fläche (19) in die von der Rückseite (17) abgewandte Richtung verjüngt oder gleich bleibt oder teilweise gleich bleibt sowie teilweise sich verjüngt.

14. Bauteil (22, 22', 22", 22"') nach einem der Ansprüche 10 - 13, **dadurch gekennzeichnet, dass** wenigstens eine der wenigstens einen der wenigstens zwei Lichtumlenkstrukturen (2, 3, 4, 5, 6, 7, 8, 9, 10, 11, 12, 13) welche sich von der Fläche (19) in eine von der Rückseite (17) abgewandte Richtung wegerstreckt, als Erhebung ausgebildet ist, wobei die Erhebung eine äussere Oberfläche (44) aufweist, und wobei wenigstens ein Teilbereich (42) der äusseren Oberfläche (44) der Erhebung, welcher direkt an die Fläche (19) anschliesst, mit der Fläche (19) einen Winkel von 30 - 50°, bevorzugt einen Winkel von ca. 45°, bildet.

15. Bauteil (22, 22") nach einem der Ansprüche 1 - 14, **dadurch gekennzeichnet, dass** wenigstens ein Bereich (23) des wenigstens einen Bereich (23), welcher für für den Menschen sichtbares Licht durchscheinend ist, durch ein transluzentes oder ein transparentes Material gebildet ist, insbesondere durch einen transluzenten oder einen transparenten Kunststoff gebildet ist.

16. Bauteil (22, 22', 22", 22"') nach einem der Ansprüche 1-5, **dadurch gekennzeichnet, dass** wenigstens eine der wenigstens zwei zusätzlichen Lichtumlenkstrukturen (9, 10, 11, 12, 13, 28, 29) sich von der weiteren Fläche (19') in Richtung der Sichtseite (24) erstreckt sowie bevorzugt wenigstens eine der wenigstens einen der wenigstens zwei zusätzlichen Lichtumlenkstrukturen, welche sich von der weiteren Fläche (19') in Richtung der Sichtseite (24) erstreckt, als Vertiefung im Lichtleiter ausgebildet ist.

17. Anordnung (35) umfassend wenigstens ein Bauteil (22'") nach einem der Ansprüche 1 - 15, wobei an der Rückseite (25) des flächigen Dekorelementes (23) des Bauteils (22'") wenigstens ein erster Lichtleiter (1"" ""), ein zweiter Lichtleiter (1"' "' '") sowie ein dritter Lichtleiter (1"'" ""') angeordnet sind, welche übereinander angeordnet sind, wobei der erste Lichtleiter (1"" "") geeignet ist wenigstens einen ersten Teilbereich (36) des wenigstens einen für für den Menschen sichtbares Licht durchscheinenden Bereich des flächigen Dekorelementes (23) des Bauteils (22'") zu beleuchten, wobei der zweite Lichtleiter (1'" "' "') geeignet ist wenigstens einen zweiten Teilbereich (37) des wenigstens einen für für den Menschen sichtbares Licht durchscheinenden Bereich des flächigen Dekorelementes (23) des Bauteils (22"') zu beleuchten, wobei der dritte Lichtleiter (1""' ""') geeignet ist wenigstens einen dritten Teilbereich (38) des wenigstens einen für für den Menschen sichtbares Licht durchscheinenden Bereich des flächigen Dekorelementes (23) des Bauteils (22"') zu beleuchten, wobei die Anordnung (35) zusätzlich wenigstens ein erstes Leuchtmittel (39) zum Einkoppeln von Licht in den ersten Lichtleiter (1"" ""), ein zweites Leuchtmittel (40) zum Einkoppeln von Licht in den zweiten Lichtleiter (1"' "' "') sowie ein drittes Leuchtmittel (41) zum Einkoppeln von Licht in den dritten Lichtleiter (1""' ""') aufweist sowie Steuermittel zum Steuern wenigstens des ersten Leuchtmittels (39), des zweiten Leuchtmittels (40) sowie des dritten Leuchtmittels (41) aufweist.

## Claims

1. A component (22, 22', 22", 22"') comprising at least one flat decorative element (23) with a visible side (24) and a rear side (25) and at least one light guide (1, 1', 1", 1"', 1" ", 1'" ", 1'" "', 1'''' '", 1"'' "", 1'" '" '", 1""' "") comprising light deflecting structures (2, 3, 4, 5, 6, 7, 8, 9, 10, 11, 12, 13, 28, 29, 30, 31, 32, 33, 34, 46, 47, 48, 49, 50, 51, 52, 53, 54, 55, 56, 57), at least one light coupling surface (14), a visible surface (18) and a rear side (17) which is opposite the visible surface,
wherein the visible surface (18) defines a surface (19),
wherein the rear side (17) of the light guide defines a further surface (19'),
wherein the light guide comprises at least two light deflecting structures (2, 3, 4, 5, 6, 7, 8, 9, 10, 11, 12, 13) which comprise a cross-section arranged in the surface (19), wherein the cross-section of a respective light deflecting structure in the surface (19) is a circle (K, K2, K3, K4, K5, K6, K7, K8, K9, K10, K11, K12, K13) or a circumscribed circle (U, U2, U3, U4, U5, U6, U7, U8, U9, U10, U11, U12, U13) that can be laid in the surface (19) around the cross-section (Q, Q2, Q3, Q4, Q5, Q6, Q7, Q8, Q9, Q10, Q11, Q12, Q13) of a particular light deflecting structure,
wherein the light guide comprises at least two additional light deflecting structures (9, 10, 11, 12, 13, 28, 29), which comprise a cross-section arranged in the further surface (19'), wherein the cross-section of a respective additional light deflecting structure in the further surface (19') is a circle or a circumscribed circle that can be laid around the cross-section of a respective additional light deflecting structure in the further surface (19'),
wherein light coupled into the light guide via the light coupling surface (14) can be coupled out of the light guide via the visible surface (18) and the at least two light deflecting structures,
wherein the diameter d (d2, d3, d4, d5, d6, d7, d8, d9, d10, d11, d12, d13) of the circle or circumscribed circle in the surface (19) of a respective light deflecting structure (2, 3, 4, 5, 6, 7, 8, 9, 10, 11, 12, 13) is in the range from greater than 0 micrometres to 50 micrometres,
where the diameter d of the circle or circumscribed circle in the further surface (19') of a respective additional light deflecting structure (9, 10, 11, 12, 13, 28, 29) is in the range from greater than 0 micrometres to 50 micrometres,
wherein the centre point (M2, M3, M4, M5, M6, M7, M8, M9, M10, M11, M12, M13) of the circle or of the circumscribed circle in the surface (19) of a respective light deflecting structure (2) has a distance A (A23, A24, A25, A26, A27, A28, A29, A210, A211, A212, A213) to the centre point (M3, M4, M5, M6, M7, M8, M9, M10, M11, M12, M13) of the circle or of the circumscribed circle in the surface (19) of all other light deflecting structures (3, 4, 5, 6, 7, 8, 9, 10, 11, 12, 13), the distance A being greater than the diameter d (d2) of the circle or circumscribed circle in the surface (19) of the respective light deflecting structure (2) divided by the value 0.33,
wherein the centre point of the circle or the circumscribed circle in the further surface (19') of a respective additional light deflecting structure (9) has a distance A from the centre point of the circle or the circumscribed circle in the further surface (19') of all further additional light deflecting structures (10, 11, 12, 13, 28, 29), the distance A being greater than the diameter d of the circle or the circumscribed circle in the further surface (19') of the respective additional light deflecting structure (9) divided by the value 0.33,
**characterised in that**
the flat decorative element (23) has at least one region (23, 26, 27) which is translucent for light visible to humans and wherein the at least one light guide is arranged on the rear side (25) of the flat decorative element (23), and that at least one region (26, 27) of the at least one region (23, 26, 27) which is translucent for light visible to humans is formed by an opening (26, 27) in the flat decorative element (23), and that
the cross-section in the surface (19) of all of the at least two light deflecting structures (2, 3, 4, 5, 6, 7, 8, 9, 10, 11, 12, 13) is arranged laterally offset relative to the cross-section in the further surface (19') of all of the at least two additional light deflecting structures (9, 10, 11, 12, 13, 28, 29).

2. The component (22, 22', 22", 22"') according to claim 1, **characterized in that** the diameter d of the circle (K, K2, K3, K4, K5, K6, K7, K8, K9, K10, K11, K12, K13) or of the circumscribed circle (U, U2, U3, U4, U5, U6, U7, U8, U9, U10, U11, U12, U13) in the surface (19) is in the range of 5 micrometres to 40 micrometres, preferably in the range of 5 micrometres to 30 micrometres, more preferably in the range of 10 micrometres to 25 micrometres, even more preferably in the range of 10 micrometres to 20 micrometres, most preferably in the range of 10 micrometres to 15 micrometres.

3. The component (22, 22', 22", 22'") according to claim 1 or 2, **characterised in that** the cross-section of the at least two light deflecting structures (2, 3, 4, 5, 6, 7, 8, 9, 10, 11, 12, 13) in the surface (19) is a circle (K2, K3, K4, K5, K6, K7, K8, K9, K10, K11, K12, K13), wherein the at least two circles have the same diameter d, or that a circumscribed circle (U2, U3, U4, U5, U6, U7, U8, U9, U10, U11, U12, U13) can be laid in the surface (19) around the cross-section of the at least two light deflecting structures, wherein the at least two circumscribed circles have the same diameter d or that the cross-section of at least one of the at least two light deflecting structures in the surface (19) is a circle and a circumscribed circle can be laid around the cross-section of at least one of the at least two light deflecting structures in the surface (19), wherein the at least one circle and the at least one circumscribed circle have the same diameter d.

4. The component (22, 22', 22", 22"') according to claim 1 or 2, **characterized in that** the diameter d of the circle (K2, K3, K4, K5, K6, K7, K8, K9, K10, K11, K12, K13) or of the circumscribed circle (U2, U3, U4, U5, U6, U7, U8, U9, U10, U11, U12, U13) in the surface (19) of at least one light deflecting structure (2, 3, 4, 5, 6, 7, 8, 9, 10, 11, 12, 13) of the at least two light deflecting structures is different from the diameter d of the circle or circumscribed circle in the surface (19) of all the other light deflecting structures of the at least two light deflecting structures.

5. The component (22, 22', 22", 22"') according to any one of the preceding claims, **characterised in that** at least one of the at least two light deflecting structures (2, 3, 4, 5, 6, 7, 8, 9, 10, 11, 12, 13) extends from the surface (19) in the direction of the rear side (17) and preferably at least one of the at least one of the at least two light deflecting structures, which extends from the surface (19) in the direction of the rear side (17), is formed as a recess in the light guide.

6. The component (22, 22', 22", 22"') according to claim 5, **characterized in that** at least one respective light deflecting structure (2, 3, 4, 5, 6, 7, 8, 9, 10, 11, 12, 13) of the at least one of the at least two light deflecting structures, which extends from the surface (19) in the direction of the rear side (17), has a maximum depth T, which is 2.0 times or less the diameter d of the circle (K2, K3, K4, K5, K6, K7, K8, K9, K10, K11, K12) or of the circumscribed circle (U2, U3, U4, U5, U6, U7, U8, U9, U10, U11, U12, U13) in the surface (19) of this respective light deflecting structure, which is preferably 1.0 times or less the diameter d of the circle or of the circumscribed circle in the surface (19) of this respective light deflecting structure, which is preferably 0.5 times or less the diameter d of the circle or circumscribed circle in the surface (19) of this respective light deflecting structure.

7. The component (22, 22', 22", 22"') according to claim 5, **characterised in that** the light guide (1) has a thickness D (D1, D2) and at least one respective light deflecting structure of the at least one of the at least two light deflecting structures (2, 3, 4, 5, 6, 7, 8, 9, 10, 11, 12, 13), which extends from the surface (19) in the direction of the rear side (17), has a respective maximum depth T, the ratio of the thickness D (D1, D2) to the respective maximum depth T is 5:1 or greater, preferably 10:1 or greater.

8. The component (22, 22', 22", 22"') according to any one of claims 5 - 7, **characterised in that** the cross-section (K2, K3, K4, K5, K6, K7, K8, K9, K10, K11, K12, K13, U2, U3, U4, U5, U6, U7, U8, U9, U10, U11, U12, U13) of at least one of the at least one of the at least two light deflecting structures (2, 3, 4, 5, 6, 7, 8, 9, 10, 11, 12, 13) which extends from the surface (19) in the direction of the rear side (17), tapers or remains the same or partially remains the same or partially tapers from the surface (19) in the direction of the rear side (17).

9. The component (22, 22', 22", 22"') according to any one of claims 5 - 8, **characterised in that** at least one of the at least one of the at least two light deflecting structures (2, 3, 4, 5, 6, 7, 8, 9, 10, 11, 12, 13), which extends from the surface (19) in the direction of the rear side (17), is formed as a recess, wherein an inner surface (43) of the light guide delimits the recess, and wherein at least one partial region (42) of the inner surface (43) of the light guide, which delimits the recess and which directly adjoins the surface (19), forms an angle of 30 - 50°, preferably an angle of approximately 45°, with the surface (19).

10. The component (22, 22', 22", 22'") according to any one of claims 1 - 4, **characterised in that** at least one of the at least two light deflecting structures (2, 3, 4, 5, 6, 7, 8, 9, 10, 11, 12, 13) extends away from the surface (19) in a direction away from the rear side (17) and preferably at least one of the at least one of the at least two light deflecting structures, which extends away from the surface in a direction away from the rear side, is formed as an elevation.

11. The component (22, 22', 22", 22"') according to claim 10, **characterized in that** at least one respective light deflecting structure (2, 3, 4, 5, 6, 7, 8, 9, 10, 11, 12, 13) of the at least one of the at least two light deflecting structures, which extends away from the surface (19) in a direction away from the rear side (17), has a maximum height H, which is 2.0 times or less the diameter d of the circle (K2, K3, K4, K5, K6, K7, K8, K9, K10, K11, K12, K13) or of the circumscribed circle (U2, U3, U4, U5, U6, U7, U8, U9, U10, U11, U12, U13) in the surface (19) of this respective light deflecting structure, which is preferably 1.0 times or less the diameter d of the circle or of the circumscribed circle in the surface (19) of this respective light deflecting structure, which is preferably 0.5 times or less the diameter d of the circle or circumscribed circle in the surface (19) of this respective light deflecting structure.

12. The component (22, 22', 22", 22"') according to claim 10, **characterized in that** the light guide (1') has a thickness D (D1, D2) between the rear side (17) and the surface (19) and at least one respective light deflecting structure of the at least one of the at least two light deflecting structures (2, 3, 4, 5, 6, 7, 8, 9, 10, 11, 12, 13), which extends from the surface (19) in a direction away from the rear side (17), has a respective maximum height H, the ratio of the thickness D (D1, D2) to the respective maximum height H is 5:1 or greater, preferably 10:1 or greater.

13. The component (22, 22', 22", 22"') according to any one of claims 10 - 12, **characterised in that** the cross-section (K2, K3, K4, K5, K6, K7, K8, K9, K10, K11, K12, K13 U2, U3, U4, U5, U6, U7, U8, U9, U10, U11, U12, U13) of at least one of the at least one of the at least two light deflecting structures (2, 3, 4, 5, 6, 7, 8, 9, 10, 11, 12, 13) which extends away from the surface (19) in a direction away from the rear side (17), tapers or remains the same or partially remains the same or partially tapers from the surface (19) in the direction away from the rear side (17).

14. The component (22, 22', 22", 22"') according to any one of claims 10 - 13, **characterized in that** at least one of the at least one of the at least two light deflecting structures (2, 3, 4, 5, 6, 7, 8, 9, 10, 11, 12, 13) extending away from the surface (19) in a direction away from the rear side (17), is designed as an elevation, wherein the elevation has an outer surface (44), and wherein at least a partial region (42) of the outer surface (44) of the elevation, which directly adjoins the surface (19), forms an angle of 30 - 50°, preferably an angle of approximately 45°, with the surface (19).

15. The component (22, 22") according to any one of claims 1 - 14, **characterised in that** at least one region (23) of the at least one region (23) which is translucent to light visible to humans is formed by a translucent or a transparent material, in particular by a translucent or a transparent plastic.

16. The component (22, 22', 22", 22"') according to any one of claims 1 - 5, **characterised in that** at least one of the at least two additional light deflecting structures (9, 10, 11, 12, 13, 28, 29) extends from the further surface (19') in the direction of the visible side (24) and preferably at least one of the at least one of the at least two additional light deflecting structures, which extends from the further surface (19') in the direction of the visible side (24), is formed as a recess in the light guide.

17. An arrangement (35) comprising at least one component (22"') according to any one of claims 1 - 15, wherein at least a first light guide (1"" ""), a second light guide (1" '" '") and a third light guide (1""' ""'), which are arranged one above the other, are arranged on the rear side (25) of the flat decorative element (23) of the component (22'"), wherein the first light guide (1"" "") is suitable for illuminating at least a first partial region (36) of the at least one region of the flat decorative element (23) of the component (22"') which is translucent to light visible to humans, wherein the second light guide (1"' "' "') is suitable for illuminating at least a second partial region (37) of the at least one region of the flat decorative element (23) of the component (22'") which is translucent to light visible to humans, wherein the third light guide (1"" "") is suitable for illuminating at least a third partial region (38) of the at least one region of the flat decorative element (23) of the component (22"') which is translucent for light visible to humans, wherein the arrangement (35) additionally comprises at least one first light source (39) for coupling light into the first light guide (1"" ""), a second light source (40) for coupling light into the second light guide (1"' '" '") and a third light source (41) for coupling light into the third light guide (1"" ""') and comprises control means for controlling at least the first light source (39), the second light source (40) and the third light source (41).

## Revendications

1. Composant (22, 22', 22", 22"') comprenant au moins un élément décoratif plat (23) avec une face visible (24) et une côté arrière (25) ainsi qu'au moins un guide de lumière (1, 1', 1", 1'", 1" ", 1'" ", 1"' "', 1"" "', 1"" "", 1"' '" "' 1""') comprenant des structures de déviation de la lumière (2, 3, 4, 5, 6, 7, 8, 9, 10, 11, 12, 13, 28, 29, 30, 31, 32, 33, 34, 46, 47, 48, 49, 50, 51, 52, 53, 54, 55, 56, 57), au moins une surface de couplage de lumière (14), une surface visible (18) ainsi qu'un côté arrière (17) opposé à la surface visible,
dans lequel la surface visible (18) définit une surface (19),
dans lequel le côté arrière (17) du guide de lumière définit une autre surface (19'),
dans lequel le guide de lumière comprend au moins deux structures de déviation de la lumière (2, 3, 4, 5, 6, 7, 8, 9, 10, 11, 12, 13), qui ont une section transversale agencée dans la surface (19), la section transversale d'une structure de déviation de la lumière respective dans la surface (19) étant un cercle (K, K2, K3, K4, K5, K6, K7, K8, K9, K10, K11, K12, K13) ou un cercle de circonférence (U, U2, U3, U4, U5, U6, U7, U8, U9, U10, U11, U12, U13) pouvant être posé autour de la section transversale (Q, Q2, Q3, Q4, Q5, Q6, Q7, Q8, Q9, Q10, Q11, Q12, Q13) d'une structure de déviation de la lumière respective dans la surface (19),
dans lequel le guide de lumière comprend au moins deux autres structures de déviation de la lumière (9, 10, 11, 12, 13), qui ont une section transversale agencée dans une autre surface (19'), la section transversale d'une autre structure de déviation de la lumière respective dans l'autre surface (19') étant un cercle ou un cercle de circonférence pouvant être posé autour de la section transversale d'une autre structure de déviation de la lumière respective dans l'autre surface (19),
dans lequel la lumière couplée dans le guide de lumière via la surface de couplage de lumière (14) peut être découplée via la surface visible (18) ainsi que les au moins deux structures de déviation de la lumière,
dans lequel le diamètre d (d2, d3, d4, d5, d6, d7, d8, d9, d10, d11, d12, d13) du cercle respectivement du cercle de circonférence dans la surface (19) d'une structure de déviation de la lumière (2, 3, 4, 5, 6, 7, 8, 9, 10, 11, 12, 13) respective est compris dans une plage entre plus de 0 micromètres et 50 micromètres,
dans lequel le diamètre d du cercle respectivement du cercle de circonférence dans l'autre surface (19') d'une autre structure de déviation de la lumière (9, 10, 11, 12, 13, 28, 29) respective est compris dans une plage entre plus de 0 micromètres et 50 micromètres,
dans lequel le point central (M2, M3, M4, M5, M6, M7, M8, M9, M10, M11, M12, M13) du cercle respectivement du cercle de circonférence dans la surface (19) d'une structure de déviation de la lumière respective (2) au point central (M3, M4, M5, M6, M7, M8, M9, M10, M11, M12, M13) du cercle ou du cercle de circonférence dans la surface (19) de toutes les autres structures de déviation de la lumière (3, 4, 5, 6, 7, 8, 9, 10, 11, 12, 13) présente une distance A (A23, A24, A25, A26, A27, A28, A29, A210, A211, A212, A213), la distance A étant supérieure au diamètre d (d2) du cercle respectivement du cercle de circonférence dans la surface (19) de la structure de déviation de la lumière respective (2) divisé par la valeur 0,33,
dans lequel le point central du cercle respectivement du cercle de circonférence dans l'autre surface (19') d'une autre structure de déviation de la lumière respective (2) au point central du cercle respectivement du cercle de circonférence dans l'autre surface (19') de toutes les autres autres structures de déviation de la lumière (10, 11, 12, 13, 28, 29) présente une distance A (A23, A24, A25, A26, A27, A28, A29, A210, A211, A212, A213), la distance A étant supérieure au diamètre d du cercle respectivement du cercle de circonférence dans l'autre surface (19') de l'autre structure de déviation de la lumière respective (2) divisé par la valeur 0,33,
**caractérisé en ce que**
l'élément décoratif plat (23) présente au moins une zone (23, 26, 27) qui est translucide à la lumière visible pour l'homme et dans lequel l'au moins un guide de lumière est disposé sur le côté arrière (25) de l'élément décoratif plat (23), et que au moins une zone (26, 27) de l'au moins une zone (23, 26, 27), qui est translucide à la lumière visible pour l'homme, est formé via une percée (26, 27) dans l'élément décoratif plat (23), et que
la section transversale dans la surface (19) de toutes les au moins deux structures de déviation de la lumière (2, 3, 4, 5, 6, 7, 8, 9, 10, 11, 12, 13) est décalé latéralement par rapport à la section transversale dans l'autre surface (19') de toutes les autres au moins deux structures de déviation de la lumière (9, 10, 11, 12, 13, 28, 29).

2. Composant (22, 22 ', 22 ", 22"') selon la revendication 1, dans lequel le diamètre d du cercle (K, K2, K3, K4, K5, K6, K7, K8, K9, K10, K11, K12, K13) ou du cercle de circonférence (U, U2, U3, U4, U5, U6, U7 , U8, U9, U10, U11, U12, U13) dans la surface (19) est dans la plage de 5 micromètres à 40 micromètres, de préférence dans la plage de 5 micromètres à 30 micromètres, plus préférablement dans la plage de 10 micromètres à 25 micromètres, encore plus préférablement dans la gamme de 10 micromètres à 20 micromètres, le plus préférablement dans la gamme de 10 micromètres à 15 micromètres.

3. Composant (22, 22 ', 22 ", 22"') selon la revendication 1 ou 2, dans lequel la section transversale des au moins deux structures de déviation de la lumière (2, 3, 4, 5, 6, 7, 8, 9, 10, 11, 12, 13) dans la surface (19) est un cercle (K2, K3, K4, K5, K6, K7, K8, K9, K10, K11, K12, K13), les au moins deux cercles ayant le même diamètre d, ou que un cercle de circonférence (U2, U3, U4, U5, U6, U7, U8, U9, U10, U11, U12, U13) peut être posé autour de la section transversale des au moins deux structures de déviation de la lumière dans la surface (19), dans lequel les aux moins deux cercles de circonférence ont le même diamètre d ou que la section transversale d'au moins une des au moins deux structures de déviation de la lumière dans la surface (19) est un cercle et au moins un cercle de circonférence (U2, U3, U4, U5, U6, U7, U8, U9, U10, U11, U12, U13) peut être posé autour de la section transversale des au moins deux structures de déviation de la lumière dans la surface (19), ou l'au moins un cercle et l'au moins une cercle de circonférence présentent le même diamètre d.

4. Composant (22, 22 ', 22 ", 22"') selon la revendication 1 ou 2, **caractérisé en ce que** le diamètre d du cercle (K2, K3, K4, K5, K6, K7, K8, K9, K10, K11, K12, K13) respectivement du cercle de circonférence (U2, U3, U4, U5, U6, U7, U8, U9, U10, U11, U12, U13) dans la surface (19) d'au moins une structure de déviation de la lumière (2, 3, 4, 5, 6, 7, 8, 9, 10, 11, 12, 13) des au moins deux structures de déviation de la lumière est différent du diamètre d du cercle respectivement du cercle de circonférence dans la surface (19) de toutes les autres structures de déviation de la lumière des au moins deux structures de déviation de la lumière.

5. Composant (22, 22 ', 22 ", 22"') selon l'une quelconque des revendications précédentes, **caractérisé en ce que** de préférence au moins une des au moins deux structures de déviation de la lumière (2, 3, 4, 5, 6, 7, 8, 9, 10, 11, 12, 13) s'étend de la surface (19) en direction du côté arrière (17) ainsi que de préférence au moins une de l'au moins deux structures de déviation de la lumière, qui s'étend de la surface (19) en direction du côté arrière (17), est conçue comme un évidement dans le guide de lumière.

6. Composant (22, 22 ', 22 ", 22"') selon l'une quelconque des revendications précédentes, **caractérisé en ce que** au moins une structure de déviation de la lumière respective (2, 3, 4, 5, 6, 7, 8, 9, 10, 11, 12, 13) de l'au moins une des au moins deux structures de déviation de la lumière, qui s'étendent depuis la surface (19) en direction du côté arrière (17), présente une profondeur maximale T, qui est 2,0 fois ou moins le diamètre d du cercle (K2, K3, K4, K5, K6, K7, K8, K9, K10, K11, K12) respectivement du cercle de circonférence (U2, U3, U4, U5, U6, U7, U8, U9, U10, U11, U12, U13) dans la surface (19) de cette structure de déviation de la lumière respective, qui est de préférence 1,0 fois ou moins le diamètre d du cercle respectivement du cercle de circonférence dans la surface (19) de cette structure de déviation de la lumière respective, qui est plus préférablement 0,5 fois ou moins le diamètre d du cercle respectivement du cercle de circonférence dans la surface (19) de cette structure de déviation de la lumière respective.

7. Composant (22, 22', 22", 22"') selon la revendication 5, **caractérisé en ce que** le guide de lumière (1) présente une épaisseur D (D1, D2) et au moins une structure de déviation de la lumière respective de l'au moins une des au moins deux structures de déviation de la lumière (2, 3, 4, 5, 6, 7, 8, 9, 10, 11, 12, 13)), qui s'étend de la surface (19) en direction du côté arrière (17), a une profondeur maximale respective T, le rapport de l'épaisseur D (D1, D2) à la profondeur maximale respective T étant de 5:1 ou plus, est de préférence de 10:1 ou plus.

8. Composant (22, 22', 22", 22"') selon une des revendications 5 à 7, **caractérisé en ce que** la section transversale (K2, K3, K4, K5, K6, K7, K8, K9, K10, K11, K12, K13 U2, U3, U4, U5, U6, U7, U8, U9, U10, U11, U12, U13) au moins une de l'au moins une des au moins deux structures de déviation de la lumière (2, 3, 4, 5, 6, 7, 8, 9, 10, 11, 12, 13) qui s'étend de la surface (19) en direction du côté arrière (17), rétrécit de la surface (19) en direction du côté arrière (17), ou reste la même, ou reste partiellement la même ainsi que rétrécit partiellement.

9. Composant (22, 22', 22", 22"') selon une des revendications 5 à 8, **caractérisé en ce qu'**au moins une des au moins une des au moins deux structures de déviation de la lumière (2, 3, 4, 5, 6, 7, 8, 9, 10, 11, 12, 13), qui s'étendent de la surface (19) en direction du côté arrière (17), est conçue comme un évidement, dans lequel une surface interne (43) du guide de lumière délimite l'évidement, et dans lequel au moins une partie (42) de la surface interne (43) du guide de lumière, qui délimite l'évidement et qui est directement contigüe avec la surface (19), forme un angle de 30 à 50°, de préférence un angle d'environ 45°, avec la surface (19).

10. Composant (22, 22', 22", 22"') selon une des revendications 1 à 4, **caractérisé en ce que** au moins une des au moins deux structures de déviation de la lumière (2, 3, 4, 5, 6, 7, 8, 9, 10, 11, 12, 13) s'étend à l'écart de la surface (19) dans une direction opposée au côté arrière (17) et de préférence au moins une des au moins une des au moins deux structures de déviation de la lumière, qui s'étend à l'écart de la surface dans une direction opposée au côté arrière, est conçue comme une élévation.

11. Composant (22, 22', 22", 22'") selon la revendication 10, **caractérisé en ce que** au moins une structure de déviation de la lumière respective (2, 3, 4, 5, 6, 7, 8, 9, 10, 11, 12, 13) de l'au moins une des au moins deux structures de déviation de la lumière, qui s'étend à l'écart de la surface (19) dans une direction opposée au côté arrière (17), présente une hauteur maximale H qui est 2,0 fois ou moins le diamètre d du cercle (K2, K3, K4, K5, K6, K7, K8, K9, K10, K11, K12, K13) respectivement du cercle de circonférence (U2, U3, U4, U5, U6, U7, U8, U9, U10, U11, U12, U13) dans la zone (19) de cette structure de déviation de la lumière respective, qui est de préférence 1,0 fois ou moins le diamètre d du cercle respectivement du cercle de circonférence dans la surface (19) de cette structure de déviation de la lumière respective, qui est plus préférablement 0,5 fois ou moins le diamètre d du cercle respectivement du cercle de circonférence dans la surface (19) de cette structure de déviation de la lumière respective.

12. Composant (22, 22', 22", 22"') selon la revendication 10, **caractérisé en ce que** le guide de lumière (1') entre le côté arrière (17) et la surface (19) présente une épaisseur D (D1, D2) ainsi qu'au moins une structure de déviation de la lumière respective de l'au moins une des au moins deux structures de déviation de la lumière (2, 3, 4, 5, 6, 7, 8, 9, 10, 11, 12, 13), qui s'étend à l'écart de la surface (19) dans une direction opposée au côté arrière (17), présente une hauteur maximale respective H, dans lequel le rapport de l'épaisseur D (D1 , D2) à la hauteur maximale respective H est 5:1 ou plus, de préférence 10:1 ou plus.

13. Composant (22, 22', 22", 22'") selon une des revendications 10 à 12, **caractérisé en ce que** la section transversale (K2, K3, K4, K5, K6, K7, K8, K9, K10, K11, K12, K13 U2, U3, U4, U5, U6, U7, U8, U9, U10, U11, U12, U13) d'au moins une des au moins une des au moins deux structures de déviation de la lumière (2, 3, 4, 5, 6, 7, 8, 9, 10, 11, 12, 13) qui s'étendent à l'écart de la surface (19) dans une direction opposée au côté arrière (17), rétrécit dans une direction à l'écart de la surface (19) opposée au côté arrière (17) ou reste la même ou reste partiellement la même ainsi que rétrécit partiellement.

14. Composant (22, 22', 22", 22'") selon une des revendications 10 à 13, **caractérisé en ce que** au moins une des au moins une des au moins deux structures de déviation de la lumière (2, 3, 4, 5, 6, 7, 8, 9, 10, 11, 12, 13), qui s'étend à l'écart de la surface (19) dans une direction opposée au côté arrière (17), est conçue comme une élévation, dans lequel l'élévation a une surface extérieure (44), et dans lequel au moins une partie (42) de la surface extérieure (44) de l'élévation, qui est directement contiguë à la surface (19), forme un angle de 30 à 50 °, de préférence un angle d'environ 45 ° avec la surface (19).

15. Composant (22, 22") selon une des revendications 1 à 14, **caractérisé en ce que** au moins une zone (23) de l'au moins une zone (23), qui est translucide pour la lumière visible par l'homme, est formée par un matériau translucide ou transparent, en particulier est formée par une matière plastique translucide ou transparente.

16. Composant (22, 22") selon une des revendications 1 à 5, **caractérisé en ce que** au moins une des au moins deux autres structures de déviation de la lumière (9, 10, 11, 12, 13, 28, 29) s'étend de l'autre surface (19') en direction du côté visible (24) ainsi que de préférence au moins une de l'au moins une des au moins deux autres structures de déviation de la lumière, qui s'étend de l'autre surface (19') en direction du côté visible (24), est conçue comme un évidement dans le guide de lumière.

17. Agencement (35) comprenant au moins un composant (22"') selon l'une des revendications 1 à 15, dans lequel au moins un premier guide de lumière (1 "" ""), un deuxième guide de lumière (1 "' "' "') ainsi qu'un troisième guide de lumière (1""' ""') sont disposés sur le côté arrière (25) de l'élément décoratif plat (23) du composant (22'"), qui sont disposés l'un au-dessus de l'autre, dans lequel le premier guide de lumière (1 "" "") convient pour éclairer au moins une première partie (36) de l'au moins une zone translucide à la lumière visible par l'homme de l'élément décoratif plat (23) du composant (22"'), dans lequel le deuxième guide de lumière (1'" "' "') convient pour éclairer au moins une deuxième partie (37) de l'au moins une zone translucide à la lumière visible par l'homme de l'élément décoratif plat (23) du composant (22"'), dans lequel le troisième guide de lumière (1 ""' "") convient pour éclairer au moins une troisième partie (36) de l'au moins une zone translucide à la lumière visible par l'homme de l'élément décoratif plat (23) du composant (22'"), dans lequel l'agencement (35) présente en outre au moins un premier moyen d'illumination (39) pour coupler de la lumière dans le premier guide de lumière (1"" ""), un deuxième moyen d'illumination (40) pour coupler la lumière dans le deuxième guide de lumière (1"' "' "') ainsi qu'un troisième moyen d'illumination (41) pour coupler de la lumière dans le troisième guide de lumière (1 ""' ""') ainsi que des moyens de commande pour commander au moins le premier moyen d'illumination (39), le deuxième moyen d'illumination (40) et le troisième moyen d'illumination (41).
